(19) Europäisches Patentamt
European Patent Office
Office européen des brevets

(11) EP 1 646 005 A2

(12) EUROPEAN PATENT APPLICATION

(43) Date of publication:
12.04.2006 Bulletin 2006/15

(51) Int Cl.:
*G06T / (2006.01)*

(21) Application number: 05256252.7

(22) Date of filing: 06.10.2005

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 06.10.2004 US 959925
05.10.2005 US 243723

(71) Applicant: The Crawford Group, Inc.
St. Louis, MO 63105 (US)

(72) Inventors:
- Schuette, Thomas A.
St. Charles
Missouri 63303 (US)
- Alkhas, Rebecca
Webster Groves
Missouri 63119 (US)
- Everson, Jeffrey Lee
Ballwin
Missouri 63021 (US)
- Fehr, John Dwight
Valley Park
Missouri 63088 (US)
- Kohler, Kurt Walter
St. Louis
Missouri 63131 (US)
- Ritzie, William Sean
St Louis
Missouri 63105 (US)
- Roxas, Glenn T.
Chesterfield
Missouri 63017 (US)
- Stamps, David Keith
Florissant
Missouri 63031 (US)
- Toh, Chee-Koon
Chesterfield
Missouri 63005 (US)
- Weas, Daniel Alan
St Louis
Missouri 63141 (US)
- Woods, Anthony Keith
Webster Groves
Missouri 63119 (US)
- Pickerill, Doris R.
High Ridge
Missouri 63049 (US)
- Bender, Douglas J.
O'Fallon
Missouri 63366 (US)
- Flores, Matthew A.
Bridgeton
Missouri 63044 (US)

(74) Representative: Hackney, Nigel John et al
Mewburn Ellis LLP
York House,
23 Kingsway
London WC2B 6HP (GB)

# (54) Method and system for user management of a fleet of vehicles including long term fleet planning

(57) A system for providing a user with historical sales data having relevance to a plurality of vehicles comprising a fleet for assisting users with defining residual values for fleet vehicles and performing cost going forward analyses and/or depreciation analyses of fleet vehicles. In one exemplary embodiment providing a user with historical sales data for a plurality of vehicles comprising a fleet, the system comprising: (a) a database configured to store actual sales data for a plurality of vehicles that have previously been sold; and (b) a computer in communication with the database, the computer being configured to create a page for display to a user, the page including a display of a plurality of historical sales prices for at least one vehicle type that is similar to a user-selected vehicle type, wherein the displayed historical sales prices are calculated from the stored actual sales data and comprise historical sales prices for the at least one similar vehicle type that have been normalized to an average time of sale odometer reading. Also disclosed herein is a computer-implemented method for selecting which of a plurality of vehicles within a fleet are to be deleted from the fleet; the method comprising: (a) dis-

EP 1 646 005 A2

playing, on an electronic page presented to a computer user, a value analysis for at least one type of vehicle within a rental vehicle fleet; (b) providing at least one link on the electronic page for selection by the user to initiate a deletion from the fleet of at least one fleet vehicle corresponding to the at least one vehicle type; and (c) responsive to user selection of the at least one link, displaying a list of fleet vehicles for selectable deletion from the fleet by the user, the listed fleet vehicles corresponding to vehicles of the at least one vehicle type. In another embodiment, a computerized system is configured to determine a quantity of vehicles to be purchased during a future predetermined time period for inclusion in a vehicle fleet in response to a variety of user inputs.

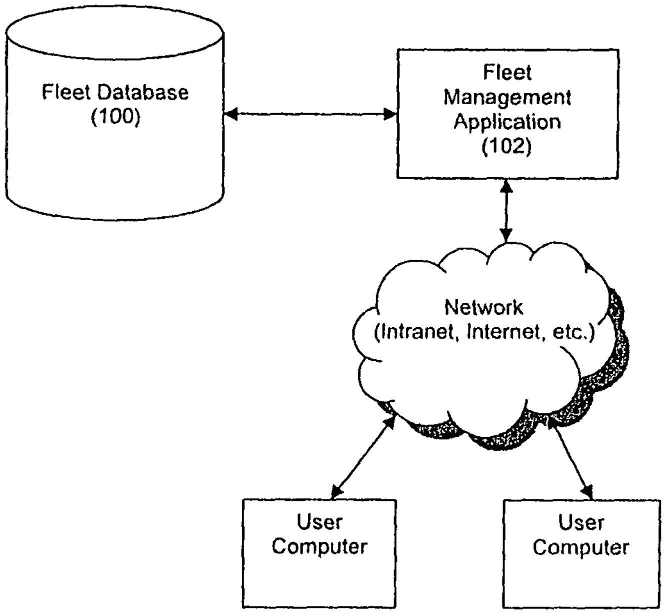


Figure 1

## Description

Cross-Reference and Priority Claim to Related Application:

This application is a continuation-in-part of pending U.S. patent application serial no. 10/959,925, entitled "Method and System for Managing a Fleet of Vehicles", filed October 6, 2004, the entire disclosure of which is incorporated herein by reference.

Field of the Invention:

The present invention relates to the field of fleet management. In particular, the present invention relates to the management of a plurality of vehicles comprising a fleet so that informed decisions can be made as to the addition of vehicles to and/or the deletion of vehicles from the fleet.

Background of the Invention:

Companies that maintain a fleet comprising numerous vehicles are faced with a daunting challenge with respect to how to effectively track and cost manage the fleet. Among the difficult questions that face fleet managers include which vehicles to delete from the fleet and when to do so. This is a difficult task for companies that maintain a relatively small fleet of vehicles much less for companies (such as the assignee of the present invention) that maintain a large fleet of vehicles.

For example, at any given time, the assignee of the present invention maintains a fleet of approximately 650,000 vehicles (including rental vehicles and leased vehicles), a number that is constantly growing with time. Not only does this fleet population represent a vast number, but it also must be noted that this fleet is divided into numerous geographically separated subfleets, each subfleet having its own characteristics that affect management decisions relating thereto, thereby further complicating the fleet management process. To effectively operate a rental vehicle business, the rental company must effectively plan and cost manage the influx and outflux of rental vehicles from the fleet. On the basis of value depreciation, rental vehicles will need to be timely deleted from the rental fleet and shifted to the used vehicle sales (remarketing) market.

Toward this end, the assignee of the present invention had previously developed and implemented a fleet planning system that allowed users to enter residual values for vehicles in the fleet at the year, make, model, and series (YMMS) level (wherein "series" specifies a particular series, body style, version, etc. of a particular YMM), determine the cost going forward (CGF) for each YMMS based on the user-entered residual value estimations, and designate a total number of vehicles within a particular YMMS that are to be deleted from the fleet. While this system certainly provided value and efficiency to the fleet planning process, room for improvement still existed. For example, this fleet planning system did not provide any historical sales data about fleet YMMSs to users to help guide their residual value estimations. Accordingly, users had only their own business sense to rely upon when estimating a residual value for a fleet YMMS. Further still, users were unable to schedule specific vehicles for deletion from the fleet and were instead provided only the ability to designate a total number of vehicles within a YMMS that were to be deleted.

Additionally, the assignee of the present invention also previously developed and implemented a fleet data warehouse application that allowed users to submit queries to a fleet database and receive (in response to the queries) simplified arithmetic averages of raw data for past vehicle sales. However, with this previous data warehouse application, due to the nature of these simplified raw data averages, users were unable to efficiently compare year-to-year and month-to-month trends in sales price because comparing these different average values was similar to comparing apples to oranges.

Summary of the Invention:

In an effort to improve upon previous efforts at fleet management, the inventors herein have developed a system that analyzes historical sales data for vehicles that were previously sold as used vehicles, normalizes this historical sales data to a particular value for a parameter common to the historical sales, and presents the results derived from this normalization to users. By providing users with detailed historical sales data drawn from previous sales of vehicles, users are now able to take advantage of normalized historical sales data to temper their own business judgments as to how a particular vehicle type's residual value can be accurately estimated, which the inventors believe will enable users to more accurately forecast future residual values. Because residual value estimations are one of the driving forces behind determining how many of a particular vehicle type are to be deleted from a fleet, accuracy in residual value estimation is highly important in the fleet management process.

Preferably, the historical sales data analysis provided by the present invention for a particular vehicle type (such as YMMS) is based on, at least in part, the actual sales prices for previously sold vehicles of the same or similar YMMS and the actual odometer reading for those vehicles at the time of sale. From these data values, a calculation is made as to what the average odometer reading was for those vehicles at their times of sale. Thereafter, each vehicle's sale price is preferably normalized to this average odometer reading such that each vehicle is assigned an adjusted sales price that matches what that vehicle would have been expected to sell for if that vehicle had the average odometer reading on its odometer at the time of sale. In the U.S. and other countries that use miles as the unit of measure for distances traveled by vehicles, it is preferred that the odometer readings be expressed in terms of mileage. For countries that use kilometers as the appropriate unit of measure, it is preferred that the odometer readings be expressed in terms of kilometers. To aid in this normalization process, a table that relates vehicle value to a time of sale odometer reading, referred to herein in a preferred U.S. embodiment as a cost per mile table, is preferably used. These normalized sales prices can then be averaged together to determine, for vehicles within a YMMS that is the same or similar to a user-selected YMMS, an average sales price normalized to an average mileage.

Also, to further provide the user with detailed historical sales data, this average mileage determination and sales price normalization are preferably performed on a per month basis such that the average mileage analysis for a particular month only covers the sales of vehicles within a same or similar YMMS that occurred in that particular month, with the year of sale effectively being disregarded. The sales price normalization and averaging are preferably performed per YMMS per month. Having done so, users can be provided with a data table that identifies for each month of any given year: (1) an average mileage for vehicles within a same or similar YMMS that were sold in that month and (2) an average normalized sales price for vehicles within each YMMS that were sold in that month. This historical data can be generated and displayed going back several years if desired by a practitioner of the present invention. Having historical sales values normalized to average mileages for the same or similar YMMSs sold in specific months allows users to easily compare year-to-year changes in YMMS sales price as well as month-to-month sales trends.

To aid the system in pooling historical sales data for a user-selected YMMS, a mapping program is preferably made available to users that allows users to group a plurality of previous year YMMSs (and possibly current year YMMSs) to a particular current year YMMS. Sales data for these grouped YMMSs will then be analyzed in accordance with the techniques described above to generate the average mileages and the average normalized sales prices. The YMMS group corresponding to a user-selected YMMS would thus comprise the user-selected YMMS and any other YMMS(s) deemed to be similar to the user-selected YMMS. An example will help illustrate this mapping process. To perform a historical sales analysis for a hypothetical YMMS of a 2004 MKE MDL SER, the system will preferably perform the above-described historical sales analysis for the 2003 MKE MDL SER, the 2002 MKE MDL SER, and so on for previous vehicles that are deemed by the user to be sufficiently similar to the user-selected YMMS. To enable this historical analysis, it is preferred that such older YMMSs (the 2003 and older MKE MDL SERs) be grouped with the current YMMS (the 2004 MKE MDL SER). Once the YMMS are so grouped into a common YMMS group, the software of the present invention will know which sales data stored in the database should be accessed to perform the historical analysis.

The data table described above for normalized historical sales data for each month applicable to a user-selected YMMS is preferably displayed by the system to users via a page on the user's computer monitor. This page preferably also allows the users to enter residual value estimates for that YMMS for the current month and a plurality of future months. Once the user enters these residual value estimates, the system can perform a CGF analysis on the user-entered residual values. This CGF analysis preferably generates and displays a CGF for the user-selected YMMS.

To flag vehicles for deletion, at least partially on the basis of the user's analysis of these CGF values, the system preferably provides the user with the ability to access a list of specific vehicles within a YMMS to which the CGF analysis pertains, each vehicle preferably being listed along with its current mileage, wherein the list allows the user to select specific vehicles for deletion. Upon selection by the user of one or more specific vehicles for deletion from the list, a message can be sent to a branch manager or other person in charge of a selected vehicle that the vehicle can be timely transferred out of the rental fleet and into the used vehicle (remarketing) market. Alternatively, a flag can be added to a vehicle database record that notifies interested persons that the selected vehicle(s) is to be transferred out of the rental fleet and into the used vehicle market.

These management capabilities can be put into use for both short term (less than 6 months into the future) and long term (6 months or more into the future) fleet planning. These planning processes can be conducted at scheduled times each year, or on an ongoing rolling basis, by a practitioner of the invention. For example, the present invention can be applied toward assessing the long term vehicle needs of a rental vehicle fleet such as how many vehicles need to be purchased during a given time period to satisfy the projected fleet needs of the rental business. Typically, this long term assessment of fleet needs involves a substantial amount of guesswork that requires extensive fleet experience and business acumen from users for effective results. While this guesswork can never be entirely eliminated from long term fleet planning (LTFP), the inventors herein believe that a system can be designed that allows users to make intelligent and informed decisions when assessing future vehicle needs, when deciding which vehicles should be deleted from the rental fleet and disposed of on the used vehicle market, and when deciding how many vehicles need to purchased over a future time period to meet the expected fleet needs giving due consideration to the number of vehicles that are scheduled for deletion from the fleet in the future. In an effort to fill this need in the art, the inventors herein have designed a system configured to execute a LTFP workflow. An "LTFP workflow" as used herein refers to a plurality of discrete but interrelated tasks within a long term fleet planning process whose individual completions contribute to the determination of a total quantity of vehicles to purchase for delivery to the fleet throughout a future time period.

One of the constituent tasks of the LTFP workflow preferably comprises a task to assess the current state of the fleet (e.g., current counts of vehicles within different YMMSs and vehicle classes for the fleet). Another of the constituent tasks of the LTFP workflow preferably comprises a task to define a desired size and mix of vehicles for the fleet at a plurality of points in time during the future. Another of the constituent tasks of the LTFP workflow preferably comprises a task to assess the quantity of new vehicles that are expected to be incoming to the fleet in the future but prior to the future time period. Another of the constituent tasks of the LTFP workflow preferably comprises a task to perform a future cost estimate analysis such as a cost going forward analysis on vehicles within the fleet based on user-specified residual values to identify how many and what types of vehicles should be deleted from the fleet in the future. This task preferably includes a user interface screen that displays normalized historical sales data as described herein to aid users in the process of intelligently defining residual vehicle values. Another task of the LTFP workflow preferably comprises a task to perform a future cost estimate analysis such as a depreciation analysis and/or a cycling analysis to identify how many and what types of vehicles should be deleted from the fleet in the future. Another task of the LTFP workflow preferably comprises a task to distribute future deletions over predetermined time intervals. Yet another constituent task of the LTFP workflow preferably comprises a task to compute the total quantity of vehicles to purchase for inclusion in the fleet during the future time period. This computation is based on the results of previous tasks of the LTFP workflow.

This LTFP workflow is preferably implemented by a plurality of user computers that share access to a server having a software program resident thereon that executes the LTFP process. The software program preferably provides a plurality of user interface screens to the user computers for display thereon, wherein the user interface screens are configured to interact with the users to accomplish the constituent tasks of the LTFP process. In a preferred embodiment, data entry and data display for fleet vehicles via these interface screens is typically organized by vehicle class or YMMS. However, it should be noted that data entry and data display for fleet vehicles can be organized into other units, e.g., by individual vehicles, by vehicle features, by vehicle manufacturer, by customer (wherein different fleets within the overall fleet are operated by different customers of the business organization), etc.

Furthermore, the software program is preferably configured to allow different user computers to simultaneously access a plurality of different tasks of the workflow to promote parallelism and enhance the efficiency with which LTFP can be accomplished. The software program preferably further tracks task completion statuses to ensure that asynchronous modifications to tasks will not disrupt downstream tasks. Also, the software program is preferably configured to allow the LTFP process to be performed individually for different subfleets within the fleet, thereby further enhancing the distributed nature with which the LTFP process can be accomplished.

While the principal advantages and features of the invention have been discussed above, a greater understanding of the invention including a fuller description of its other advantages and features may be attained by referring to the drawings and the detailed description of the preferred embodiment which follow.

<u>Brief Description of the Drawings:</u>

Figure 1 depicts a high level overview of the system of the preferred embodiment of the present invention;
Figure 2 illustrates a preferred block diagram overview of the navigational path for the fleet management application;
Figures 3(a)-(c) illustrate respectively, a preferred log-in screen, a preferred change password screen, and a preferred session timeout screen for the fleet management application;
Figure 4 illustrates a preferred home page for the fleet management application;
Figures 5(a) and (b) illustrate, respectively, a preferred unauthorized access screen and a preferred technical difficulties screen;
Figure 6 illustrates a preferred residuals parameter entry screen;
Figures 7(a) and (b) illustrate preferred residual value table screens;
Figure 7(c) illustrates a preferred printer-friendly residual table report;
Figure 8 is a flowchart depicting a preferred technique for calculating the monthly average mileages shown in the residual table;
Figure 9 is a flowchart depicting a preferred technique for calculating the monthly historical sales prices shown in the residual table;
Figure 10 illustrates a preferred cost going forward parameter entry screen;
Figures 11(a)-(c) illustrate preferred CGF analysis results screens;

Figure 11(d) illustrates a preferred printer-friendly CGF analysis results report;
Figure 12 is a flowchart depicting a preferred technique for calculating the projected YMMS values in the CGF results table;
Figure 13 illustrates a preferred activations screen;
Figures 14(a) and (b) illustrate preferred tools for mapping YMMSs into YMMS groups;
Figure 15 is a flowchart depicting a preferred technique for creating a cost per mile table;
Figure 16 depicts an exemplary fiscal year calendar during which an LTFP embodiment of the present invention can be utilized;
Figure 17 illustrates a flowchart for a preferred LTFP embodiment of the present invention;
Figure 18 illustrates a preferred home screen for the LTFP process of the preferred embodiment;
Figure 19 illustrates a preferred vehicle class assignments screen for the LTFP process of the preferred embodiment;
Figures 20(a) and (b) illustrate preferred screens for user entry of desired quantities of vehicles in a rental fleet for the LTFP process of the preferred embodiment;
Figure 21 illustrates a preferred screen for user entry of a desired rental fleet mix for the LTFP process of the preferred embodiment;
Figures 22(a) and (b) illustrate preferred screens for user entry of vehicle quantities that are incoming to a rental fleet for the LTFP process of the preferred embodiment;
Figures 23(a) and (b) illustrate preferred screens for user entry of residual values for rental fleet vehicles for the LTFP process of the preferred embodiment;
Figures 24(a) and (b) illustrate preferred screens for a CGF analysis of rental fleet vehicles for the LTFP process of the preferred embodiment;
Figures 25(a) and (b) illustrate preferred screens for user entry of optimal delete points over time for rental fleet vehicles for the LTFP process of the preferred embodiment;
Figure 26 illustrates a preferred screen for user distribution of vehicle deletions from a rental fleet by month for the LTFP process of the preferred embodiment;
Figures 27(a) and (b) depict exemplary cycling and double-cycling reports respectively for the LTFP process of the preferred embodiment;
Figure 28 illustrates an exemplary screen for user entry of a fiscal year vehicle buy forecast for the LTFP process of the preferred embodiment;
Figure 29 illustrates an exemplary screen for user selection of any of a plurality of LTFP reports; and
Figures 30(a)-(r) depict exemplary flows for processing and storing data for the LTFP process of the preferred embodiment as users proceed through the LTFP process.

Detailed Description of the Preferred Embodiment:

Figure 1 illustrates a high level overview of the system of the preferred embodiment of the present invention. In the system of Figure 1, a fleet management application 102 is in communication with a fleet database 100. Fleet database 100 can be in communication with fleet application 102 via any technique for data communication, including but not limited to a direct communication link and a communication link via a network, wherein the network can encompass any type of network over which data is communicated, including but not limited to the Internet, an intranet, a satellite network, a wireless network, a cable network, etc. In its most preferred form, the system described herein is implemented by a rental car company that manages a fleet of rental vehicles. However, it is worth noting that it need not be a rental car company that performs the fleet management and that the vehicles in the fleet being managed need not be rental vehicles. Fleet database 100 stores vehicle data for the vehicles that are currently or were formerly part of the fleet. Fleet database 100 encompasses not only a single database but also a plurality of separate databases (internal and/or external to the entity operating the application 102) accessible by fleet management application 102. The vehicle data stored in database 100 includes historical sales data for vehicles sold from the fleet, including data such as vehicle unit number, vehicle YMMS (year, make, model, and series), sales price, mileage at the time of sale, unit cost, date of initial purchase, depreciation amount, the rental branch to which the vehicle once belonged, who purchased the vehicle, whether the vehicle was a used car, whether the vehicle is a rental vehicle or a leased vehicle, whether the vehicle is a company car, when the vehicle was sold, time in service, vehicle condition, an identification of the previous owner, and other vehicle data types described herein or considered pertinent by a practitioner of the present invention. Further, it is worth noting that this sales date need not be limited to only sales data for fleet vehicles, but can also encompass sales data for external or non-fleet vehicles.

Fleet management application 102 is preferably a software application programmed to allow users to obtain (1) meaningful data about the historical sales prices for rental vehicles in the fleet that previously were sold as used vehicles, thereby enabling more accurate estimation by the user of residual values for rental vehicles in the fleet, and (2) meaningful data about the cost going forward (CGF) for rental vehicles in the fleet, thereby allowing users to make informed decisions about which rental vehicles to remove from the fleet and place into the vehicle sales market. This software can be loaded onto computer readable media such as the hard drive(s) of one or more servers accessible to user computers connected thereto via a network. This network can be any type of network over which data is communicated, including but not limited to the Internet, an intranet, a satellite network, a wireless network, a cable network, etc. For example, the software that is programmed to carry out the fleet management application can be loaded onto one or more servers accessible over a company's intranet for execution on demand by company computers that are connected to that intranet. Further, the one or more servers upon which the application 102 is loaded can be connected to the Internet to provide a wider range of users with access to its features. Further still, it is conceivable that the fleet management software and/or fleet database could be stored on other computer readable media such as a CD-ROM, a PC or laptop hard drive, PDA, any other type of mobile/portable computing technology, or the like.

Figure 2 provides a detailed overview of the interface components comprising the fleet management application 102. Users of the application 102 are required to log in via log in screen 200, depicted in Figure 3(a). Preferably, access to application 102 is restricted to authorized users, and such users are required to provide an ID and password to gain access thereto. Should the user wish to change his/her password, application 102 provides a "change password" screen 202, depicted in Figure 3(b). If a logged-in user has been inactive with respect to his/her interaction with the application 102 beyond a predetermined amount of time (e.g., one hour), then the user's session times out and a session timeout/ re-log in screen (Figure 3(c)) is presented to the user. However, it should be noted that some practitioners of the present invention may possibly deem the need to restrict users from accessing some or all of its screens unnecessary.

After successfully logging in via screen 200, the user is presented with the fleet management home page 208 depicted in Figure 4. Home page 208 serves as the central jumping off point for the user that provides the user with access to pages for viewing historical sales values for a particular vehicle type, entering vehicle residual values, and viewing the CGF for existing rental vehicles in the fleet. The fleet management home page 208 preferably includes a current location display section 400, a fleet summary display section 410, a recent activity display section 422, a feature gateway display section 440, one or more navigation bars 446, and a quick links display section 460.

The current location display section 400 allows users to view and/or specify constraint information (preferably geographical constraint information) on the scope of vehicle data to be processed by application 102. Field 402 identifies the high level area from which the vehicle data will be drawn. Field 404 identifies a lower level area from which the vehicle data is drawn, and field 406 identifies a yet lower level area from which the vehicle data will be drawn. In the preferred embodiment, the high level area is a country or continent (e.g., US, Canada, North America, Great Britain, Germany, Europe, etc.), the next lower level area is a country/continent subregion (e.g., southern California, northeast Ohio, mid-Pennsylvania, etc.), and the lowest level area is a subregion within the subregion (e.g., the Los Angeles area within the U.S./southern California region). Numerical codes, alphabetic codes, or alphanumerical codes may be used to represent these different levels. The preferred nomenclature for this breakdown is country/group/region. However, it should be understood that different terminology, different geographical breakdowns, and different numbers of hierarchical levels can be applied to constrain the vehicle data as a matter of design choice by practitioners of the present invention. For example, an intermediate level could be added between the highest level area and the next level area that corresponds to a larger subregion within the specified country/continent (e.g., midwest, west coast, etc.). Further still, more or fewer levels could be put in place, even down to the rental branch location level. Moreover, the criteria for constraining the data need not be broken down by geographical area at all. For example, the vehicle data can be constrained by the business entities that own or operate the vehicles, whether the vehicles are leases or rentals, by vehicle manufacturer, by whether the vehicle is a domestic or import, etc.

Also, in the preferred embodiment, different users will preferably have different levels of access to different country/group/regions depending upon their authorizations within the company. Further, each authorized user will preferably be associated with a default value for country/group/region depending upon his/her level of authorization. Preferably, a fleet manager for the midwest region will only have "delete" access to midwest level (and lower) vehicle data, and his/her default country/group/region setting would be US/Midwest (with no default value being provided by the "region" level). Similarly, a fleet manager for the St. Louis area will preferably only have access to St. Louis area vehicle data, and his/her default country/group/region setting would be US/ St. Louis. The default country/group/region setting for a fleet manager for the Miami area would be US/south Florida/Miami. A corporate level fleet manager, however, may be given access to all country/group/regions of the fleet. However, it is worth noting that some practitioners of the present invention may choose to place no authorization restrictions on users.

In a preferred embodiment, the country/group/region technique will be implemented as follows. For country field 402, the value therein will be the user's default value for country. Preferably, only corporate users are allowed to change the view to a different country. As such, for non-corporate users, the country field 402 is display only. For group field 404, the group values are displayed based on the country value in field 402. For all authorized users other than corporate users, the group value will default to the user's associated group value. In such cases, the group field 404 will be display only. Corporate users are preferably allowed to change the view to different group values. For region field 406, the region value is displayed based on the regionalized group value in field 404. Preferably, only corporate users or users authorized to access a group broken down into regions have the ability to change region values. For all other users, region field 406 is preferably display only. User control over any changes to the country/group/region values are implemented via user selection of change button 408.

Fleet summary display section 410 serves as a snapshot for the user of the current fleet status for the country/group/region identified in section 400. This display serves as a valuable tool for providing users with a near real-time view of the current mix of car classes within a fleet. The data displayed in the fleet summary section 410 is derived from the stored vehicle data in database 100 meeting the applicable country/group/region constraints. Beyond the country/group/region constraint, preferable rules for determining which vehicles in the database 100 should be displayed are as follows: (1) the vehicle's purpose within the fleet is a "daily rental", (2) the unit's out of service date should be null, (3) trucks should be included, (4) vehicles that were purchased used should be included (although these vehicles should be excluded from any average mileage calculation), (5) vehicles whose original unit cost equals zero should be excluded, (6) vehicles whose monthly depreciation amount percentage equals zero should be excluded, (7) vehicles that are not yet officially activated within the fleet should be excluded, and (8) the vehicles must have been completely activated within the fleet.

The fleet summary is preferably broken down into three data category columns. A vehicle class column 412 identifies a vehicle class type (e.g., economy, compact, intermediate, full size, etc.). Each row 418a, 418b, ... 418i corresponds to a different vehicle class. It should be noted that different companies may well use different types of vehicle classes and different criteria for assigning vehicles to vehicle classes. Current fleet column 414 identifies the number of vehicles with each vehicle class for the identified country/group/region. Row 420 includes total numbers for the current fleet column 414 and the current fleet mix column 416. The entries in column 416 identify the percentages that vehicles of the vehicle class sharing the row make up within the overall fleet for the identified country/group/region. The current fleet mix percentages are preferably calculated as: Current Fleet Mix (for Row k) equals 100 multiplied by the Current Fleet Value (for Row k) divided by the Current Fleet Total.

While it is preferred that the fleet summary display section 410 display fleet summary data broken down by vehicle class, it should be noted that this display section 410, if desired by a practitioner of the present invention, could also be used to display current fleet count and current fleet mix data that is further broken down to the YMMS level.

The fleet summary preferably also includes an "as of" date identifier 434 that identifies the date for which the fleet summary data is current (e.g., the time stamped date and time that the fleet database 100 was last updated, which at minimum is preferably a day-to-day update).

Recent activity display section 422 summarizes the most recent activities of the user in the various sections of the fleet management application 102. Typically, section 422 will display a summary of recent reports and/or data tables created by the user as well as links 436 and 437 to such reports/data tables. Link 436 takes the user to screen 216 of the residuals path 212. Link 437 takes the user to screen 224 of the CGF path 220. Column 424 identifies the type of report/data table that the user had recently created. If the report/data table relates to a residual value table, the data displayed in column 424 will preferably identify the fact that the report/data table relates to residual values as well as identify the pertinent YMMS for the latest residual value data viewed by the user (preferably using a descriptive name for the YMMS). If the report/data table relates to a CGF table, the data displayed in column 424 will preferably identify the fact that the report/data table relates to CGF values as well as identify the pertinent vehicle class (e.g., fullsize) for the latest CGF data viewed by the user. Column 426 identifies the pertinent country/group/region for each report/data table, and column 428 identifies the date (and preferably time) upon which each report/data table was last viewed. Rows 430a and 430b identify the particular column values for each recent report/data table.

Quick links display section 460 preferably includes a plurality of links to frequently-used industry sources for vehicle data. Preferably, the links that are displayed to the user are country-specific.

Feature gateway display section 440 serves as a jumping off point for the user to access the residuals path 212 and the CGF path 220 identified in Figure 2. Preferably, user selection of link 442 provides the user with access to residuals path 212 and user selection of link 444 provides the user with access to CGF path 220. Moreover, it is preferred that home page 208 further include one or more navigation bars 446 to provide the user with similar navigation capabilities as section 440. In the preferred embodiment, navigation bars 446 each include a link 448 back to the home page 208, a link 450 to the residuals path (link 450 corresponds to link 442 in section 440), a link 452 to the CGF path (link 452 corresponds to link 444 in section 440), a link 454 to a "contact us" page that provides pertinent contact information to the user about the fleet management application 102, and a link 456 that is operative to log the user out of the fleet management application 102.

In the event the user tries to navigate from the home page 208 to a page that he/she is not authorized to access, the "unauthorized access" screen 206 (see Figure 5(a)) will be preferably presented to the user. In the event the user attempts to navigate to a page that is unavailable due to technical problems in the system, the "technical difficulties" screen 210 (see Figure 5(b)) will preferably be presented to the user.

To enter the residuals path 212 and reach the residuals parameter entry screen 214 of Figure 6, the user can select any of the links 442 or 450 on home page 208. Residuals parameter entry screen 214 includes a current location display section 400 as described in connection with the home page 208 of Figure 4. Preferably, the current location section 400 of residuals parameter entry screen 214 will default to the country/group/region values that were present on home page 208. However, the user will preferably be free to modify those values subject to the authorization restrictions described above in connection with Figure 4. Screen 214 also preferably includes a vehicle selection section 600 that lists a plurality of vehicle classes 602a, 602b, 602c, ... for which the user has the ability to view historical sales calculations and enter residual value forecasts. It is preferred that upon arrival at screen 214, the vehicle class of the YMMS for the most recent residual table in section 422 of the home page 208 be highlighted. However, the user will preferably still possess the ability to select any of the listed vehicle classes. Further, it is worth noting that while in the preferred embodiment, the vehicle selection section 600 lists vehicle classes, a practitioner of the present invention may also choose to have section 600 select vehicles by criteria other than vehicle class, for example, by YMMS.

Current month display section 604 notifies the user of the current month for residual value entry. Link 606 is provided to allow the user to proceed to a residual value table screen 216, depicted in Figure 7(a). Upon user selection of link 606, the residual table screen 216 for the selected vehicle class and country/group/region constraints is displayed.

Figure 7(a) depicts a preferred residual table screen 216. The preferred residual table screen 216 serves two main purposes. The first purpose is to display historical sales data for the selected YMMS and similar YMMSs within the fleet of interest. By displaying such historical sales data, the user is provided with valuable data for use in predicting the residual values for such YMMSs currently within that fleet. The second purpose is to allow the user to enter estimates for future residual values, the value of which will become apparent when the CGF aspect of the preferred embodiment is discussed.

Among the various sections of the residual table screen 216 are a user options section 700, an information section 716, a related tasks button 744, a residual table 750, and a navigational bar 446. Navigational bar 446 functions as described earlier in connection with home page 208. Also, user selection of link 714 routes the user back to the residuals parameter entry screen 214. Further, time stamp section 746 identifies the date and time the displayed table 750 was last updated (and preferably who (not shown) updated the table).

The user options section 700 preferably includes three sections therewithin: a current location section 400 that is operative as previously described, a change selections section 760, and a YMMS selection section 710. Further, it is preferred that the user be provided with the ability to minimize, maximize, and otherwise selectively size the user options section 700 within the residual table screen 216. For users who have the authorization to change the country/group/region values, it is preferred that a "change" button (not shown) be made available in the current location section 400 to provide the user with the ability to modify country/group/region values in a manner commensurate with his/her level of authorization.

Field 702 within the change selections section 760 allows the user to modify the selected vehicle class for the screen. Field 702 is preferably joined with a drop down menu that contains a list of the vehicle classes with the current location's fleet. Radio buttons 704 and 706 provide the user with the ability to display within YMMS selection section 710 either "all" of the YMMSs within the selected vehicle class or only those YMMSs within the selected vehicle class for which a current residual value report is "missing" for the current month. Preferably, the current month is displayed alongside "missing" radio button 706. Based on any selections by the user within change selections section 760, user selection of the "update list" button 708 will be effective to reload the residual table screen 216 with the modified entries.

The YMMS selection section 710 provides the user with the ability to select the YMMS for the residual table 750. As noted above, the YMMSs listed in section 710 will be either all of the YMMSs within the selected vehicle class for the specified current location (country/group/region) or the YMMSs within the selected vehicle class for the specified location and for which a current month's residual value report is not yet completed, depending on the user input in radio buttons 704 and 706. The sort order for the YMMSs within section 710 is preferably make, year, model, series (alphabetically where applicable and chronologically where applicable), although they are preferably descriptively displayed by YMMS. However, it should be understood that other sort orders can be used. Furthermore, it is preferred that each YMMS listed in section 710 also include an adjacent identification of that YMMS's total count or population within the current location's fleet. At the bottom of section 710, a total vehicle count for the entire vehicle class of the current location's fleet is preferably displayed. The YMMS row 712 for the currently displayed residual table 750 is preferably highlighted in some manner to help notify the user of which YMMS is applicable to the current table 750. By clicking on a row 712 of section 710, the user can choose the YMMS for which the residual table 750 is applicable.

Information section 716 preferably displays to the user a summary of the parameters for which and from which the residual table 750 was created. This summary information includes an identification of the YMMS applicable to the residual table 750, an identification of the total count for that YMMS within the current location's fleet as of a predetermined date (preferably the date that the fleet database was last updated), an identification of the current location (country/group/region) for the residual table 750, and an identification of the data source, which specifies the pool of vehicles within the fleet that will be used for the historical analysis to populate entries in the residual table 750. Through the data source links, the user will have the ability to change the pool of vehicles for which historical analysis is performed to a larger or smaller pool. For example, if a St. Louis group fleet manager feels it would be more helpful to include a larger pool of historical sales in the analysis than just those in the St. Louis area, then that fleet manager will have the capability to expand the pool of historical sales to be analyzed (e.g., to encompass the entire midwest market rather than just the St. Louis group). The preferred data source choices are Group, Market, and Country. If the "Group" choice is selected, then the historical values are calculated from YMMS vehicles within the group of the data source's fleet. If the "Market" choice is selected, then the historical values are calculated from the YMMS vehicles within the market to which the group of the data source's fleet belongs. The choices of how to place groups within larger markets is a design choice, but it is preferred that groups be assigned to their natural geographical areas such as east, south, central, and west. If the "Country" choice is selected, then the historical values are calculated from YMMS vehicles within the country of the data source's fleet. It is worth noting that, preferably, the scope of levels accessible to the user via the data source tool not be limited by the user's authorization level within the company. Further still, practitioners of the present invention may choose different criteria for data source constraints similar in nature to the options discussed in connection with current location display 400.

Residual table 750 presents the user with a vast array of historical sales data for vehicles of a YMMS that is the same or similar to the user-selected YMMS within the data source's fleet. Residual table 750 further allows the user to enter estimations for future residual values for the user-selected YMMS, guided at least in part by the user's analysis of the historical trends displayed via the table 750.

Residual table 750 is preferably formatted in the following manner. The current year values for the selected YMMS vehicle appear as the last row 722 of information on the bottom of the table 750. Directly above the current year will be historical data for the previous year's YMMS, in the same format as the rows and columns for the current year. Residual table 750 preferably displays the three previous years of data for a YMMS group together with the current year's data. However, it should be understood that more or fewer than three previous years can be displayed and that the user can be given the ability to specify how many previous years are to be displayed. If there is no historical data available for a similar YMMS in a previous year, then a "-" or the like is preferably displayed in the pertinent row and column.

Along with each year's row, there will preferably be twelve columns corresponding to the months of the year. Preferably, the first two columns correspond to the two previous months, the third column corresponds to the current month, and the next nine columns correspond to the next nine months. The arrangement of columns is preferably updated by the software at midnight on the first of each month. However, other arrangements of months within columns can be used. For example, some practitioners of the present invention may prefer that the columns be displayed in strict January through December order while others may prefer that the current month be listed first with later months following.

While it is preferred that rows in the table correspond to data for different YMMSs and the columns correspond to different months, it should be noted that practitioners of the present invention may choose different row/column arrangements. For example, rather than having columns correspond to months, the columns could correspond to different time periods (e.g., quarterly). Also, the table can be arranged such that some rows correspond to country-level sales of a YMMS, some rows correspond to market-level sales of a YMMS, some rows correspond to group-level sales, and some rows correspond to region-level sales.

In row 742 for each month, the residual table 750 preferably displays an average mileage calculation for previous sales of the same or similar YMMSs in that month. Before explaining these average mileage calculations, it will be helpful to discuss the system's technique for pooling the appropriate historical data.

When attempting to estimate future residual values for a particular YMMS such as a 2004 MMS, it will be helpful to know how previous year MMSs have sold. In this case, a YMMS group of the same or similar YMMSs for a user-selected YMMS of a 2004 MMS would be the 2003, 2002, 2001 and so on versions of the MMS, as determined by a user. However, it may be the case that the process of grouping YMMSs into a YMMS group that corresponds to a user-selected YMMS is not so simple as finding matching MMSs for previous years. For example, in some cases, the name of the make, model, and/or series may have changed over time, despite a current YMMS still being the same "type" of vehicle as the older YMMSs. So that the fleet management application can accurately know which YMMSs to take into consideration when performing a historical analysis for a user-selected YMMS, the mapping tools of Figures 14(a) and (b) are preferably used. Figure 14(a) depicts a mapping table 1400 for grouping current YMMSs with older YMMSs to create a YMMS group. In table 1400, the YMMS group is defined as the YMMSs that share a row 1402a, 1402b, 1402c,..., etc. Via fields 1410 and 1412, the user can specify a year/make combination to work on. In this example, the selected year/make combination in fields 1410 and 1412 is "2005 Chevy". Thus, table 1400 lists all YMMSs that are 2005 Chevys. Within the cells of each column group 1404, 1406, 1408, and so on, the user can specify the older YMMSs that are to be mapped to the current YMMS sharing the row, to thereby create a YMMS group. Button 1414 is provided to save the YMMS groups to a database. Buttons 1420 are provided at the end of each row to edit the previous YMMSs that are to be grouped with a current YMMS.

Figure 14(a) depicts what can be referred to as "horizontal" mapping (mapping older YMMSs with a current YMMS). Another mapping scenario is "vertical" mapping, as shown in Figure 14(b), which involves matching same year YMMSs together into a YMMS group. This is typically done because, despite a formal name difference between the same year YMMSs, the user has determined that the vehicles are essentially the same for historical analysis purposes.

In Figure 14(b), the user can specify in field 1430 a YMMS that is to be mapped to another same year YMMS (specified in field 1432) to create a YMMS group. Summary section 1434 lists all same year YMMSs that have been mapped together into a YMMS group. "Delete" buttons 1438 are provided for removing particular YMMSs from this group. "Add" button 1436 is provided for adding the YMMS in field 1430 to the group.

A good case study for mapping is the Chevy Malibu. Going back to 2002, consider the following vehicle types: 2002 Chevy Malibu, 2003 Chevy Malibu, 2004 Chevy Classic, 2004 Chevy Malibu, 2005 Chevy Classic, and the 2005 Chevy Malibu. When mapping similar vehicle types together for the 2005 Chevy Classic, it is preferred that the 2002 Chevy Malibu, 2003 Chevy Malibu, and 2004 Chevy Classic be grouped therewith. When mapping similar vehicle types together for the 2005 Chevy Malibu, it is preferred that only the 2004 Chevy Malibu be grouped therewith. This mapping result arises from a change in design from Chevy wherein the 2004 Chevy Malibu was sufficiently different from previous years of the Malibu to render sales data for previous year Malibus relatively immaterial thereto. However, the Chevy Classic introduced in 2004 was sufficiently similar to the previous year Malibus so as to justify their user-defined grouping for historical sales analysis.

Once the appropriate YMMSs have been mapped into YMMS groups, a historical analysis of the average mileages by month of sale for a user-selected YMMS can be performed. This average mileage will be based on the odometer readings at the time of wholesale/retail sale for vehicles in the YMMS group corresponding to the user-selected YMMS. The formula used to calculate the average mileage is the sum of the odometer readings (at the time of sale) for all vehicles matching the YMMS group that were sold in the same month as the column in question divided by the total number of vehicles matching the YMMS group that were sold in the same month as the column in question, wherein the sales that are included in this analysis are the sales dating back to the earliest year for which reliable sales data is available (which is the year 1998 in the preferred embodiment). However, fewer years (or more years) of sales data could be used to calculate each month's average mileage.

Furthermore, to be included in the pool of past sales used in the calculation, it is preferred that a vehicle sale for a member of the YMMS group must meet these additional criteria: (1) the vehicle's sale date must not be blank, (2) the vehicle must have had a status of "daily rental" prior to the sale, (3) the vehicle was not purchased used, (4) the vehicle must not have been brought from leasing nor is a corporate or company car, and (5) the vehicle must have had more than 5,000 miles on the odometer at the time of sale. Figure 8 is a flowchart illustrating how the average mileage is calculated for each month. While it is preferred that a single average mileage be calculated for all YMMSs in a YMMS group that were sold in a given month, it should be understood that a practitioner of the present invention may choose to calculate and display a different average mileage for each YMMS within the group. Also, it is preferred that for any YMMS groups having no sales, that the average mileage determination be rolled up to the MM level. If no sales are found at the MM level, it is preferred that the average mileage determination be further rolled up to the vehicle class level.

In row 726 for each model year row 722, the monthly column entries will display a calculated historical sales price for each year of YMMS within the YMMS group, wherein the historical sales prices have been normalized to the corresponding average mileages in row 742. In the example of Figure 7(a), the $12,878 value in the February column of row 724 for the YMMS displayed in section 716 represents a historical value determined in accordance with the present invention for that YMMS that was sold in February 2001 with 26,941 miles on it (the row 742 value for February). Likewise, the $10,723 value in the February column of row 724 represents a historical value determined in accordance with the present invention for that YMMS that was sold in February 2003 with 26,941 miles on it.

Conceptually, with this technique the actual sales price values and actual mileage values for previously sold vehicles of a particular YMMS group can be thought of as a data group. The goal of the concept is to normalize each sales price value in the data group to a "representative" data group member (the representative member preferably being the average mileage value computed in accordance with Figure 8 from the data group's actual mileage values (or a subset thereof)). As described in greater detail below, this normalization can be achieved by adjusting each vehicle's actual sales price value corresponding to that vehicle's actual mileage as compared to the representative member (the average mileage value). To aid this adjustment, a cost per mile data table is preferably accessed. Once the actual sales prices have been so normalized, select subsets of the normalized sales prices can be combined to calculate appropriate average normalized sales prices. Figure 9 illustrates a preferred implementation of this concept.

With reference to Figure 9, for each of the vehicles passing the following filter constraints: (1) the vehicle's sale date must not be blank, (2) the vehicle must have had a status of "daily rental" prior to the sale, (3) the vehicle was not purchased used, (4) the vehicle must not have been brought from leasing nor is a corporate or company car, (5) the vehicle must have had more than 5,000 miles on the odometer at the time of sale, (6) the vehicle's year of sale must match the year in question, and (7) the vehicle's MM or vehicle class must have a matching entry in the cost per mile table (discussed below), the software will determine the vehicle's actual sale price and actual odometer reading at the time of sale (these values being stored in the fleet database 100). Thereafter, the software will seek to calculate an adjusted sales price that represents what the vehicle sales price would have been had the odometer reading at the time of sale matched the calculated average mileage in row 742. To do so, a cost per mile table is preferably used. The cost per mile table displays an estimated vehicle price (by vehicle type) associated with an odometer reading for a vehicle of that type. An exemplary cost per mile table is shown below:

***Cost per mile Table for a YMMS:***

| *Miles* | *Cost* |
|---|---|
| ... | ... |
| 12,000 | $7,841 |
| 13,000 | $7,795 |
| 14,000 | $7,750 |
| 15,000 | $7,704 |
| 16,000 | $7,658 |
| 17,000 | $7,613 |
| ... | ... |

Using this table as an example, and assuming that a vehicle's (say, a hypothetical YMMS of a 2004 xxxx yyyy zzzz) actual sales price is $8,700, that vehicle's actual odometer reading at the time of sale was 12,300 miles, and that the average mileage to which the sales price will be adjusted is 15,400 miles, then the calculation of an adjusted (or normalized) sales price will proceed as follows.

First, one would look to the cost per mile table to find an entry in the table for the vehicle's actual mileage, which in this example is 12,300. If a matching mileage entry is found in the table, then the "cost" parameter is easily set to be the cost value sharing the row with the matching mileage entry. However, if a matching entry is not found, then interpolation (preferably straight line interpolation) based on the next lower and next higher table entries can be used to find cost. In this example, interpolation will be needed. Thus, one preferably first calculates the cost per mile between 12,000 miles and 13,000 miles which comes out to $46 ($7,841 - $7,795) for 1,000 miles, or 4.6 cents per mile. Using this cent per mile adjuster, the next step is to find what the appropriate entry in the table would be for a mileage of 12,300. Given that each additional mile added to the vehicle after 12,000 miles (and before 13,000 miles) is assumed to drop 4.6 cents from the vehicle's sales price, it can be determined that 300 additional miles on the vehicle would drop $13.80 (.046 times 300) from the value of the vehicle at 12,000 miles. Thus, the appropriate cost entry in the table for a 2004 xxxx yyyy zzzz at 12,300 miles would be $7,827.20.

Next, the appropriate cost entry in the table is determined for a 2004 xxxx yyyy zzzz with average mileage (15,400) thereon. If a matching mileage entry is found in the table, then the "cost" parameter is easily set to be the cost value sharing the row with the matching mileage entry. However, if a matching mileage entry is not found, then the same interpolation process described above can be followed. In this example, interpolation will be needed. The cents per mile adjuster between 15,000 miles and 16,000 miles is readily calculated to be $46 (7,704 minus $7,658) for 1,000 miles, or 4.6 cents per mile. Then the table's cost entry for 15,400 miles can be readily determined. Given that each additional mile added to the vehicle after 15,000 miles (and before 16,000 miles) is assumed to drop 4.6 cents from the vehicle's sales price, it can be determined that 400 additional miles on the vehicle would drop $18.40 (.046 times 400) from the value of the vehicle at 15,000 miles. Thus, the appropriate cost entry in the table for a 2004 xxxx yyyy zzzz at 15,400 would be $7,685.60.

Next, the table's cost difference for a 2004 xxxx yyyy zzzz with 12,300 miles (the actual mileage) and a 2004 xxxx yyyy zzzz at 15,400 miles (the average mileage) is determined. This cost difference is readily computed to be $141.60 ($7,827.20 minus $7,685.60).

Using this calculated cost difference, the actual sales price of $8,700 at 12,300 miles can be normalized to a value at 15,400 miles by reducing the actual sales price by the calculated cost difference. Accordingly, $8,700 at 12,300 miles would be normalized to $8,558.40 at 15,400 miles.

This $8,558.40 represents a normalization of the vehicle's actual sales price to the average mileage, thereby providing an indicator of what the sales price for the vehicle would have been had the vehicle had 15,400 miles on the odometer at the time of sale rather than 12,300 miles.

If the vehicle's actual odometer reading at the time of sale is less than the average mileage to which the sales price is to be adjusted, then it can be expected that the sales price adjustment will be a downward adjustment, as in the previous example. If the vehicle's actual odometer reading at the time of sale is greater than the average mileage to which the sales price is to be adjusted, then it can be expected that the sales price adjustment will be an upward adjustment, as in the following example. Assume that a vehicle's actual sales price is $8,000, that vehicle's actual odometer reading at the time of sale was 15,000 miles, and that the average mileage to which the sales price will be adjusted is 13,000 miles. In this case, the calculation of an adjusted sales price will proceed as follows.

First, one would look to the cost per mile table to find a cost entry in the table corresponding to the vehicle's actual mileage (15,000 miles), which in this example is $7,704 (no interpolation would be needed because an exact matching mileage entry is found in the table). Next, the table's cost entry for the average mileage of 13,000 miles is determined. In this example, the table's cost is $7,795 (once again, no interpolation is needed) for 13,000 miles. Once the table entries corresponding to the cost at the actual mileage and the average mileage are known, the difference between these two values can be calculated. In this example, the difference is $91. The adjusted sales price for the vehicle is then $8,091 which represents the actual sales price plus the calculated difference.

It should be noted that the cost per mile table shown above is exemplary only. Each practitioner of the invention may choose to populate the cost per mile table entries with values that correspond to their own business judgment. A preferred technique for creating the cost per mile table is described in Appendix A attached hereto. As described in the flowchart of Figure 9, this sales price adjustment is performed for each of the vehicles qualifying for that model year's month's column in the residual table 750. Thus, with reference to Figure 7(a), this adjustment process will operate on all 96 vehicles for model year 2000 MKE MDL SER that were sold in February 2001. After following the technique of Figure 9, the average historical sales price in February 2001 for 2000 MKE MDL SERs was found to be $12,878 for a 2000 MKE MDL SER having an odometer reading of 28,941 miles. For all 276 vehicles for model year 2001 MKE MDL SER that were sold in April 2002, the average historical sales price was found to be $12,591 for a 2001 MKE MDL SER having an odometer reading of 32,122 miles.

After all of the entries for rows 724 have been populated with the calculated average historical sales price normalized to that month's average mileage, then the entries for rows 726 and 728 can be automatically populated. Rows 726 represent the yearly sales price changes for YMMSs within the YMMS group sold that month relative to YMMSs within the YMMS group sold that month during the previous year. Essentially, the yearly sales price change for Month M during Year Y is the calculated historical sales price in row 724 for Month M and Year Y minus the calculated historical sales price in row 724 for Month M and Year Y-1. In the example of Figure 7(a), it can be seen that the row 726 entry for April 2002 is the row 724 entry for April 2002 minus the row 724 entry for April 2001. Rows 728 represent the monthly sales price changes for YMMSs within the YMMS group sold that month relative to YMMSs within the YMMS group sold during the previous month. Essentially, the monthly sales price change for Month M during Year Y is the calculated historical sales price in row 724 for Month M and Year Y minus the calculated historical sales price in row 724 for Month M-1 and Year Y (although when the month in question is January, December of the previous year will be used as the reference point). In the example of Figure 7(a), it can be seen that the row 728 entry for April 2002 is the row 724 entry for April 2002 minus the row 724 entry for March 2002.

The rows 730 within table 750 are automatically populated with total vehicle sales counts for each month, as determined by the sum of vehicles passing the filter of Figure 9.

For any data entries for which no data is available, a "--" is preferably displayed in the pertinent field. For example, because the year 2000 models are the earliest models shown in table 750, it is preferred that row 726 for model year 2000 be left blank because there is no displayed model year 1999 with which to compare the yearly sales price changes.

For the current model year, an additional row 732 will be provided in which the user can input forecasted residual values in fields 734 for the selected YMMS. As this row represents a future prediction, it is present only beginning with the current month onward (and is either not present or left blank for previous months). When determining future residual value(s), not only will the user be able to look to year-to-year historical sales prices normalized to an average mileage, but the user will also be able to look to month-to-month historical sales prices. The month-to-month view will allow users to get a sense for how sales price will decrease or increase from month to month as a YMMS ages from month to month. It is believed that the combination of these beneficial historical views with the user's own business knowledge will enable the user to more accurately estimate future residual value than was available with previous known forecasting systems. These residual value forecasts will help drive the CGF analysis described below.

Once the user has completed a desired number of residual value forecasts in table 750 for the selected YMMS, user selection of "update residuals" button 738 will be operative to save the table 750 in the database and automatically populate the year-to-year and month-to-month changes in rows 726 and 728 as appropriate corresponding to the user-entered residual value(s). However, it is also preferred that table 750 be automatically saved whenever the user navigates to a new page from page 216 (although upon such navigation it may be preferred that a pop-up window ask the user if the table 750 is to be saved). If the user wishes to create/retrieve table 750 for the next YMMS listed in section 710, the user can click on the "next selection" link 740. If the user wishes to create/retrieve table 750 for the previous YMMS listed in section 710, the user can click on the "previous selection" link 736. If a residual table 750 is retrieved for which the forecasted values are more than 30 days old, it is preferred that a warning message to the effect of "values over 30 days old: please update" be displayed on screen 216, preferably just above table 750, below section 710 and to the left of the related tasks button 744.

As shown in Figure 7(b), the related tasks button 744 is preferably selectable by the user to call up drop down menu 766. Menu 766 preferably provides the user with a selectable link 760 that is operative to export the displayed table 750 to Microsoft Excel, a selectable link 762 that is operative to display printer-friendly page 218 for the displayed table 750 (see Figure 7(c)), and a selectable link 764 that is operative to route the user into the CGF path 220 at CGF results screen 224 (the CGF results screen being displayed for the vehicle class applicable to table 750).

Returning to Figures 2 and 4, user selection of links 444 or 452 on home page 208 will cause the user to enter the CGF path 220. Figure 10 illustrates a preferred CGF parameter entry screen 222 at the start of the CGF path 220. CGF parameter entry screen 222 preferably includes a current location section 400 as previously described for other screens, a vehicle class selection section 1000, an average miles per month input section 1004 and a projection period input section 1008. Using values entered by the user for the various parameters of screen 222, the software will preferably perform a CGF analysis for the YMMSs of a selected vehicle class.

As previously described, current location section 400 displays the current country/group/region values for the user and allows the user to modify the current country/group/region values (depending on the user's level of authorization).

Vehicle selection section 1000 presents the user with a list of selectable vehicle classes in rows 1002a, 1002b, 1002c, ... for use in the CGF analysis. The vehicle classes are preferably listed in alphabetical order. Further, the vehicle class corresponding to the vehicle class of the most recent CGF analysis by the user is preferably highlighted upon the user's arrival to page 222.

Average miles per month input section 1004 preferably provides the user with a field 1006 in which the user can enter a forecasted monthly mileage that the user expects for vehicles of the selected vehicle class in the near future. At the beginning of each calendar month, this value is preferably recalculated based on past history of the selected vehicle class, and this new average is then preferably displayed as a default value in field 1006. When a user enters a new value in field 1006, it is preferred that this new value be saved as the user's preference such that the new value will be appear by default for the remainder of the month when the user reaccesses screen 222 for the selected vehicle class. Once that month ends however, it is preferred that a new default value be displayed. Preferably, the user will also be restricted from entering a value in field 1006 that is less than 1000 miles or greater than 9,000 miles. It is worth noting that section 1004 can also include a display of a suggested entry for field 1006, the suggested entry being derived from data in the fleet database 100. This entry can either be displayed to the user in a text field or it can be displayed to the user as a selectable option (together with a second field for a user-entered value). It is preferred that this suggested entry, as well as a new default value in field 1006, be calculated by averaging the monthly mileages for all vehicles in the database that meet the following constraints: (1) the vehicle must be a daily rental, (2) the vehicle must have been a daily rental for longer than 35 days, (3) the vehicle must have more than 5,000 miles on its odometer, (4) the vehicle's average monthly mileage must not be greater than 9,000 miles, and (5) the vehicle must not have been purchased used.

Projection period input section 1008 preferably allows the user to specify the projection period for the CGF analysis. Field 1010 displays the current month for the projection period. Field 1010 is preferably display only. The user inputs the end month for the projection period in field 1012. Preferably, the projection's end month can be from one to six months from the current month. These end months that are available for selection can be listed in a drop down menu associated with field 1012. However, it is worth noting that more or fewer months can be used in the projection period. Further, it is worth noting that this projection period need not be specified in terms of months at all. Other time periods (for example, quarters) could be used.

Once the user has entered the pertinent parameter values on page 222, user selection of the "view results" button 1014 will be effective to launch a CGF analysis for the YMMSs of the selected vehicle class for the displayed country/group/region, using the average monthly mileage in field 1006 and the projection period specified by fields 1010 and 1012. The results of this CGF analysis will be presented to the user via the CGF analysis results screen 224.

Figure 11(a) illustrates a preferred CGF analysis results screen 224. The CGF results page 224 has two primary purposes - the first being to display the projected costs going forward for all of the YMMSs in the selected vehicle class and the second being to display the number of vehicles for each YMMS within a plurality of specified mileage ranges. Among the various sections of the CGF analysis results screen 224 are a user options section 1100, an information section 1114, a related tasks button 1180, a CGF results table 1120, and a navigational bar 446. Navigational bar 446 functions as described earlier in connection with home page 208. User selection of link 1178 routes the user back to the CGF parameter entry screen 222.

Within the user options section 1100 is a current location section 400 that is operative as previously described. Also included in section 1100 is a change selections section 1102. Section 1102 provides a field 1104 that allows the user to change the vehicle class selected for the CGF results (preferably, the vehicle class options are presented to the user via a drop down menu associated with field 1104). By default, field 1102 preferably displays the currently selected vehicle class. Section 1102 also preferably provides a field 1106 that notifies the user of the starting month (i.e., the current month) in the projection period as well as a field 1108 that allows the user to enter a new ending month for the projection period. Field 1108 is preferably defaulted to the currently selected end month for the projection period. Further, section 1102 preferably includes a field 1110 in which the user can enter a new average miles per month value. Field 1110 preferably defaults to the current value for the average monthly mileage. "Update" button 1112 is preferably provided in section 1102 to allow the user to refresh screen 224 in accordance with any updated values in section 1102.

Information section 1114 informs the user with displays of the currently selected vehicle class, the currently selected location (country/group/region), the currently selected projection period and the current value for average miles per month.

The heart of the CGF results page 224 is found in the CGF results table 1120. The CGF results table 1120 provides current value and future value projections for the YMMSs of the selected vehicle class. Each row 1160a, 1160b, 1160c, ... in column 1124 corresponds to a different YMMS within the selected vehicle class. Each YMMS listed in row 1160 preferably also serves as a link to the most recent residual value table screen 216 for that YMMS.

For each listed YMMS in rows 1160, there is preferably a column 1126 for the current mileage as of the current month of the projection period. This value is the average mileage value in row 742 of residual table 750 for the current month and the YMMS in question.

For each listed YMMS in rows 1160, there is also preferably a column 1128 for the projected average mileage for that YMMS at the end of the projection period. This value is the current miles value in column 1126 for that YMMS plus the average miles per month selected for the CGF analysis multiplied by the number of months in the projection period.

For each listed YMMS in rows 1160, there is also preferably a column 1130 for the current residual value for that YMMS. This value is the residual value entered by the user in field 734 of residual table 750 for the current month.

For each listed YMMS in rows 1160, there is also preferably a column 1132 for the projected residual value for that YMMS at the end of the projection period. This value is calculated using the residual value entered for that YMMS in field 734 of the residual table 750 for the end month of the projection period. This residual value is then adjusted for the projected mileage that the YMMS is expected to have at the end of the projection period in accordance with a cost per mile table that relates vehicle values on a mileage basis. Figure 12 is a flowchart describing a preferred implementation of this normalization process.

An example will help illustrate how the projected values in column 1132 are calculated. Assume that the pertinent values in the residual table 750 for the YMMS in question at the end month in the projection period are as follows for a 2004 xxxx yyyy zzzz:

May: $9,500 for an average mileage of 12,000 miles

July: $8,400 for an average mileage of 14,000 miles Further, assume a two month projection and an average miles per month value of 2,000 miles. Further assume that the current month is May. Using these numbers, the projected mileage will be 16,000 (the base mileage of 12,000 plus two months of 2,000 miles). The goal is to calculate the projected value for a 2004 xxxx yyyy zzzz at 16,000 miles from the residual values of $8,400 at 14,000 miles in July and $9,500 at 12,000 miles in May. In making this projection, the exemplary cost per mile table shown above will be used. This table is preferably created and used in the same manner described above in connection with the residual table and as set forth in Appendix A.

From this table, it can be seen that the cost adjustment between 14,000 miles and 16,000 miles is a downward adjustment of $92. Accordingly, to normalize the end month residual value for the YMMS to the projected mileage, the end month residual value needs to be decreased by $92. Therefore, in this example, the projected value for the 2004 xxxx yyyy zzzz in July assuming 2,000 miles per month will be $8,308 ($8,400 minus $92).

If exact matching entries are not found in the cost per mile table for the end month average mileage and/or the end month projected mileage, then interpolation can be used as described in connection with the residual table 750 to arrive at the appropriate table cost values.

For each listed YMMS in rows 1160, there is also preferably a column 1134 for the cost going forward (CGF) for that YMMS at the end of the projection period. This CGF value is calculated as the difference between the projected value for the YMMS in column 1132 and the current value for the YMMS in column 1130. These CGF values display to the user the expected changes in value for each YMMS from the start of the projection period to the end of the projection period. The YMMSs in table 1120 are preferably sorted by their CGF values in column 1134 such that the YMMSs with the largest negative CGF value are displayed at the top of the table. However, this need not be the case.

An additional preferred feature of the CGF results table 1120 is the mileage band section 1136. Section 1136 comprises a plurality of columns 1138 through 1152, each column corresponding to a different range of mileage values, preferably progressing from lower mileages to higher mileages. Populating each row in column 1138 through 1152 is preferably a count of the number of vehicles for that row's YMMS that fall within the pertinent mileage ranges. The entries in column 1170 for each YMMS correspond to the total count of vehicles in the fleet of interest for that YMMS (subject to the country/group/region and other constraints previously described). These classifications and counts of YMMS vehicles are readily achieved by filtering data in the fleet database. In the example of Figure 11(a), it can be seen that the count for the YMMS of YYYY MKE MDL SER5 is 86, with 1 of those falling within the 0 to 9,999 mileage range, 10 falling within the 10,000 to 14,999 mileage range, 9 falling within the 15,000 to 19,999 mileage range, 22 falling within the 20,000 to 24,999 mileage range, 22 falling within the 25,000 to 29,999 mileage range, 17 falling within the 30,000 to 35,999 mileage range, and 5 falling within the 36,000 to 39,999 mileage range. It is worth noting that these mileage band breakdowns are only preferred breakdowns. Other mileage band breakdowns can readily be used in the practice of the present invention.

Furthermore, it is preferred that each entry 1162 in the mileage band section 1136 serve as a link to an activation page for those vehicles in the YMMS mileage band. As will be described in connection with Figure 13, from the activation page, the user can flag specific vehicles for deletion from the fleet.

For each listed YMMS in rows 1160, there is also preferably a column 1196 for identifying a count of YMMS vehicles within the pertinent total number of column 1170 that have been activated for deletion from the current location's fleet. The entries in column 1198 for each row 1160 thus identifies a count for the remaining unactivated YMMS vehicles within the pertinent column 1170 total count.

Furthermore, it is preferred that each YMMS row in table 1120 include a column 1122 that provides warning notes to the user. For example, in rare circumstances a CGF value may be found to be positive. It is preferred that such anomalous values be flagged for the user's attention so that the user can evaluate the accuracy of the underlying data (e.g., the residual value forecasts). To do so, a warning icon 1192 can be displayed in the appropriate row of column 1122. Additionally, descriptive language for the warning icons 1192 can be displayed on screen 224 above the table 1120, below section 1114 and to the left of related tasks button 1180. Additional examples of warnings for the user can be an "invalid forecast values in the residual table" warning and a "please enter only numeric values" warning, as shown in Figure 11(c).

As shown in Figure 11(b), the related tasks button 1180 is preferably selectable by the user to call up drop down menu 1186. Menu 1186 preferably provides the user with a selectable link 1182 that is operative to export the displayed table 1120 to Microsoft Excel and a selectable link 1184 that is operative to display printer-friendly page 226 for the displayed table 1120 (see Figure 11(d)).

As previously mentioned, if the user selects one of the links 1162 in CGF results table 1120, the activations screen 230 of Figure 13 is preferably displayed. From this screen, the user is provided with the ability to flag for deletion from the fleet specific vehicles in the YMMS meeting the mileage band constraints of link 1162. Activations screen 230 preferably includes an information section 1300, an activations table 1310, a related tasks button 1334, and a navigation bar 446. Link 1332 is selectable by the user to route the user back to the CGF analysis results screen 224 from which he/she came.

Information section 1300 provides the user with the information presented in the row 1160 in the CGF results table 1120 for the YMMS corresponding to the link 1162 that was selected by the user. However, the only mileage band count that will be shown in section 1300 is preferably the count for the link 1162 that was selected by the user. It is also preferred that the activated count from column 1196 for the pertinent row in CGF table 1120 be identified in column 1302.

The activations table 1310 preferably displays pertinent data about each listed fleet vehicle in the selected YMMS mileage band and further allows the user to flag specific vehicles for deletion from the fleet. Each row 1326a, 1326b, 1326c, ... in the table 1310 corresponds to a different vehicle in the fleet meeting the YMMS and mileage band constraints. Column 1314 displays the unique identifier for each vehicle. Column 1316 identifies how many months each vehicle has been in service. Column 1318 identifies the latest odometer readings for each vehicle. Column 1320 identifies the group and branch location where the vehicle resides Column 1322 identifies the exterior color for each vehicle. Lastly, column 1324 identifies the book value for each vehicle (as determined by an accounting or financial department)

Based on the user's assessment of which vehicle(s) listed in table 1310 should be deleted from the fleet and sold as a used car, the user can check individual boxes in the "activate" column 1312. User selection of the "clear" button 1328 will be effective to clear all of the checked boxes in column 1312. Preferably, page 230 also includes a "check all" button (not shown) and an "uncheck all" button (not shown) that are effective, upon user-selection, to respectively check each box or uncheck each box in column 1312 automatically. User selection of the "activate" button 1330 will be effective to flag each vehicle having column 1312 checked for deletion. Once flagged, an appropriate message is preferably communicated to the person in charge of the flagged vehicle (e.g., the branch manager at the branch location where the vehicle is available for rent), thereby allowing the message recipient to promptly pull the vehicle out of the rental fleet and make arrangements for its transfer to the used car market. Alternatively, a database record for an "activated" vehicle can be created that flags that vehicle for deletion. An interested party can thereafter receive a message or report from this database record to become notified of the need to delete the vehicle from the rental fleet and move it to a used car market.

Related tasks button 1334 is preferably selectable by the user to present the user with options to either export the data of screen 230 to Microsoft Excel or to create a printer-friendly version of screen 230 for printing.

It is worth noting that the selection of any of the links 1162 from screen 224 in columns 1170, 1196, or 1198 also navigate the user to an activations page 230. For users who arrive at page 230 from a link in column 1170, the activations tables 1310 will list each fleet vehicle within the YMMS corresponding to the selected link. For users who arrive at page 230 from a link in column 1196, the activations table 1310 will list only the fleet vehicles within the YMMS corresponding to the selected link that are scheduled for deletion. Lastly, for users who arrive at page 230 from a link in column 1198, the activations table 1310 will list only the unactivated fleet vehicles within the YMMS corresponding to the selected link.

A useful application of the present invention is its utility for long term fleet planning (LTFP). Figure 16 depicts an exemplary timetable during which LTFP can be performed, broken down in units of fiscal years, quarters, and months. However, it should be noted that other time intervals may be used. Also, as used herein, a fiscal year may be inclusive of a calendar year. Moreover, it should be noted that the time windows during which the various operations are performed can be adjustable as desired by a practitioner of the invention. Figure 17 depicts a preferred workflow for LTFP that is preferably executed within the timetable of Figure 16. In the preferred embodiment of LTFP, the goal is to intelligently develop a forecast of how many new cars should be purchased for inclusion in a vehicle fleet during an upcoming future time period (such as the next fiscal year). Another goal of LTFP is to intelligently delete aging vehicles from a vehicle fleet. An example of a vehicle fleet for which the preferred embodiment will be described is a rental vehicle fleet.

In the example of Figures 16 and 17, a preferred LTFP process is initiated at some point in time prior to the upcoming future time period (the next fiscal year FY x+1), such as in month 7 of the current fiscal year (FY x). During month 7 of FY x, a snapshot of the current vehicle fleet is taken (operation 1602 of Figure 16 and step 1702 of Figure 17). This fleet snapshot operation comprises accessing the data stored in database 100 to gather pertinent data about the current state of the rental vehicle fleet.

Another step in the preferred LTFP process involves users of the system entering the short term vehicle needs for the rental vehicle fleet for the remainder of the current fiscal year and the longer term needs for the next fiscal year (operations 1604 and 1606) and optionally beyond. Within the flow of Figure 17, these operations preferably begin with user assignment of YMMSs to vehicle classes (step 1704). Preferably, these operations also involve defining not only the quantity of rental vehicles in a desired rental vehicle fleet during the current fiscal year and over the next fiscal year (step 1706) and optionally beyond but also a desired mix of rental vehicles across multiple vehicle class types (e.g., 10% economy class vehicles, 40% full size class vehicles, etc.) (step 1708).

Another step 1710 in the preferred LTFP process involves users of the system updating the fleet database 100 to reflect the quantity and types of vehicles that will be incoming to the fleet during the remainder of FY x. With respect to Figure 16, this operation 1608 will be based on deliveries 1618 expected during the remainder of the current fiscal year. Preferably, these incoming vehicles are new (or possibly used) vehicles that the rental vehicle service provider business has previously purchased from one or more vehicle sources (e.g., manufacturers, dealers, etc.) and for which delivery is expected throughout the remainder of FY x.

Yet another aspect of the preferred LTFP process involves system users performing a CGF analysis on the vehicles within the fleet to assess how many vehicles should be deleted from the fleet during the remainder of the current fiscal year (operation 1612 in Figure 16 and step 1714 in Figure 17) and forecasting vehicle deletes over the course of the next fiscal year FY x+1 (and optionally beyond) (operation 1614 in Figure 16 and steps 1716 and 1718 in Figure 17). Preferably, another aspect of the LTFP process includes distributing the forecasted deletes over time.

After one or more users has performed these operations, a gross vehicle buy for the next fiscal year FY x+1 can be assembled at step 1720 that is based on an intelligent assessment of fleet needs in terms of desired fleet size, desired fleet mix, and cost-effective vehicle deletions (operation 1610 in Figure 16). Thereafter, a business such as a rental vehicle service provider can negotiate with various vehicle sources to purchase new vehicles for FY x+1 based on the gross vehicle buy forecast. After the buy orders are placed with the manufacturers, a process of receiving vehicle deliveries during FY x+1 takes place (1620).

It should be noted that while in a preferred LTFP process, the gross buy forecast is only undertaken once per fiscal year, it should be noted that this need not be the case. For example, LTFP can be undertaken on other time intervals, including but not limited to twice per year, three times every two years, or on a rolling incremental basis. Moreover, the forecasting process can optionally be repeated on a smaller scale at some point during a midquarter in the next fiscal year (as shown in operation 1616), which identifies an incremental buy undertaken during the next fiscal year to address changed circumstances that were experienced during the next fiscal year or to correct underestimates of vehicle needs that were entered during the previous fiscal year's LTFP process. Further still, the scheduling of the LTFP process can be segmented by vehicle groups or manufacturers. For example, the LTFP process can be run during M7 of FY x for vehicles that are members of Vehicle Class A (or YMMS X, or manufactured by Manufacturer 1) and during M8 of FY x for vehicles that are members of Vehicle Class B (or YMMS Y, or manufactured by Manufacturer 2).

Preferably, the plurality of LTFP tasks shown in Figure 17 have a hierarchical order. This hierarchical order is defined by which tasks must be completed before downstream tasks should be undertaken. Within this order, if Task 1 is upstream from Task 2, and Task 1 has been completed, then a user can begin to work on Task 2. Once Task 2 is completed, a user can still perform additional work on Task 1, but any modifications to Task 1 may require that Task 2 be revisited to account for the modifications in the upstream task. An example of this scenario is preferably the optimal delete point process task (1716) and the deletion distribution task (1718), wherein the optimal delete point process task must be completed for a fleet before a user can begin work on the deletion distribution task. Similarly, if both the optimal delete point process task and the deletion distribution task have been completed by users, but then a user modifies the data entry in the optimal delete point process task, then the deletion distribution task will need to be revisited by a user to assess whether the modifications in the optimal delete point process task necessitate changes in data entry for the deletion distribution task.

Other tasks in the workflow share the same hierarchical order and can be completed independently of each other. For example, the collective tasks of operations 1704, 1706, and 1708 share the same hierarchical order as the task of operation 1710 and the task of operation 1712. However, within the collective tasks of operations 1704, 1706, and 1708, the task of operation 1704 is upstream from both the tasks of operations 1706 and 1708 (wherein the tasks of operations 1706 and 1708 are parallel with each other). Thus, presuming that users have completed the tasks of operations 1704, 1706, 1708, 1710 and 1712, and subsequent to these completions, a user modifies data entry for operation 1704, then users will need to revisit operations 1706 and 1708, but not operations 1710 or 1712. However, it should be noted that the operation 1704 task can be optionally rendered non-modifiable by the software once it has been completed. Also, it should be noted that tasks of operations 1706 and 1708 can be ordered hierarchically such that operation 1706 is upstream from operation 1708.

To keep users apprised of workflow task completion, each operation is preferably assigned a status by the planning software that is indicative of each task's progress toward completion. Preferably, these statuses include an identifier that signifies a task is completed and no more work needs to be done thereon, an identifier that signifies that work has not yet begun on a task, an identifier that signifies work is in progress on a task, and an identifier that signifies that modifications to an upstream task have triggered a need to reevaluate a task. Figure 30(r) and the related process flows describe this aspect of the invention in greater detail. Because of the planning software's ability to manage task statuses, users have the ability to enter data simultaneously for a plurality of tasks. Further still, because of the ability to segment task completion by different groups, regions, etc., the LTFP process of Figure 17 can be accessed simultaneously for a plurality of subfleets within the fleet.

Figure 18 depicts a preferred start screen 1800 for the LTFP process of Figure 17. Through field 400 of screen 1800, the user 1802 can define the relevant fleet of interest for which some aspect of the LTFP process will be performed. User entry within field 400 preferably operates as previously described. Screen 1800 also preferably includes a display section that is arranged in a plurality of columns - a column for describing the different planning steps of LTFP, a column with links for accessing various screens dedicated to various steps of the LTFP process, a column 1822 with links 1824 for accessing reports based on the screens of the LTFP process, a column 1830 which identifies a due date for users to complete the various steps of the LTFP process, and a column 1832 that identifies a status of user action in connection with each step. Figure 30(r) depicts a preferred state diagram for the different statuses that may exist. If no users have taken action on a task, the status is displayed as "not started". If a user has accessed a screen dedicated to an LTFP task and saved/updated his/her work but has not submitted data for use downstream in the LTFP process, the status is displayed as "in progress". Once a user has actually submitted data through a screen for use downstream in the LTFP process, the status is displayed as "submitted". Lastly, if a user reopens a screen dedicated to a step/task whose status is "submitted" and saves data changes to that task, then the displayed status changes to "changed", a status at which it will remain until another submission is performed. This status of "changed" may propagate to upstream or downstream tasks whose status was previously "submitted" if the saved changes would trigger a need to reevaluate those upstream or downstream tasks. Figures 30(j)-(q) depict various process flows for updating task statuses in response to user interaction with the system.

Figure 19 depicts an exemplary screen 1900 for user input to assign YMMSs to vehicle classes. The user can reach screen 1900 in response to selection of link 1804 in screen 1800. Screen 1900 preferably includes a current location display section 400 that functions as previously described. Furthermore, section 1902 provides a user with a view of the general task he/she is performing, the vehicle class into which the screen is configured to assign YMMSs and the user's current location in the fleet. Through field 1904 and "change" button 1906, the user can control the vehicle class into which assignments will be made. Preferably, through field 1904, the user can access a drop down menu that lists the plurality of vehicle classes that are available for selection. Once a vehicle class has been selected, section 1910 will list the YMMSs that are currently members of the selected vehicle class. Section 1912 will list any YMMSs that have not yet been assigned to a vehicle class. If the user wants to remove an assigned YMMS from the selected vehicle class, he/she can do so by selecting that YMMS from within section 1910 and then selecting the "Unassign Selected" button 1914, which will operate to move that YMMS out of section 1910 and into section 1912. If the user wants to assign an unassigned YMMS to the selected vehicle class, he/she can do so by selecting that YMMS from within section 1912 and then selecting the "Assign Selected" button 1916, which will operate to move that YMMS out of section 1912 and into section 1910. Once a user has entered any desired changes for the YMMS-to-vehicle class assignments, the user has an option to select the "save/update" button 1918 or select the "submit for fleet planning" button 1920. Button 1918 is effective to save any changes that the user has made, but is not effective to push those changes such that they will affect downstream tasks in the LTFP process. Essentially, selection of the "save/update" button 1918 will be effective to change the task's status to "in progress". Button 1920 is effective to submit the user's YMMS-to-vehicle class assignments such that those assignments will affect downstream process(and/or upstream processes where appropriate).

Figures 30(a), (1), and (m) illustrate this flow in greater detail.

Once appropriate vehicle class assignments have been made, the user can choose to work on either task 1706 or task 1708. If the user wishes to work on task 1706, he/she can do so by selection of link 1806 in screen 1800. User selection of link 1806 is effective to display screen 2000 of Figure 20(a). Screen 20(a) is a home page for initiating the process of a user to define a desired quantity of vehicles in the rental fleet. User entry in section 400 is effective to define the fleet that will be subject to this process. Furthermore, through field 2002, the user can specify the time period (preferably in terms of fiscal years) for which the user will define the desired fleet size. Preferably, field 2002 includes a drop down menu that can be accessed by the user to list a plurality of fiscal years that are available for selection. Once the user has defined the fleet and specified the appropriate fiscal year via section 400 and field 2002, user selection of button 2004 is effective to display screen 2010 of Figure 20(b).

Screen 2010 is configured to allow the user to enter a desired fleet size for various time subperiods within the time period specified via field 2002. Preferably, these time subperiods are months within the specified fiscal year. From screen 2010, the user has the option to change the specified time period via user entry in field 2002 coupled with selection of the change button 2012. Section 2014 of screen 2010 summarizes the currently defined fleet. Through scroll bar 2050, the user can scroll section 2018 to display any months in the fiscal year that do not fit in a single scroll position.

Section 2018 of screen 2010 is a data table that displays historical fleet size and rental activity data and includes fields for user entry of desired fleet sizes for future months within the specified fiscal year. Preferably, section 2018 is organized in a plurality of rows and a plurality of columns. Columns 2020 correspond to the different months within the specified fiscal year. Row sections 2022 correspond to previous fiscal years progressing to the specified fiscal year. Within each fiscal year row section 2022, there is preferably a row 2024 corresponding to an average daily count of "on rent" vehicles for each day during a particular month. As used herein, an "on rent" vehicle refers to a vehicle that was rented to a customer. Row section 2022 also preferably includes a row 2030 corresponding to an average daily count of the total number of vehicles within the fleet during a particular month. Row section 2022 also preferably includes a row 2026 corresponding to an occupancy percentage for the vehicles within the fleet. This occupancy value represents each month’s percentage of on rent vehicles (row 2024) to total vehicles (row 2030). Lastly, row section 2022 also preferably includes a row 2028 corresponding to the change in the row 2030 values from year-to-year for that month. In the example of Figure 20(b), wherein the sample data shows the same number of vehicles in row 2030 for each month of each year, the values in row 2028 are all zero. However, in typical real world situations where the row 2030 values will fluctuate over time, the row 2028 values will typically be non-zero values.

The display of this historical data in section 2018 allows the user to identify trends in rentals that may help that user to intelligently assess the needs of the rental fleet in terms of quantity. Contributing to the ability to intelligently assess the vehicular quantity needs of the rental fleet is section 2018’s tabular arrangement, which allows the user to efficiently identify both successive month trends in rental activity and monthly year-to-year trends. That is, the user can easily identify the direction of rental activity over consecutive months (for example, to identify whether rental activity has been increasing or decreasing over the past 6 months). The user can also identify whether certain months are particularly busy, quiet, or trending one way or the other (for example, the table may show that rental activity is typically high during May and July but slow during April, regardless of the year).

In the row section 2022 corresponding to the fiscal year specified in field 2002, the row 2024 values for future months are computed as forecasted on rent values based on historical on rent and occupancy data. Any of a variety of techniques can be used to compute these forecasts. However, a preferred technique comprises an on rent forecast calculation based on a state space model that captures and correlates historic patterns in growth trends and seasonality. These values are preferably coupled with an indicator 2040 (for example, a checkmark) to notify the user that these are forecasted values rather than actual historical data. Also, in the row section 2022 corresponding to the fiscal year specified in field 2002, there is preferably a row 2032 that includes fields 2036 for user entry of desired number of "on rent" vehicles for the month. Through field 2036, the user can adjust the forecasted "on rent" value shown in row 2024 for that month and year. Furthermore, in the row section 2022 corresponding to the fiscal year specified in field 2002, there is preferably a row 2034 that includes fields 2038 for user entry of an expected occupancy percentage for the month. Through field 2038, the user can adjust the forecasted occupancy percentage value shown in row 2026 for that month and year. The user may wish to use field 2036 and 2038 to adjust the "on rent" and occupancy percentage values based on his or her business judgment with regard to the needs of the fleet. The row 2028 and 2030 values for the row section 2022 corresponding to future months of the fiscal year specified in field 2002 are automatically computed and displayed based on the values in rows 2032 and 2034.

Once the user has completed his/her estimation of the rental fleets needs via screen 2010, the user can either save/update his/her work via button 2042 or submit his/her work for use downstream in the fleet planning process via button 2044. Figures 30(d), (1), and (m) illustrate this flow in greater detail. Furthermore, the user has the option to export the data on screen 2010 to a spreadsheet program such as Microsoft Excel through selection of button 2016 and/or print the screen.

In an LTFP operation, the user preferably enters the fleet need data in screen 2010 not only for the remainder of the current fiscal year, but also for the next fiscal year (and optionally beyond). As noted, the user display a screen 2010 for entering rental fleet needs for a different fiscal year through appropriate user entry in field 2002.

In addition to defining a desired quantity of vehicles in a fleet for future time periods, it is preferred that users also define a desired mix of vehicles in the fleet for future months across vehicle classes. To define this desired vehicle class mix, the user can select link 1808 in screen 1800. Upon user selection of link 1808, screen 2100 of Figure 21 is displayed. Screen 2100 preferably includes a current location display section 400 and a view section 2102 that summarizes what the user is working on.

Screen 2100 also preferably includes a section 2104 for user entry of a desired fleet mix for a future time period. As used herein "fleet mix" refers to an allocation, for each of a plurality of vehicle classes, of a quantity of vehicles of a particular vehicle class within a fleet that comprises vehicles of a plurality of vehicle classes. The future time period encompassed by screen 2100 preferably covers the remainder of the current fiscal year and the entire next fiscal year (and optionally beyond). However, it should be noted that other time periods could also be used in the practice of the present invention. Section 2104 preferably divides this future time period into a plurality of subperiods, preferably months. However, once again, it should be noted that other time subperiods such as quarters or weeks could also be used. Preferably, a user has completed and submitted data for the time period of interest via screen 2010 before screen 2100 is accessed; however, this need not be the case.

Section 2104 preferably comprises a table arranged in a plurality of rows and a plurality of columns. Column 2106 corresponds to a vehicle class. Column 2108 corresponds to the most recent month immediately prior to the time period of interest. Columns 2110 correspond to the different months of the time period of interest. Row 2112 corresponds to a total sum of the fleet mix percentages entered in the table. Row sections 2114 correspond to different vehicle classes. Each row section 2114 preferably includes two rows - row 2116 and row 2118. In column 2108, row 2116 displays the percentage of vehicles within the fleet that are vehicles of the same class as the vehicle class corresponding to that row section. Row 2118 in column 2108 displays the total count of vehicles within the fleet that are members of the vehicle class corresponding to that row section. The YMMS-to-vehicle class assignments that are made via screen 1900 aid this process. The data in the table at column 2108 serves as historical values that can be used as a baseline for assessing what the future fleet mixes should be. Row 2116 in columns 2110 preferably comprises a field in which the user can enter a desired fleet mix for each vehicle class. The fields in row 2116 can optionally be pre-populated with the mix percentage for that row section in column 2108, which can alleviate the data entry burden on the user if the user desires to adjust less than all of the fields. Row 2118 displays the vehicle quantity for that vehicle class within the fleet based on the specified fleet mix percentage in row 2116. This value can be computed as follows: the row 2118 value for Month x in Fiscal Year y equals the row 2030 value for month x in fiscal year y times the row 2116 percentage value for month x in fiscal year y. In instances where this computed number is not a whole number, the process preferably rounds the computed value to the nearest whole number.

The values in row 2112 represent the sums of the fleet mix percentages in rows 2116 for each month. This sum should equal 100%. In the example where the row values are prepopulated based on the historical data in column 2108, user adjustments in any of the fields for row 2116 may cause the row 2112 sum to depart from 100% for one or more months. The user has an option to correct this deficiency by manually adjusting one or more of the fleet mix percentages until the percentage sum for that month returns to 100%. However, the user also has the option to automatically equalize the fleet mix percentages for the different vehicle classes in a given month via user selection of the "equalize to 100%" button 2120. User selection of button 2120 operates to automatically adjust the unadjusted fleet mix percentages for a month whose fleet mix numbers have been adjusted to cause a departure from the 100% sum to effectuate an equal redistribution of the unadjusted fleet mix percentages such that the fleet mix percentage sum is once again 100%. To perform this equalization, the equalized fleet mix percentages for a given month will be those fleet mix percentages within that month that were not manually adjusted by the user. The equalized fleet mix percentages for a particular vehicle class in a particular month can be calculated as follows:

$$y' = y\left(1 + \frac{a}{b}\right)$$

wherein y' represents the equalized fleet mix percentage value for that class and that month, wherein y represents the unequalized fleet mix percentage value for that class and that month plus, wherein a represents the sum of differences between the modified fleet mix percentage values for that month and that class and the previous values for the modified fleet mix percentage values for that class and that month (a may be a positive or negative number depending on the direction of the modification), and wherein b represents the sum of unequalized fleet percentage values for that month and that class. The table below provides an example of how this equalization process works in an example where the fleet mix percentage value for "Class 1" is modified from 25% to 40%. When equalization is performed, the fleet mix percentage values for Classes 2-6 are recalculated to values as shown below.

| | Original Fleet Mix %s | ***Modified*** **and Unequalized Fleet Mix %s** | **Modified and *Equalized* Fleet Mix %s** |
|---|---|---|---|
| Class 1 | 25% | ***40%*** | 40% |
| Class 2 | 20% | 20% | ***16%*** |
| Class 3 | 20% | 20% | ***16%*** |
| Class 4 | 20% | 20% | ***16%*** |
| Class 5 | 10% | 10% | ***8%*** |
| Class 6 | 5% | 5% | ***4%*** |
| ***Fleet Mix Sum*** | 100% | 115% | 100% |

Figure 30(j) illustrates this equalization process in greater detail.

Using the scroll bars shown in section 2104, the user can adjust section 2104 to display any months and/or vehicle classes in the specified time period that do not fit in a single scroll position. Once the user has completed any data entry that he/she wishes to enter through screen 2100, the user can either save/update his/her work via button 2122 or submit his/her work for use downstream in the fleet planning process via button 2124. Figures 30(e), (k), (1), and (m) illustrate this flow in greater detail. Furthermore, the user has the option to export the data on screen 2100 to a spreadsheet program such as Microsoft Excel or print the screen through selection of button 2016.

Thus, through interaction with screens 2010 and 2100, users have the ability to define the desired size and mix of their fleets for future months, thereby completing one aspect of the LTFP process. While in the embodiment described herein, total quantity forecasts and fleet mix forecasts were performed through separate user interfaces, it should be noted that these two tasks could be combined into a single interface if so desired by a practitioner of the present invention.

Also, it is worth noting that the tasks defined by the screens of Figures 20(a), 20(b), and 21 are preferably performed at a group and/or region level (defined by section 400) within the fleet. For some businesses, each group/ region may utilize a different mapping of YMMSs to vehicle classes. In such instances, it is preferred that a global mapping operation be performed after the completion of tasks 1706 and 1708 to re-map each group/region's YMMS assignments into a global (business organization-wide) assignment of YMMSs to vehicle classes. This re-mapping can be performed automatically based on a global assignment of YMMSs into vehicle classes via a screen such as described for Figure 19. Thus, consistency to a degree can be maintained when performing a gross buy for multiple groups/regions. However, in a preferred system, each group/region will utilize the same mappings of YMMSs to vehicle classes. In the exemplary preferred embodiment described herein, it will be presumed that each group/region utilizes the same mapping of YMMSs to vehicle classes.

Another aspect of the LTFP process involves users forecasting when incoming vehicles will arrive for use in the fleet during the remainder of the current fiscal year. As used herein, an "incoming vehicle" refers to a vehicle that has been ordered for the fleet but has not yet been delivered to the fleet. Typically, the rental vehicle service providers will take delivery of newly ordered vehicles throughout a fiscal year. Therefore, during any given month, it can be expected that one or more new vehicles will arrive for inclusion within a fleet. Through process 1710 of Figure 17, users of the inventive LTFP system can quantify these expected incoming vehicles for the remainder of the current fiscal year so that the LTFP process may take this important data into consideration. To begin step 1710, a user selects link 1810 in screen 1800. Upon user selection of link 1810, screen 2200 of Figure 22(a) is displayed.

Screen 2200 serves as a home page for the incoming vehicles planning process. Current location display section 400 operates as previously described. Section 2202 provides a summary view of the task at hand for the user. Section 2204 summarizes the total number of expected incoming vehicles for each vehicle class within the fleet, as retrieved from database 100 and/or entered by users (a process which will be described below in connection with Figure 22(b)). Section 2204 is preferably arranged in a plurality of rows and columns. Column 2206 corresponds to the different vehicle classes for the fleet. Column section 2208 corresponds to the current number of in service vehicles (column 2220) and new car stock (NCS) (column 2222) for each vehicle class. An NCS vehicle is a vehicle that has been received into the fleet and counts toward the current fleet size, but has not yet been put into use in the fleet. Columns 2210 correspond to months of the remainder of the current fiscal year. Column 2212 corresponds to a sum of the total number of expected incoming vehicles over all of the months comprising the remainder of the current fiscal year, and column 2214 corresponds to a status for user entry of incoming vehicle counts for each vehicle class. These statuses are also subject to the state diagram shown in Figure 30(r), with the "completed" status taking the place of the "submitted" status.

The values in row 2216 of section 2204 correspond to summation values for each column's displayed data values across the multiple vehicle classes. Each row 2218 corresponds to a different vehicle class, with the data values populating the column 2210 entries in rows 2218 corresponding to a total number of expected incoming vehicles for each vehicle class during each month. Scroll bar 2228 can be used to scroll down to additional vehicle class rows that may be present in section 2204. Each vehicle class in row 2218 that is listed in column 2206 is preferably user selectable to display a screen 2240 as shown in Figure 22(b) that corresponds to that vehicle class.

As shown in Figure 22(b), screen 2240 is configured to allow the user to enter an expected number of incoming vehicles of the selected vehicle class for each month during the remainder of the current fiscal year. Field 2242 identifies the selected vehicle class and is configured to allow the user to change the selected vehicle class to a different vehicle class (in conjunction with "change" button 2244). Section 2246 provides a summary view of where the user is in the process.

Section 2248 of screen 2240 comprises a table that lists, under column 2250, the YMMSs in row sections 2260 that are members of the selected vehicle class. The data values in column section 2252 identify the current quantity of vehicles for each YMMS that are in service for the fleet (column 2262) and the current quantity of new car stock (NCS) vehicles for each YMMS that are in the fleet (column 2262). Each column 2254 corresponds to a different month during the remainder of the current fiscal year. For each YMMS, column 2254 includes two rows. Row 2266 displays an initial estimate of the total number of incoming vehicles that are members of that YMMS for that month. The row 2266 values are retrieved from fleet database 100 which stores such values based on a previously conducted assessment of expected incoming vehicle deliveries. Row 2268 for each YMMS comprises a field in which the user can enter an adjusted estimate of the total number of incoming vehicles that are members of that YMMS for that month. The values in the fields of each row 2268 are preferably prepopulated to match their corresponding row 2266 values.

The data values in row 2258 represent the summations of each column's data values across all of the YMMSs. The data values in column 2256 represent summations of the row 2268 values for each YMMS across the remaining months of the current fiscal year.

Once the user has completed any data entry that he/she wishes to enter through screen 2240, the user can either save/update his/her work via button 2270 or submit his/her work for use downstream in the fleet planning process via button 2272. Figures 30(c), (1), and (m) illustrate this flow in greater detail. Furthermore, the user has the option to export the data on screen 2240 to a spreadsheet program such as Microsoft Excel or print the screen through selection of button 2016.

User selection of button 2272 is effective to update section 2204 (shown in Figure 22(a)) to reflect the monthly incoming vehicle values newly entered for that vehicle class by the user. Before the user can submit the full incoming vehicles plan to the system for downstream use in the LTFP process, the user needs to complete screen 2240 for each vehicle class listed in section 2204. Once the status value in column 2214 for each listed vehicle class is "completed", then the user can select button 2230 to submit the incoming vehicles plan for the fleet to the system for downstream use in the LTFP process.

Another aspect of the preferred LTFP process involves the user performing a CGF analysis on the YMMSs corresponding to vehicles within the fleet to assess which vehicles should be deleted from the fleet during the remainder of the current fiscal year. As a beginning step in this process, the user enters residual value forecasts for the YMMSs within each vehicle class in a manner as described above in connection with Figures 6 and 7. To initiate residual value entry, the user selects link 1812 from screen 1800, thereby causing screen 2300 of Figure 23(a) to be displayed. Screen 2300 operates in the manner described above for screen 214 of Figure 6. Screen 2300 also includes a "view/edit worksheet" button 2302 that is effective, upon user selection, to display screen 2310 of Figure 23(b).

Screen 2310 operates in the manner described above for Figure 7(a). However, unlike the example of Figure 7(a) which provides for user entry of residual values for 12 months into the future, screen 2310 of Figure 23(b) preferably provides for user entry of residual values for the selected YMMS 2308 for the remainder of the current fiscal year and throughout the next fiscal year. With respect to the historical data that is displayed in table 750 of screen 2310 in Figure 23(b), it matches that of Figure 7(a). Optionally, rather than requiring the user to enter a residual value estimate for each month into the future, screen 2310 can be configured to include residual value entry field 734 for only a select subset of the future months, in which case the entered residual values will be used to define residual values for multiple months (including applicable months for which the user did not enter a residual value), or interpolation can be used to define the residual values for the unentered months using the user-entered residual value data. Once the user has completed residual value entry for a selected YMMS, the user can jump to a screen for another YMMS in the selected vehicle class via link 2320 (or select another YMMS in list 710). Once all of the YMMSs for that vehicle class have had their residual values entered by a user, the "update residuals" button 738 can be selected to continue the CGF aspect of the LTFP process. Figures 30(b) and (1) illustrate this flow in greater detail.

A user can begin the CGF aspect of the LTFP process by selecting link 1814 in screen 1800. User selection of link 1814 is effective to display screen 2400. Screen 2400, which operates in the manner described for screen 222 of Figure 10 serves as a home page for the CGF process. Screen 2400 also includes a summary display section 2402 that lists the CGF analysis status for each vehicle class within the fleet. Once the user has completed the CGF analysis for all of the vehicle classes within the fleet, the user can select button 2406 to submit the CGF analysis results for downstream use in the LTFP process. To perform a CGF analysis on the YMMSs of a vehicle class, the user can select a vehicle class via section 1000 and then select the "view/edit worksheet" button 2404 (or select one of the vehicle classes listed in section 2402).

User selection of button 2404 is effective to display screen 2410 of Figure 24(b). Section 2412 summarizes the task at hand for the user, including an identification of the time period covered by the CGF analysis (preferably, the remaining months of the current fiscal year). Section 2414 summarizes a variety of data relevant to the CGF analysis. Item 2416 in section 2414 identifies the current count of vehicles that are members of the selected vehicle class in the fleet. This value will match the value shown in row 2118, column 2108 for that vehicle class in Figure 21. Item 2418 in section 2414 identifies the count of estimated incoming vehicles to the fleet that are members of the selected vehicle class. This value will match the value shown in row 2258, column 2256 of Figure 22(b) for the selected vehicle class. Item 2420 in section 2414 identifies the projected fleet size for vehicles of the selected vehicle class. This value will match the sum of the values for item 2416 and 2418. Item 2422 in section 2414 identifies the desired fleet size for vehicles that are members of the selected vehicle class at the end of the last month of the current fiscal year. This value will match the value shown in row 2118 of month 12 for the current fiscal year for the selected vehicle class. Item 2424 in section 2414 identifies the total number of vehicle deletions that are planned for the selected vehicle class by the end of month 12 for the current fiscal year. This value will be the difference between the item 2420 value and the item 2422 value. Item 2426 in section 2414 identifies a current count of vehicles that have been flagged for deletion within section 1120 of screen 2410. Item 2428 in section 2414 identifies the difference between the item 2424 value and the item 2426 value. Preferably, the item 2428 will reach zero once the user has completed data entry within screen 2410. Section 2430 of section 2414 breaks down the count of model years within the selected vehicle class that will remain in the fleet following the deletions entered by the user in section 1120.

Section 1120 of screen 2410 preferably operates in the manner described in connection with Figure 11(a). The YMMSs that are listed in section 1120 are preferably sorted by CGF value such that the YMMSs with the highest CGF are listed higher than YMMSs with a lower CGF value. The data values in column 2440 identify the total number of vehicles that are members of each listed YMMS as of the end of month 12 of the current fiscal year. These values can be determined as the sum of vehicles listed in the same row's mileage bands. The data values in column 2442 identify the number of those vehicles in the vehicle counts of column 2440 that are incoming vehicles. These data values can be determined from the corresponding entries in column 2256 for each YMMS. Through fields 2446 of column 2444, the user can identify a quantity of vehicles for each YMMS that are to be deleted from the fleet by the end of month 12 of the current fiscal year. Because of the CGF-oriented display of section 1120, the user can make an informed decision as to how many of each YMMS should be deleted to cost effectively manage the business. The values in column 2448 of section 1120 represent the total number of vehicles that are members of each listed YMMS that will remain in the fleet at the end of month 12 of the current fiscal year after taking into consideration the planned deletions. The values will match the difference between the column 2440 value and column 2444 value for each listed YMMS.

Once the user has completed any entry of desired deletes in screen 2410 for each of the YMMSs within the selected vehicle class, the user can either save/update his/her work via button 2450 or submit his/her work for use downstream in the fleet planning process via button 2452. Figures 30(f), (1), and (m) illustrate this flow in greater detail. Furthermore, the user has the option to export the data on screen 2410 to a spreadsheet program such as Microsoft Excel or print the screen through selection of button 2016.

User selection of button 2452 is effective to update section 2402 of screen 2400 (shown in Figure 24(a)) to reflect the CGF analysis conducted for the selected vehicle class. Before the user can submit the full report of planned deletes for the remainder of the current fiscal year to the system for downstream use in the LTFP process, the user needs to complete screen 2410 for each vehicle class within the fleet. Once the status value in column section 2402 for each listed vehicle class is "completed", then the user can select button 2406 to submit the planned deletes for the remainder of the current fiscal year to the system for downstream use in the LTFP process.

Another aspect of the LTFP process preferably comprises simulating aging of the vehicles within the fleet during the course of the next fiscal year (including the expected incoming vehicles for the next fiscal year) and identifying preferred deletion points within the next fiscal year for removing some number of vehicles from the fleet, referred to herein as an "optimal delete point" process. To begin this task, the user preferably selects link 1816 in screen 1800.

User selection of link 1816 is effective to display screen 2500 of Figure 25(a). Through screen 2500, the user can define, via section 400, the fleet for which the optimal delete point process will be applied. Furthermore, in field 2502, the user can select the vehicle class for which the optimal delete point process will be applied. Through field 2504, the user can define an average number of miles per month that he/she expects that vehicles of the selected vehicle class will experience over the course of the next fiscal year. This value will affect the aging simulation on the fleet vehicles. Lastly, through field 2506, the user can define an expected selling cost for a vehicle that represents the expected overhead costs that will be incurred when attempting to sell a deleted vehicle on the used vehicle market.

Section 2510 of screen 2500 lists the status of the optimal delete point process for each vehicle class within the fleet. Once the user has entered the necessary information in section 400 and fields 2502, 2504, and 2506, the user can select the "view/edit worksheet" button to display screen 2520 of Figure 25(b). Alternatively, the user can select on the vehicle classes listed in section 2510 to begin the optimal delete point process for that vehicle class.

Screen 2520 is configured to allow users to define a desired number of deletions from the fleet over the course of the next fiscal year. In the preferred embodiment, these deletions are specified on a per quarter basis; however, it should be noted that other intervals may be used (e.g., monthly). Section 2524 of screen 2520 lists the YMMSs 2526 that have been assigned to the selected vehicle class. Preferably, the user selects one of these YMMSs and projects the deletions for each of the YMMSs within the selected vehicle class.

Section 2528 provides a summary view of defining parameters for the optimal delete point process. Section 2530 provides a running summary of the deletions that have already been scheduled for the upcoming fiscal year for the specified fleet (row 2534), within the selected vehicle class of the fleet (row 2536), and within the YMMS that is currently selected via section 2524 (row 2538). The columns 2532 of section 2530 break these deletions down by quarters for the upcoming fiscal year, with the final column displaying the fiscal year deletion sum for each row.

The user inputs the number of vehicles to be deleted via section 2540. The subject YMMSs of section 2540 are broken into groups on the basis of the quarter and fiscal year in which they were purchased. Rows 2560 in section 2540 correspond to different quarters in the upcoming fiscal year during which the fleet vehicles can be sold (see column 2544). The data for each row in column 2546 corresponds to an average number of months in service for the YMMSs purchased in the pertinent quarter and fiscal year. Thus, as shown in Figure 25(b), for YMMS vehicles purchased in Q4 of FY06, the average number of months in service for those vehicles at the end of Q1 FY07 will be 3 months. Similarly, the average number of months in service for those vehicles at the end of Q2 FY07 will be 6 months, and so on for the remainder of the upcoming fiscal year. The data values in column 2548 represent the projected number of miles that the YMMS vehicles will have on them at the end of the corresponding quarters. This average mileage is calculated as the average months in service value multiplied by the average mileage value entered in field 2504 of screen 2500. The data values in column 2550 represent the count of vehicles that are members of the selected YMMS and were purchased in Q4 of FY06. The count for the first quarter of the upcoming fiscal year represents the number of vehicles that are projected to be members of the selected YMMS as of that quarter. Such counts are readily determinable from previous entries in the LTFP process. The count for subsequent quarters will be reduced by the number of quarterly deletes defined by the user in fields 2570. The data values in column 2554 of section 2540 identify the expected depreciation amounts that the subject YMMSs will experience for the corresponding quarter. These depreciation amounts can be calculated as the difference between the known average unit cost for vehicles of the applicable YMMS that were purchased during the applicable quarter and fiscal year and the applicable residual value for the applicable YMMS purchased during the applicable quarter divided by the applicable average months in service. The data values in column 2556 express these depreciation amounts divided by the unit cost (i.e., in terms of depreciation percentages).

A useful tool for assessing how many and when vehicles are to be deleted is cycling analysis. As used herein, "cycling analysis" refers to a process of comparing the costs to maintain a vehicle in the fleet for a time duration with the costs to cycle new vehicles into the fleet at different points in time during that time duration. By selection of link 2582 in column 2580, the user can access a report that details a cycling analysis. Figure 27(a) depicts an exemplary cycling analysis report 2700. Section 2702 of this report summarizes some of the parameters that control the cycling analysis. Rows 2704 identify the YMMSs for which the report is applicable. The values in column 2706 identify the known average original unit cost for each listed YMMS. The data values in column 2710 identify the cost to maintain a vehicle that is a member of the listed YMMS for a full time period (15 months in this example). This value can be calculated as the original unit cost for that YMMS (column 2706 value) minus the residual value for that YMMS as of the final month of the specified time period. As used herein, original unit cost refers to the price that was paid to purchase the vehicle for the fleet. The data values in column 2708 identify the cost to delete and cycle a new vehicle into the fleet at some point during the specified time period (after 8 months in this example). This value can be computed as the original unit cost for that YMMS (column 2706 value) minus the residual value for that YMMS as of the first sell month of the specified time period plus the selling cost entered by the user in field 2506 plus the expected unit cost for a replacement vehicle minus the residual value for the replacement vehicle as of the final month of the specified time duration. The expected unit cost may be the same as the original unit cost or it may include an adjustment to the original unit cost that is based on an assessment of market conditions. Optionally, the report can also include a column that identifies the difference for each YMMS's column 2708 and 2710 values. Also, it should be noted that while the example herein discloses an 8 month/7 month versus 15 months cycling analysis, other time durations and time divisions could be used. For example, a 6 month/6 month-to-12 month cycling analysis, a 9 month/9 month-to-18 month cycling analysis, etc.

Based on the user's business judgment, as aided by the displayed depreciation data, the user can specify in fields 2570 a total quantity of deletes for the subject YMMSs by quarter. Once the user has completed this task for a YMMS, he/she can select link 2576 to move on to the next YMMS in section 2524 to repeat this process, or click on another YMMS listed in section 2524.

Once the user has completed any entry of desired deletes in screen 2520 for each of the YMMSs within the selected vehicle class, the user can either save/update his/her work via button 2572 or submit his/her work for use downstream in the fleet planning process via button 2574. Figures 30(g), (1), and (m) illustrate this flow in greater detail. Furthermore, the user has the option to export the data on screen 2520 to a spreadsheet program such as Microsoft Excel or print the screen through selection of button 2016.

Returning to Figure 25(a), user selection of button 2574 is effective to update section 2510 of screen 2500 to reflect the optimal delete point process conducted for the selected vehicle class. Before the user can submit the full report of planned deletes for the upcoming fiscal year to the system for downstream use in the LTFP process, the user needs to complete screen 2520 for each vehicle class within the fleet. Once the status value in section 2510 for each listed vehicle class is "completed", then the user can select button 2512 to submit the planned deletes for the upcoming fiscal year to the system for downstream use in the LTFP process.

Having forecasted a number of deletes for the next fiscal year by quarter, step 1718 of Figure 17 operates to distribute those quarterly deletes over each quarter's months. This process is referred to herein as the "deletion distribution" process. To begin the deletion distribution process, the user selects link 1818 from within screen 1800.

Upon user selection of link 1818, screen 2600 of Figure 26 is displayed. Section 2602 of screen 2600 provides users with a summary view of select pertinent information. Within section 2604 of screen 2602, the user can distribute quarterly deletes over each quarter's months as shown via field 2614. Section 2604 is preferably arranged with row sections 2612 that correspond to the different vehicle classes within the fleet. Scroll bar 2620 can be used to access fields 2614 for additional vehicle classes within the fleet that are not shown in the initial section view. Section 2604 also includes column sections 2606 that correspond to the different quarters of the upcoming fiscal year. Scroll bar 2618 can be used to access subsequent quarters that are not shown in the initial section view. Each column section 2606 includes columns 2608 corresponding to the total number of deletes for the quarter that are to be distributed, columns 2610 corresponding to the different months of the quarter, and a column that identifies the total number of deletes that the user has in fact distributed among the months of each quarter.

Each row section 2604 preferably includes a row in which the change in fleet size for the pertinent vehicle class is identified from month to month, based on data previously determined by upstream components of the LTFP process. This data serves as an aid to the user when the user decides how to distribute the deletions. Another row in each row section is dedicated to field 2614 in which the user specified each month's deletion totals. Lastly, a row 2618 can be provided in each row section 2612 corresponding to a count of vehicles that are to be double-cycled. As used herein, "double-cycling" refers to the practice of deleting a vehicle in the same fiscal year that it was received into the fleet and replacing that vehicle within the fleet during the same fiscal year. Generally, double-cycling will not occur in the first quarter of a fiscal year, so row 2618 in the column section 2606 for the first quarter of the upcoming fiscal year is left blank. However, for subsequent quarters in the upcoming fiscal year, fields 2616 are provided in row 2618, through which the user can specify a desired number of vehicles to be double-cycled for each month.

To aid the user in assessing how many vehicles should be double-cycled in a given month, the user can preferably access a double-cycling analysis report 2700 as shown in Figure 27 via selection of a "report" link in rows 2618 for each vehicle class. Preferably, report 2750 computes and displays a comparison between the expected cost to run an exemplary YMMS that has been assigned to a vehicle class of interest for the full 12 months of the upcoming fiscal year versus the cost to sell that YMMS after 6 months of the upcoming fiscal year, buy a new vehicle of that YMMS and run it for the remaining 6 months of the upcoming fiscal year. In cases where the user believes that it will be more cost effective for the business to double cycle some number of vehicles, he/she can then do so via field 2616 in screen 2600. The 6-6 double-cycle cost of column 2752 can be calculated as (unit cost of the current fleet vehicle minus the residual value at 6 months plus the selling cost (as entered by the user in field 2506)) plus (the expected unit cost of the replacement vehicle at month 6 minus the residual value at 6 months for that vehicle). The 12 month run cost in column 2754 can be calculated as the unit cost of the current fleet vehicle minus the residual value at 12 months for that vehicle. The difference value in column 2756, which equals the column 2752 value minus the column 2754 value, can be a valuable indicator to users with respect to whether double-cycling should be implemented.

Once the user has completed the deletion distribution process in screen 2600, the user can either save/update his/her work via button 2622 or submit his/her work for use downstream in the fleet planning process via button 2624. Figures 30(h), (1), and (m) illustrate this flow in greater detail. Furthermore, the user has the option to export the data on screen 2600 to a spreadsheet program such as Microsoft Excel or print the screen through selection of button 2016.

While the preferred LTFP process divides the optimal delete point process and the deletion distribution process into separate interface screens, it should be noted that the functionality of these two processes can be consolidated into a single process.

After the user has completed the deletion distribution process, a user is now ready to forecast the gross vehicle buy amount for the fleet during the upcoming fiscal year. This operation, which is shown as step 1720 in Figure 17, can be initiated by user selection of link 1820 from within screen 1800.

Upon user selection of link 1820, the screen 2800 of Figure 28 is displayed. Section 2802 of screen 2800 provides the user with a summary display of various select information. The user can also specify the fleet of interest via appropriate interaction with section 400.

Section 2804 displays the forecasted vehicle buy for the upcoming fiscal year broken down by quarter and month. Row sections 2820 correspond to different vehicle classes within the fleet. Column sections 2808 correspond to different quarters of the upcoming fiscal year. Each column section is further divided into month columns 2810 and a quarterly total buy column 2812. Row 2814 corresponds to buy totals for the different quarters that has been summed across all vehicle classes within the fleet. Row 2816 corresponds to user-adjusted buy totals for the different quarters that has been summed across all vehicle classes within the fleet. Each row section 2820 is preferably divided into a row 2822 corresponding to the computed vehicle buy forecast and a row 2824 corresponding to a user-adjusted vehicle buy forecast. Scroll bars 2828 and 2830 can be used to adjust the views within section 2804.

The data values for each row section 2820 within column 2806 represents the forecasted fleet size for each vehicle class at the end of the previous fiscal year. These values can be readily calculated in view of the known current fleet size, the specified incoming vehicles for the remainder of the current fiscal year, and the planned deletes for the remainder of the current fiscal year. Furthermore, the monthly data values in row 2822 for each vehicle class can be readily calculated as x+y+d-z, wherein z represents the known end fleet size for the previous month, wherein x represents the desired monthly quantity of vehicles for each vehicle class as defined via screen 2100 of Figure 21, wherein y represents the planned monthly deletes as defined by the deletion distribution process of Figure 26, and wherein d represents the quantity of double-cycles (row 2616) for the applicable month. The data values in columns 2812 for rows 2822 represent the quarterly sum of forecasted vehicle buys for each quarter's constituent months.

Through fields 2826 within rows 2824 of section 2804, the user preferably has the option to adjust the forecasted number of monthly vehicle buys for the upcoming fiscal year. The user can make these adjustments based on his/her business judgment as to the needs of the fleet. Once the user is satisfied as to the quality of the forecasted vehicle buys for the upcoming fiscal year, he/she can submit this vehicle buy data for downstream processing via selection of "submit to corporate" button 2834. If the user does not yet wish to submit the buy forecasts, but does want to save the work done in screen 2800 (such as any adjustments that may have been made), the user can do so by selecting "save/update" button 2832. Figures 30(i), (1), and (m) illustrate this flow in greater detail.

Upon completion and submission of the data in screen 2800, a user will have effectively completed the LTFP process. From this point, the forecasted gross buy forecasts can be used by persons within a vehicle acquisition unit of the business to begin the process of negotiating the placement of vehicle orders with vehicle sources. In some instances, the personnel of the vehicle acquisition unit may begin such a process after gross buy forecasts are submitted for all groups within the business. Through the LTFP process of the present invention, businesses can thus intelligently and effectively pursue the vehicle acquisition process in a consolidated rather than piecemeal manner.

Another aspect of the LTFP process that bears discussion is the ability to generate reports that detail the data submissions involved in LTFP's constituent tasks. Figure 29 depicts an exemplary screen 2900 from which such reports can be accessed via user selection of links 2904 in section 2902.

While the present invention has been described above in relation to its preferred embodiment, various modifications may be made thereto that still fall within the invention's scope, as would be recognized by those of ordinary skill in the art upon review of the teachings herein. For example, while the preferred embodiment is concerned primarily with rental vehicles, the present invention can also be practiced in connection with calculating normalized historical sales prices and CGFs for leased vehicles. Also, while YMMS serves as convenient criteria for distinguishing between different vehicle types in North America, when dealing with fleets located in countries outside North America, other criteria could be useful. For example, in the United Kingdom, effective criteria would include registration year, registration letter, make, model, spec year, trim, engine size, horsepower, series, gearbox, fuel type, etc. In Ireland, effective criteria would include registration year, spec year, make, model, trim, engine size, horsepower, series, gearbox, fuel type, etc. In Germany, effective criteria would include registration year, spec year, make, model, series, engine size, kilowatts, trim, gearbox, fuel type, etc. Further still, it is worth noting that different countries may have different factors (such as taxing practices) that affect values such as original cost or replacement costs for vehicles. Also, it is worth noting that the display tables described herein that are arranged in rows and columns can be inverted such that what is disclosed herein as being included in rows is displayed in columns, and vice versa, as would be readily understood by those having ordinary skill in the art. Furthermore, while the residual values described herein are preferably user-defined, it should be noted that software can also be configured to automatically compute residual value estimates for future months based on the historical sales data. In such instances, these system-generated residual values can be displayed to the user and optionally the user can be given the opportunity to adjust these system-generated residual values if the user's business judgment feels that an adjustment should be made. As such, the full scope of the present invention is to be defined solely by the appended claims and their legal equivalents. **APPENDIX A** This appendix describes a preferred technique for creating a cost per mile table. Figure 15 depicts a flowchart for this process. In order to build the tables containing the vehicle values at different mileage bands, the following steps are performed: 1. Pull vehicle sales data from a database of vehicle sales supplied by providers such as NAAA (via NADA) and/or other industry sources. 2. Filter for sales for model years 1998 and later. 3. Filter for sales type of D (dealer), F (fleet) or M (manufacturer). 4. Filter to remove outlying data such as extremely high or low sale prices. 5. Construct three mileage bands: 1) Less than or equal to 36,000 miles 2) 36,001 - 60,000 miles 3) More than 60,000 miles Sort sales data into the three mileage bands. 6. Count total sales in each mileage band at the make model (MM) level. 7. Identify the age (expressed as a month) of each MM with the most sales. These months are used in step 8 when generating the mileage profile for the MM. 8. For each MM within each mileage band, and for the determined month's sales, fit a statistical model where sales price is regressed on linear splines of mileage, indicators of the month sold, indicators of model years, and indicators of series to arrive at values for $\beta_0$, $\beta_1$, $\beta_2$, $\beta_3$, $\delta_k$, $\gamma_k$, and $\lambda_k$. $\beta_0$ is a general reference level parameter. $\beta_1$, $\beta_2$, and $\beta_3$ are estimated mileage band adjustment parameters. The parameter $\delta_k$ is an adjustment parameter estimated from the pertinent sales data to adjust the level of the average sales price for month k (month k being within the sales months applicable to a particular MM). The parameter $\gamma_k$ is an adjustment parameter estimated from the pertinent sales data to adjust the level of the average sales price for series k (series k being within the various series applicable to a particular MM), and wherein $\lambda_k$ is an adjustment parameter estimated from the pertinent sales data to adjust the level of the average sales price for model year k (model year k being within the model years applicable to a particular MM). This statistical model is an additive model with no interaction terms. From this fit, a mileage profile is generated where the month is fixed as mentioned in the previous step. Using the values determined for $\beta_0$, $\beta_1$, $\beta_2$, $\beta_3$, $\delta_k$, $\gamma_k$, and $\lambda_k$, a Mean_Sales_Price can be determined for a given mileage for each MM in accordance with the statistical model. A preferred statistical model is as follows for a given MM, wherein parameters $\beta_0$, $\beta_1$, $\beta_2$, $\beta_3$, $\delta_k$, $\gamma_k$, and $\lambda_k$ are estimated by minimizing the least squares error, I is the indicator function, the notation (miles - 36000), denotes the positive part of the expression inside the parentheses:

$$\text{Mean_Sales_Price} = \beta_0 + \beta_1 \times miles + \beta_2 \times (miles - 36000)_+ + \beta_3 \times (miles - 60000)_+ \\ + \sum_{month_k} \delta_k \times I_{month_k}(month) + \sum_{series_k} \gamma_k \times I_{series_k}(series) + \sum_{\text{model_yr}_k} \lambda_k \times I_{\text{model_yr}_k}(\text{model_yr})$$

See Neter, John and Wasserman, William, Applied Linear Statistical Models, Richard Irwin, Inc., 1974 for a discussion of the statistical techniques used in this step. 9. Identify any MMs with fewer than 200 sales. For such MMs, rollup its sales data to rollup the MM's mileage profile to the vehicle class level by averaging over the profiles of the MMs with sufficient data (more than 200 per mm) sharing that vehicle class. 10. Identify all individual MM in the fleet of interest. 11. Associate the generated mileage profiles for each MM/vehicle class and each mileage band with the MMSs in the current fleet. 12. Perform quality checks on the profiles whose MM matches a MM in the fleet of interest. This quality check includes checking that the mileage profile is montonically decreasing (by identifying positive mileage coefficients) and identifying any unusually steep slopes (by identifying outlying mileage coefficients compared to coefficients associated with similar make models), checking whether the profiles extends across all mileage bands. 13. From these MMs and vehicle classes, generate the look up table for fleet MMSs containing the mileage profiles. 14. If necessary, consult with remarketing personnel for advice on mapping unusual vehicle classes to a vehicle class such that sufficient data is available for the regressions. The following numbered paragraphs (paras.) contain statements of broad combinations of the inventive technical features herein disclosed:-1. A system for determining a normalized sales price as of a time period for a representative member of a selected vehicle type group, the system including a computer configured to access a database, the database storing historical sales data for members of said group, said historical sales data including actual sales prices, and said computer being further configured to normalize each of said actual sales prices to a representative member of said group and then combine said normalized actual sales prices to determine at least one normalized sales price for said representative member. 2. The system of paragraph 1 wherein said historical sales data for each member of said group includes an associated time of sale odometer reading, and wherein said representative member is determined by combining the time of sale odometer readings of said members. 3. The system of paragraph 2 wherein said computer is further configured to normalize said actual sales prices by adjusting each actual sales price corresponding to its associated time of sale odometer reading as compared said representative member. 4. The system of paragraph 3 wherein the selected vehicle type group is a YMMS. 5. The system of paragraph 3 wherein said computer is configured to combine said normalized actual sales prices by averaging them. 6. The system of paragraph 5 wherein said database further includes a cost per time of sale odometer reading table, and wherein said computer is configured to access said cost per time of sale odometer reading table to normalize said actual sales prices. 7. The system of paragraph 6 wherein said computer is further configured to display said normalized sales price to a user. 8. A method for determining a normalized sales price as of a time period for a representative member of a selected vehicle type group, the method comprising: accessing stored historical sales data for members of said group, said historical sales data including actual sales prices; normalizing each of said actual sales prices to a representative member of said group; and combining said normalized actual sales prices to determine at least one normalized actual sales price for said representative member. 9. The method of paragraph 8 wherein historical sales data for each member of said group includes an associated time of sale odometer reading, and wherein the method further comprises: determining said representative member by combining the time of sale odometer readings of said members. 10. The method of paragraph 9 wherein said normalizing step further comprises normalizi.ng said actual sales prices by adjusting each actual sales price corresponding to its associated time of sale odometer reading as compared to the said representative member. 11. The method of paragraph 10 wherein the selected vehicle type group is a YMMS. 12. The method of paragraph 10 wherein the step of combining said normalized actual sales prices comprises combining said normalized actual sales prices by averaging them. 13. The method of paragraph 12 wherein said normalizing step includes accessing a cost per time of sale odometer reading table to determine an adjustment for use in normalizing said actual sales prices. 14. The method of paragraph 13 further comprising displaying said normalized sales price to a user: 15. A system for providing a user with historical sales data for a plurality of vehicles comprising a fleet, the system comprising: a database configured to store actual sales data for a plurality of vehicles that have previously been sold; and a computer in communication with the database, the computer being configured to create a page for display to a user, the page including a display of a plurality of historical sales prices for at least one vehicle type that is similar to a user-selected vehicle type, wherein the displayed historical sales prices are calculated from the stored actual sales data and comprise historical sales prices for the at least one similar vehicle type that have been normalized to an average time of sale odometer reading. 16. The system of paragraph 15 wherein the stored actual sales data comprises stored actual sales data for a plurality of fleet vehicles, wherein the stored actual sales data comprises, for each fleet vehicle that has previously been sold, an identification of a vehicle type therefor, a sales price therefor, and an odometer reading therefor at the time of sale, and wherein the computer is further configured to calculate the historical sales prices by: calculating an average odometer reading at the time of sale for a plurality of the previously sold vehicles of a vehicle type group, the vehicle type group comprising at least one vehicle type that is the same or similar to the user-selected vehicle type; for each vehicle type of the vehicle type group, (1) normalizing the stored sales prices for a plurality of previously sold vehicles of that vehicle type such that the stored sales prices are normalized to the calculated average odometer reading, and (2) calculating an average normalized sales price from the normalized sales prices. 17. The system of paragraph 16 wherein the computer is further configured to normalize the stored sales prices using a cost per time of sale odometer reading data table. 18. The system of paragraph 17 wherein the vehicle types are specified in terms of a year, make, model, and series (YMMS). 19. The system of paragraph 18 wherein the user-selected vehicle type comprises a current year YMMS, wherein the vehicle type group is a YMMS group, and wherein the YMMS group comprises the current year YMMS and at least one other YMMS similar thereto. 20. The system of paragraph 19 wherein the stored actual sales data further comprises, for each fleet vehicle that has previously been sold, a month of sale, and wherein the computer is further configured to calculate the historical sales prices on a per month basis such that (1) each calculated average time of sale odometer reading represents the average time of sale odometer reading for a plurality of previously sold vehicles of the YMMS group that were sold in a particular month across a plurality of years of sale and (2) each YMMS's average normalized sales price represents that average normalized sales price for a plurality of previously sold vehicles of that YMMS that were sold in a particular month. 21. The system of paragraph 20 wherein the computer is further configured to calculate, for a plurality of months, a month-to-month change in the average normalized sales price for each YMMS within the YMMS group. 22. The system of paragraph 21 wherein the page presents the calculated average normalized sales prices in a table comprising a plurality of rows and a plurality of columns, wherein each column corresponds to a month of the year, wherein at least one row displays the calculated average time of sale odometer reading for each month, and wherein at least one row corresponds to a previous year YMMS within the YMMS group and displays the average normalized sales price for that previous year YMMS for each month. 23. The system of paragraph 22 wherein at least one additional row of the table corresponds to another previous year YMMS within the YMMS group and displays the average normalized sales price for the another previous year YMMS for each month. 24. The system of paragraph 23 wherein the rows are arranged chronologically by the year corresponding to each row's YMMS. 25. The system of paragraph 22 wherein the table further comprises a row for each YMMS within the YMMS group, these plurality of rows displaying the calculated month-to-month average normalized sales price changes. 26. The system of paragraph 25 wherein the computer is further configured to calculate, for a plurality of months, a year-to-year change in a given month's average normalized sales price for a particular YMMS within the YMMS group relative to that given month's average normalized sales price for a YMMS of the year previous to that particular YMMS. 27. The system of paragraph 26 wherein the table further comprises another row for each YMMS within the YMMS group, these plurality of another rows displaying the calculated year-to-year average normalized sales price changes. 28. The system of paragraph 24 wherein the table further includes, in a row corresponding to the user-selected YMMS, at least one field for user entry of a residual value estimate for the user-selected YMMS, wherein the residual value estimate is applicable to a current or future month. 29. The system of paragraph 28 wherein the page further includes a link selectable by the user for to display another page, the another page presenting a cost going forward (CGF) analysis to the user that is applicable to the user-selected YMMS, the CGF analysis being based at least in part upon the at least one user-entered residual value estimate. 30. The system of paragraph 29 wherein the CGF analysis is further based at least in part upon a user-specified projection period. 31. The system of paragraph 19 wherein the computer is further configured to limit which previously sold fleet vehicles are considered in the historical sales price calculations on the basis of at least one user-specified criteria. 32. The system of paragraph 31 wherein the at least one user-specified criteria comprises a geographical constraint. 33. The system of paragraph 15 wherein the computer is accessible to a plurality user computers via an intranet. 34. The system of paragraph 15 wherein the computer is accessible to a plurality user computers via the Internet. 35. An apparatus for providing a user with historical sales data for a plurality of vehicles comprising a fleet, the apparatus comprising: a computer in communication with a database, the database being configured to store actual sales data for a plurality of vehicles that have previously been sold, wherein the computer is configured to create a page for display to a user, the page including a display of a plurality of historical sales prices for at least one vehicle type that is similar to a user-selected vehicle type, wherein the displayed historical sales prices are calculated from the stored actual sales data and comprise historical sales prices for the at least one similar vehicle type that have been normalized to an average time of sale odometer reading. 36. The apparatus of paragraph 35 wherein the stored actual sales data comprises stored actual sales data for a plurality of fleet vehicles, wherein the stored actual sales data comprises, for each fleet vehicle that has previously been sold, an identification of a vehicle type therefor, a sales price therefor, and an odometer reading therefor at the time of sale, and wherein the computer is further configured to calculate the historical sales prices by: calculating an average odometer reading at the time of sale for a plurality of the previously sold vehicles of a vehicle type group, the vehicle type group comprising at least one vehicle type that is the same or similar to the user-selected vehicle type; for each vehicle type of the vehicle type group, (1) normalizing the stored sales prices for a plurality of previously sold vehicles of that vehicle type such that the stored sales prices are normalized to the calculated average odometer reading, and (2) calculating an average normalized sales price from the normalized sales prices. 37. The apparatus of paragraph 36 wherein the computer is further configured to normalize the stored sales prices using a cost per time of sale odometer reading data table. 38. The apparatus of paragraph 37 wherein the vehicle types are specified in terms of a year, make, model, and series (YMMS). 39. The apparatus of paragraph 38 wherein the user-selected vehicle type comprises a current year YMMS, wherein the vehicle type group is a YMMS group, and wherein the YMMS group comprises the current year YMMS and at least one other YMMS similar thereto. 40. The apparatus of paragraph 39 wherein the stored actual sales data further comprises, for each fleet vehicle that has previously been sold, a month of sale, and wherein the computer is further configured to calculate the historical sales prices on a per month basis such that (1) each calculated average time of sale odometer reading represents the average time of sale odometer reading for a plurality of previously sold vehicles of the YMMS group that were sold in a particular month across a plurality of years of sale and (2) each YMMS's average normalized sales price represents that average normalized sales price for a plurality of previously sold vehicles of that YMMS that were sold in a particular month. 41. The apparatus of paragraph 40 wherein the computer is further configured to calculate, for a plurality of months, a month-to-month change in the average normalized sales price for each YMMS within the YMMS group. 42. The apparatus of paragraph 41 wherein the page presents the calculated average normalized sales prices in a table comprising a plurality of rows and a plurality of columns, wherein each column corresponds to a month of the year, wherein at least one row displays the calculated average time of sale odometer reading for each month, and wherein at least one row corresponds to a previous year YMMS within the YMMS group and displays the average normalized sales price for that previous year YMMS for each month. 43. The apparatus of paragraph 42 wherein at least one additional row of the table corresponds to another previous year YMMS within the YMMS group and displays the average normalized sales price for the another previous year YMMS for each month. 44. The apparatus of paragraph 43 wherein the rows are arranged chronologically by the year corresponding to each row's YMMS. 45. The apparatus of paragraph 42 wherein the table further comprises a row for each YMMS within the YMMS group, these plurality of rows displaying the calculated month-to-month average normalized sales price changes. 46. The apparatus of paragraph 45 wherein the computer is further configured to calculate, for a plurality of months, a year-to-year change in a given month's average normalized sales price for a particular YMMS within the YMMS group relative to that given month's average normalized sales price for a YMMS of the year previous to that particular YMMS. 47. The apparatus of paragraph 46 wherein the table further comprises another row for each YMMS within the YMMS group, these plurality of another rows displaying the calculated year-to-year average normalized sales price changes. 48. The apparatus of paragraph 44 wherein the table further includes, in a row corresponding to the user-selected YMMS, at least one field for user entry of a residual value estimate for the user-selected YMMS, wherein the residual value estimate is applicable to a current or future month. 49. The apparatus of paragraph 48 wherein the page further includes a link selectable by the user for to display another page, the another page presenting a cost going forward (CGF) analysis to the user that is applicable to the user-selected YMMS, the CGF analysis being based at least in part upon the at least one user-entered residual value estimate. 50. The apparatus of paragraph 49 wherein the CGF analysis is further based at least in part upon a user-specified projection period. 51. The apparatus of paragraph 39 wherein the computer is further configured to limit which previously sold fleet vehicles are considered in the historical sales price calculations on the basis of at least one user-specified criteria. 52. The apparatus of paragraph 51 wherein the at least one user-specified criteria comprises a geographical constraint. 53. The apparatus of paragraph 35 wherein the computer is accessible to a plurality user computers via an intranet. 54. The apparatus of paragraph 35 wherein the computer is accessible to a plurality user computers via the Internet. 55. A method for a providing a user with historical sales data related to a plurality of vehicles comprising a fleet, the method comprising: receiving input from the user indicative of a vehicle type; for each of a plurality of previously sold vehicles corresponding to the selected vehicle type, determining an actual sales price and an actual time of sale odometer reading therefor; determining an average time of sale odometer reading from at least a plurality of the determined actual time of sale odometer readings; normalizing at least a plurality of the determined actual sales prices to the determined average time of sale odometer reading; averaging the normalized sales prices together; and displaying the average of the normalized sales prices to the user. 56. The method of paragraph 55 wherein the previously sold vehicles comprise previously sold fleet vehicles, wherein the selected vehicle type has an associated vehicle type group, the vehicle type group comprising the selected vehicle type and at least one other vehicle type, and wherein: the actual sales price and actual time of sale odometer reading determining step comprises, for each of a plurality of previously sold fleet vehicles corresponding to the vehicle type group associated with the selected vehicle type, determining an actual sales price and an actual time of sale odometer reading therefor; the averaging step comprises categorizing the actual sales prices by vehicle type and averaging together the normalized sales prices that are commonly categorized to thereby create a plurality of average normalized sales prices, each average normalized sales price corresponding to a different vehicle type; and the displaying step comprises displaying the averages of the normalized sales prices to the user. 57. The method of paragraph 56 wherein the user-selected vehicle type is a year, make, model, and series (XMMS). 58. The method of paragraph 57 wherein the normalizing step normalizes the actual sales prices to the determined average time of sale odometer reading using a cost per odometer reading data table. 59. The method of paragraph 58 wherein the cost per odometer reading data table relates a plurality of odometer readings for a vehicle type to a plurality of estimated values determined at least partially on the basis of a statistical model, wherein the average time of sale odometer reading step is performed on a per month basis across a plurality of years, and wherein the normalizing step and the averaging step are performed on a per month per year basis. 60. The method of paragraph 55 wherein the fleet comprises a plurality of rental vehicles. 61. The method of paragraph 55 wherein the fleet comprises a plurality of leased vehicles. 62. A computer-implemented method for selecting which of a plurality of vehicles within a fleet are to be deleted from the fleet; the method comprising: displaying, on an electronic page presented to a computer user, a value analysis for at least one type of vehicle within a vehicle fleet; providing at least one link on the electronic page for selection by the user to initiate a deletion from the fleet of at least one fleet vehicle corresponding to the at least one vehicle type; and responsive to user selection of the at least one link, displaying a list of fleet vehicles for selectable deletion from the fleet by the user, the listed fleet vehicles corresponding to vehicles of the at least one vehicle type. 63. The method of paragraph 62 wherein the vehicle fleet is a rental vehicle fleet, wherein the value analysis is a cost going forward (CGF) analysis, and wherein the vehicle type is a year, make, model, and series (YMMS). 64. The method of paragraph 63 wherein the displaying step comprises displaying, on the electronic page, a cost going forward (CGF) analysis for each YMMS within the fleet corresponding to a user-selected vehicle class. 65. The method of paragraph 64 wherein the displaying step further comprises displaying a count of vehicles within the fleet for each YMMS corresponding to the user-selected vehicle class. 66. The method of paragraph 65 wherein the providing step comprises providing a plurality of links, each link being associated with a different one of the YMMSs corresponding to the user-selected vehicle class and being selectable by the user to initiate a deletion of at least one vehicle from the fleet that corresponds to the link's associated YMMS. 67. The method of paragraph 66 wherein the step of displaying a list of vehicles for selectable deletion from the fleet by the user comprises displaying a list of fleet vehicles within the YMMS corresponding to the selected link for selectable deletion by the user. 68. The method of paragraph 62 further comprising: responsive to user selection of at least one vehicle from the list, sending an electronic message to a person having managerial control over that vehicle, wherein the message informs that person that that vehicle is to be deleted from the fleet. 69. The method of paragraph 62 further comprising: responsive to user selection of at least one vehicle from the list, creating a flag in a fleet database that that vehicle is to be deleted from the fleet. 70. The method of paragraph 62 wherein the fleet comprises a plurality of rental vehicles. 71. The method of paragraph 62 wherein the fleet comprises a plurality of leased vehicles. 72. A method for creating a group of similar vehicle types to facilitate a historical sales price analysis of similar vehicles within a fleet of vehicles, the method comprising: receiving an identification from user of at least one vehicle type; receiving input from the user that indicates each identified vehicle type is deemed by the user to be similar to another vehicle type; and responsive to the received user input, creating a vehicle type group comprising each identified vehicle type and the another vehicle type, the created group for use in performing a historical sales analysis of vehicle types that are similar to a user-selected vehicle type. 73. The method of paragraph 72 wherein the vehicle type is year, make, model, and series (YMMS). 74. The method of paragraph 73 wherein the identification receiving step further comprises receiving identifications of a plurality of YMMSs. 75. The method of paragraph 74 wherein the another vehicle type is a user-selected YMMS. 76. The method of paragraph 75 wherein at least two of the identified YMMSs are YMMSs of the same year. 77. A system for providing a user with data about a fleet comprising a plurality of vehicles, the apparatus comprising: a database configured to store data relating to a plurality of vehicles comprising a fleet, the stored data including an identification of a vehicle classification for each fleet vehicle, the database being updated with vehicle data on a periodic basis, the periodic basis being either a regular periodic basis or an irregular periodic basis; a computer in communication with the database, the computer being configured to: process the stored data to (1) determine a total number of vehicles within the fleet, (2) determine a total count of fleet vehicles for each of a plurality of vehicle classifications, and (3) determine a mix percentage for each vehicle classification from the determined total number and the determined total counts, each mix percentage representing how much of the total fleet count is made up of fleet vehicles of a given vehicle class; and create a page for display to a user that displays the determined total counts and the determined mix percentages together with their corresponding vehicle classes, the displayed counts and mix percentages being current as to the last time the database was updated each time that the page is created and displayed. 78. The system of paragraph 77 wherein the page includes a table, the table identifying the plurality of vehicle classes and identifying the determined total counts and the determined mix percentages for each vehicle class. 79. The system of paragraph 78 wherein the fleet comprises a plurality of rental vehicles. 80. The system of paragraph 78 wherein the fleet comprises a plurality of leased vehicles. 81. A system for determining a quantity of vehicles to be purchased for delivery to and inclusion within a vehicle fleet during a future predetermined time period, the fleet comprising a plurality of vehicles, the system comprising: a database in which vehicle data is stored, at least a portion of the stored vehicle data corresponding to vehicles currently within the fleet; a computer in communication with the database, the computer being configured to execute a fleet planning software program in response to user input, the fleet software program being configured to (1) determine a current size for the fleet on the basis of the vehicle data stored in the database, (2) define a desired fleet size for the predetermined future time period in response to user input, (3) determine, at least partially on the basis of data stored in the database, a quantity of new vehicles that are expected to be incoming to the fleet prior to the predetermined future time period, (4) perform a future cost estimate analysis for a plurality of vehicles within the fleet based on a plurality of user-specified residual values for the plurality of vehicles to which the future cost estimate analysis is applicable, (5) define a number of future vehicle deletions from the fleet in response to user input, the future vehicle deletions comprising vehicle deletions that are to occur prior to and during the predetermined future time period, and (6) compute the quantity of vehicles to be purchased for delivery to and inclusion within the fleet during the future predetermined time period based on the determined current fleet size, the defined desired fleet size, the determined quantity of incoming vehicles, and the defined number of future vehicle deletions. 82. The system of paragraph 81 wherein the computed quantity comprises a plurality of subquantities, each subquantity comprising a total number of vehicle purchases to be made for delivery to and inclusion within the fleet during a subperiod of the future predetermined time period. 83. The system of paragraph 82 wherein each vehicle has an associated vehicle class, and wherein each subquantity further comprises a total number of vehicle purchases within a different vehicle class during the future predetermined time period for delivery to an inclusion within the fleet. 84. The system of paragraph 83 wherein the future predetermined time period comprises an upcoming fiscal year, and wherein the subperiod comprises at least one selected from the group consisting of a month and a quarter. 85. The system of paragraph 81 wherein the future cost estimate analysis comprises at least one selected from the group consisting of a cost going forward (CGF) analysis and a depreciation analysis, wherein each vehicle has an associated vehicle type, and wherein the fleet planning software program is further configured to both receive the user-specified residual values and perform the future cost estimate analysis on a vehicle type basis. 86. The system of paragraph 85 wherein the computer comprises a server, the system further comprising a plurality of user computers in communication with the server via a network, wherein the fleet planning software program is configured to provide a plurality of user interface screens to the user computers for display thereon, the user interface screens being configured to interact with the user to receive user input corresponding to the desired fleet size, the residual values, and the number of future vehicle deletions. 87. The system of paragraph 86 wherein the future time period comprises an upcoming fiscal year, and wherein the user interface screens comprise a plurality of user interface screens that are dedicated to a different task of a long term fleet planning process. 88. The system of paragraph 87 wherein the vehicle types comprise YMMSs, wherein at least one of the dedicated user interface screens is configured to receive residual value input from the user for a plurality of YMMSs associated with a plurality of vehicles within the fleet, and wherein at least one of the dedicated user interface screens is configured to (1) display a CGF analysis for the plurality of YMMSs, the CGF analysis being at least partially based on the residual value input, and (2) receive user input defining a quantity of future vehicle deletions from the fleet for a remainder of a current fiscal year for vehicles associated with the YMMSs corresponding to the displayed CGF analysis. 89. The system of paragraph 87 wherein at least one of the dedicated user interface screens is configured to interact with the user to define the desired fleet size, and wherein at least one of the dedicated user interface screens is configured to define the determined quantity of incoming vehicles at least partially in response to user input. 90. The system of paragraph 89 wherein at least one of the dedicated user interface screens is configured to define, in response to user input, a desired mix of vehicle classes within the fleet for vehicles within the desired fleet size. 91. The system of paragraph 87 wherein at least one of the dedicated user interface screens is configured to perform an optimal delete point process in response to user input. 92. The system of paragraph 81 wherein at least one of the dedicated user interface screens is configured to display, in response to user input, a cycling analysis report for at least one vehicle type. 93. The system of paragraph 91 wherein at least one of the dedicated user interface screens is configured to perform a deletion distribution process in response to user input. 94. The system of paragraph 87 wherein at least one of the dedicated user interface screens is configured to display the computed vehicle purchase quantity and include a plurality of fields for user entry of at least one adjustment to the computed vehicle purchase quantity. 95. The system of paragraph 87 wherein the fleet software program is further configured to allow different ones of the plurality of dedicated user interface screens to be simultaneously accessed by and receive input from a plurality of different users of different user computers, all contributing toward the computation of the same vehicle purchase quantity. 96. A computer-implemented method for determining a quantity of vehicles to be purchased for inclusion in a vehicle fleet during a future time period, the vehicle fleet comprising a plurality of vehicles, the method comprising: retrieving vehicle data from a computer memory, at least a portion of the vehicle data corresponding to vehicles currently within the fleet; executing a software program to (1) determine a current size for the fleet on the basis of the retrieved vehicle data, (2) define a desired fleet size for the future time period in response to user input, (3) determine, at least partially on the basis of the retrieved data, a quantity of new vehicles that are expected to be incoming to the fleet prior to the future time period, (4) perform a future cost estimate analysis for a plurality of vehicles within the fleet based on a plurality of user-specified residual values corresponding to the vehicles for which the future cost estimate analysis is applicable, (5) define a number of future vehicle deletions from the fleet in response to user input, the future vehicle deletions comprising vehicle deletions that are to occur prior to and during the future time period, and (6) compute the quantity of vehicles to be purchased for inclusion in a vehicle fleet during the future time period based on the determined current fleet size, the user-specified desired fleet size, the determined quantity of incoming vehicles, and the user-specified number of future vehicle deletions. 97. The method of paragraph 96 further comprising: simultaneously accessing the fleet planning software program from a plurality of different remote computers, wherein each remote computer accesses the fleet planning software program to perform a different task within a long term fleet planning process. 98. The method of paragraph 97 wherein each vehicle has an associated vehicle class, and wherein the future time period comprises an upcoming fiscal year, wherein the executing step further comprises executing the fleet planning software program to compute the vehicle purchase quantity as a plurality of subquantities, each subquantity comprising a total number of vehicle purchases within a different vehicle class during the upcoming fiscal year. 99. The method of paragraph 98 wherein the executing step further comprises executing the fleet planning software program to divide each of the subquantities into a total number of vehicle purchases to be made during a subperiod of the upcoming fiscal year. 100. The method of paragraph 98 wherein the vehicle fleet comprises a rental vehicle fleet. 101. A distributed computing system for allocating a workflow among a plurality of different user computers that share access to a server, the system comprising: a plurality of user computers; a server in communication with the user computers via a network, wherein the server is configured to execute a long term fleet planning software program, the long term fleet planning software program being configured to execute a long term fleet planning workflow in response to input from a plurality of users through the user computers, the long term fleet planning workflow comprising a plurality of discrete but interrelated tasks whose individual completions by the plurality of users contributes to a determination of a total quantity of vehicles to purchase for inclusion in a vehicle fleet throughout a future time period, wherein the long term fleet planning software program is further configured to allocate different tasks of the workflow among a plurality of different user computers in response to requests from the different user computers to access the workflow tasks, and wherein the long term fleet planning software program is further configured to allow different user computers to simultaneously access and take action on at least two different ones of the workflow tasks. 102. The system of paragraph 101 wherein the vehicle fleet comprises a plurality of vehicle subfleets, and wherein the long term fleet planning software program is further configured to individually execute the long term fleet planning workflow for each of the subfleets to determine a total quantity of vehicles to purchase for each one of the subfleets throughout the future time period. 103. The system of paragraph 102 further comprising a database in communication with the server, the database being configured to store vehicle data, wherein at least a portion of the stored vehicle data corresponds to vehicles currently within the fleet, and wherein the workflow tasks comprise (1) a task configured to determine a current size for a user-specified subfleet on the basis of the vehicle data stored in the database, (2) a task configured to define a size for the user-specified subfleet for the future time period in response to user input through at least one user interface screen provided to a user computer by the server for display thereon, (3) a task configured to determine, at least partially on the basis of the vehicle data stored in the database, a quantity of new vehicles that are expected to be incoming to the user-specified subfleet prior to the future time period, (4) a task configured to perform a cost going forward (CGF) analysis on at least one vehicle type associated with a plurality of vehicles within the user-specified subfleet based on a plurality of user-specified residual values for vehicles that are associated with the at least one vehicle type, wherein the user-specified residual values are input by a user of a user computer through at least one user interface screen provided to that user computer by the server for display thereon,, (5) a task configured to define a number of future vehicle deletions from the user-specified subfleet in response to user input through at least one user interface screen provided to a user computer by the server for display thereon, the future vehicle deletions comprising vehicle deletions that are to occur prior to and during the future time period, and (6) a task configured to compute the quantity of vehicles to be purchased for inclusion within the user-specified subfleet during the future time period based on the determined current size of the user-specified subfleet, the user-specified desired subfleet size, the determined quantity of incoming vehicles for the user-specified subfleet, and the defined number of future vehicle deletions for the user-specified subfleet. 104. The system of paragraph 101 wherein the plurality of workflow tasks have a hierarchical order, and wherein the long term fleet planning software program is further configured to (1) assign a status to each task that is indicative of each task's progress toward completion, (2) track each task's status such that a user action in a task that affects the status of a downstream task will cause a change in the status for that downstream task, and (3) display each task's status to a user. 105. In a computer configured to compute a quantity of additional vehicles to be purchased for delivery to a fleet during a future predetermined time period, the improvement comprising the computer being configured to (1) perform and display a future cost estimate analysis for a plurality of vehicles within the fleet, (2) define, in response to user input, a number of vehicle deletions from the fleet prior to the future predetermined time period, and (3) base its computation of the additional vehicles at least in part on the defined vehicle deletions. 106. In the computer of paragraph 105, the improvement further comprising: wherein the future cost estimate analysis comprises a cost going forward analysis based on user-specified residual values that are applicable to a plurality of vehicles within the fleet. 107. In the computer of paragraph 105, the improvement further comprising: wherein the future cost estimate analysis comprises a depreciation analysis based on user-specified residual values that are applicable to a plurality of vehicles within the fleet. 108. In the computer of paragraph 105, the improvement further comprising: the computer being further configured to display, prior to performance of the future cost estimate analysis, a plurality of normalized historical sales prices applicable to a plurality of vehicles within the fleet. 109. In the computer of paragraph 105, the improvement further comprising: the computer being further configured to base its computation of the additional vehicles at least in part on the defined vehicle deletions, a user-defined desired fleet size and mix, and a determined number of vehicles that are already scheduled to be incoming to the fleet prior to the future time period.

## Claims

**1.** A system for determining a normalized sales price as of a time period for a representative member of a selected vehicle type group, the system including a computer configured to access a database, the database storing historical sales data for members of said group, said historical sales data including actual sales prices, and said computer being further configured to normalize each of said actual sales prices to a representative member of said group and then combine said normalized actual sales prices to determine at least one normalized sales price for said representative member.

**2.** The system of claim 1 wherein said historical sales data for each member of said group includes an associated time of sale odometer reading, and wherein said representative member is determined by combining the time of sale odometer readings of said members.

**3.** The system of claim 2 wherein said computer is further configured to normalize said actual sales prices by adjusting each actual sales price corresponding to its associated time of sale odometer reading as compared said representative member.

**4.** The system of claim 3 wherein the selected vehicle type group is a YMMS.

**5.** The system of claim 3 wherein said computer is configured to combine said normalized actual sales prices by averaging them.

**6.** The system of claim 5 wherein said database further includes a cost per time of sale odometer reading table, and wherein said computer is configured to access said cost per time of sale odometer reading table to normalize said actual sales prices.

**7.** The system of claim 6 wherein said computer is further configured to display said normalized sales price to a user.

**8.** A method for determining a normalized sales price as of a time period for a representative member of a selected vehicle type group, the method comprising:

accessing stored historical sales data for members of said group, said historical sales data including actual sales prices;
normalizing each of said actual sales prices to a representative member of said group; and
combining said normalized actual sales prices to determine at least one normalized actual sales price for said representative member.

**9.** The method of claim 8 wherein historical sales data for each member of said group includes an associated time of sale odometer reading, and wherein the method further comprises:

determining said representative member by combining the time of sale odometer readings of said members.

**10.** The method of claim 9 wherein said normalizing step further comprises normalizing said actual sales prices by adjusting each actual sales price corresponding to its associated time of sale odometer reading as compared to the said representative member.

**11.** The method of claim 10 wherein the selected vehicle type group is a YMMS.

**12.** The method of claim 10 wherein the step of combining said normalized actual sales prices comprises combining said normalized actual sales prices by averaging them.

**13.** The method of claim 12 wherein said normalizing step includes accessing a cost per time of sale odometer reading table to determine an adjustment for use in normalizing said actual sales prices.

**14.** The method of claim 13 further comprising displaying said normalized sales price to a user.

**15.** A system for providing a user with historical sales data for a plurality of vehicles comprising a fleet, the system comprising:

a database configured to store actual sales data for a plurality of vehicles that have previously been sold; and a computer in communication with the database, the computer being configured to create a page for display to a user, the page including a display of a plurality of historical sales prices for at least one vehicle type that is similar to a user-selected vehicle type, wherein the displayed historical sales prices are calculated from the stored actual sales data and comprise historical sales prices for the at least one similar vehicle type that have been normalized to an average time of sale odometer reading.

**16.** The system of claim 15 wherein the stored actual sales data comprises stored actual sales data for a plurality of fleet vehicles, wherein the stored actual sales data comprises, for each fleet vehicle that has previously been sold, an identification of a vehicle type therefor, a sales price therefor, and an odometer reading therefor at the time of sale, and wherein the computer is further configured to calculate the historical sales prices by:

calculating an average odometer reading at the time of sale for a plurality of the previously sold vehicles of a vehicle type group, the vehicle type group comprising at least one vehicle type that is the same or similar to the user-selected vehicle type;
for each vehicle type of the vehicle type group, (1) normalizing the stored sales prices for a plurality of previously sold vehicles of that vehicle type such that the stored sales prices are normalized to the calculated average odometer reading, and (2) calculating an average normalized sales price from the normalized sales prices.

**17.** The system of claim 16 wherein the computer is further configured to normalize the stored sales prices using a cost per time of sale odometer reading data table.

**18.** The system of claim 17 wherein the vehicle types are specified in terms of a year, make, model, and series (YMMS).

**19.** The system of claim 18 wherein the user-selected vehicle type comprises a current year YMMS, wherein the vehicle type group is a YMMS group, and wherein the YMMS group comprises the current year YMMS and at least one other YMMS similar thereto.

**20.** The system of claim 19 wherein the stored actual sales data further comprises, for each fleet vehicle that has previously been sold, a month of sale, and wherein the computer is further configured to calculate the historical sales prices on a per month basis such that (1) each calculated average time of sale odometer reading represents the average time of sale odometer reading for a plurality of previously sold vehicles of the YMMS group that were sold in a particular month across a plurality of years of sale and (2) each YMMS's average normalized sales price represents that average normalized sales price for a plurality of previously sold vehicles of that YMMS that were sold in a particular month.

**21.** The system of claim 20 wherein the computer is further configured to calculate, for a plurality of months, a month-to-month change in the average normalized sales price for each YMMS within the YMMS group.

**22.** The system of claim 21 wherein the page presents the calculated average normalized sales prices in a table comprising a plurality of rows and a plurality of columns, wherein each column corresponds to a month of the year, wherein at least one row displays the calculated average time of sale odometer reading for each month, and wherein at least one row corresponds to a previous year YMMS within the YMMS group and displays the average normalized sales price for that previous year YMMS for each month.

**23.** The system of claim 22 wherein at least one additional row of the table corresponds to another previous year YMMS within the YMMS group and displays the average normalized sales price for the another previous year YMMS for each month.

**24.** The system of claim 23 wherein the rows are arranged chronologically by the year corresponding to each row's YMMS.

**25.** The system of claim 22 wherein the table further comprises a row for each YMMS within the YMMS group, these plurality of rows displaying the calculated month-to-month average normalized sales price changes.

**26.** The system of claim 25 wherein the computer is further configured to calculate, for a plurality of months, a year-to-year change in a given month's average normalized sales price for a particular YMMS within the YMMS group relative to that given month's average normalized sales price for a YMMS of the year previous to that particular YMMS.

**27.** The system of claim 26 wherein the table further comprises another row for each YMMS within the YMMS group, these plurality of another rows displaying the calculated year-to-year average normalized sales price changes.

**28.** The system of claim 24 wherein the table further includes, in a row corresponding to the user-selected YMMS, at least one field for user entry of a residual value estimate for the user-selected YMMS, wherein the residual value estimate is applicable to a current or future month.

**29.** The system of claim 28 wherein the page further includes a link selectable by the user for to display another page, the another page presenting a cost going forward (CGF) analysis to the user that is applicable to the user-selected YMMS, the CGF analysis being based at least in part upon the at least one user-entered residual value estimate.

**30.** The system of claim 29 wherein the CGF analysis is further based at least in part upon a user-specified projection period.

**31.** The system of claim 19 wherein the computer is further configured to limit which previously sold fleet vehicles are considered in the historical sales price calculations on the basis of at least one user-specified criteria.

**32.** The system of claim 31 wherein the at least one user-specified criteria comprises a geographical constraint.

**33.** The system of claim 15 wherein the computer is accessible to a plurality user computers via an intranet.

**34.** The system of claim 15 wherein the computer is accessible to a plurality user computers via the Internet.

**35.** An apparatus for providing a user with historical sales data for a plurality of vehicles comprising a fleet, the apparatus comprising:

a computer in communication with a database, the database being configured to store actual sales data for a plurality of vehicles that have previously been sold, wherein the computer is configured to create a page for display to a user, the page including a display of a plurality of historical sales prices for at least one vehicle type that is similar to a user-selected vehicle type, wherein the displayed historical sales prices are calculated from the stored actual sales data and comprise historical sales prices for the at least one similar vehicle type that have been normalized to an average time of sale odometer reading.

**36.** The apparatus of claim 35 wherein the stored actual sales data comprises stored actual sales data for a plurality of fleet vehicles, wherein the stored actual sales data comprises, for each fleet vehicle that has previously been sold, an identification of a vehicle type therefor, a sales price therefor, and an odometer reading therefor at the time of sale, and wherein the computer is further configured to calculate the historical sales prices by:

calculating an average odometer reading at the time of sale for a plurality of the previously sold vehicles of a vehicle type group, the vehicle type group comprising at least one vehicle type that is the same or similar to the user-selected vehicle type;
for each vehicle type of the vehicle type group, (1) normalizing the stored sales prices for a plurality of previously sold vehicles of that vehicle type such that the stored sales prices are normalized to the calculated average odometer reading, and (2) calculating an average normalized sales price from the normalized sales prices.

**37.** The apparatus of claim 36 wherein the computer is further configured to normalize the stored sales prices using a cost per time of sale odometer reading data table.

**38.** The apparatus of claim 37 wherein the vehicle types are specified in terms of a year, make, model, and series (YMMS).

**39.** The apparatus of claim 38 wherein the user-selected vehicle type comprises a current year YMMS, wherein the vehicle type group is a YMMS group, and wherein the YMMS group comprises the current year YMMS and at least one other YMMS similar thereto.

**40.** The apparatus of claim 39 wherein the stored actual sales data further comprises, for each fleet vehicle that has previously been sold, a month of sale, and wherein the computer is further configured to calculate the historical sales prices on a per month basis such that (1) each calculated average time of sale odometer reading represents the average time of sale odometer reading for a plurality of previously sold vehicles of the YMMS group that were sold in a particular month across a plurality of years of sale and (2) each YMMS's average normalized sales price represents that average normalized sales price for a plurality of previously sold vehicles of that YMMS that were sold in a particular month.

**41.** The apparatus of claim 40 wherein the computer is further configured to calculate, for a plurality of months, a month-to-month change in the average normalized sales price for each YMMS within the YMMS group.

**42.** The apparatus of claim 41 wherein the page presents the calculated average normalized sales prices in a table comprising a plurality of rows and a plurality of columns, wherein each column corresponds to a month of the year, wherein at least one row displays the calculated average time of sale odometer reading for each month, and wherein at least one row corresponds to a previous year YMMS within the YMMS group and displays the average normalized sales price for that previous year YMMS for each month.

**43.** The apparatus of claim 42 wherein at least one additional row of the table corresponds to another previous year YMMS within the YMMS group and displays the average normalized sales price for the another previous year YMMS for each month.

**44.** The apparatus of claim 43 wherein the rows are arranged chronologically by the year corresponding to each row's YMMS.

**45.** The apparatus of claim 42 wherein the table further comprises a row for each YMMS within the YMMS group, these plurality of rows displaying the calculated month-to-month average normalized sales price changes.

**46.** The apparatus of claim 45 wherein the computer is further configured to calculate, for a plurality of months, a year-to-year change in a given month's average normalized sales price for a particular YMMS within the YMMS group relative to that given month's average normalized sales price for a YMMS of the year previous to that particular YMMS.

**47.** The apparatus of claim 46 wherein the table further comprises another row for each YMMS within the YMMS group, these plurality of another rows displaying the calculated year-to-year average normalized sales price changes.

**48.** The apparatus of claim 44 wherein the table further includes, in a row corresponding to the user-selected YMMS, at least one field for user entry of a residual value estimate for the user-selected YMMS, wherein the residual value estimate is applicable to a current or future month.

**49.** The apparatus of claim 48 wherein the page further includes a link selectable by the user for to display another page, the another page presenting a cost going forward (CGF) analysis to the user that is applicable to the user-selected YMMS, the CGF analysis being based at least in part upon the at least one user-entered residual value estimate.

**50.** The apparatus of claim 49 wherein the CGF analysis is further based at least in part upon a user-specified projection period.

**51.** The apparatus of claim 39 wherein the computer is further configured to limit which previously sold fleet vehicles are considered in the historical sales price calculations on the basis of at least one user-specified criteria.

**52.** The apparatus of claim 51 wherein the at least one user-specified criteria comprises a geographical constraint.

**53.** The apparatus of claim 35 wherein the computer is accessible to a plurality user computers via an intranet.

**54.** The apparatus of claim 35 wherein the computer is accessible to a plurality user computers via the Internet.

**55.** A method for a providing a user with historical sales data related to a plurality of vehicles comprising a fleet, the method comprising:

receiving input from the user indicative of a vehicle type;
for each of a plurality of previously sold vehicles corresponding to the selected vehicle type, determining an actual sales price and an actual time of sale odometer reading therefor;
determining an average time of sale odometer reading from at least a plurality of the determined actual time of sale odometer readings;
normalizing at least a plurality of the determined actual sales prices to the determined average time of sale odometer reading;
averaging the normalized sales prices together; and
displaying the average of the normalized sales prices to the user.

**56.** The method of claim 55 wherein the previously sold vehicles comprise previously sold fleet vehicles, wherein the selected vehicle type has an associated vehicle type group, the vehicle type group comprising the selected vehicle type and at least one other vehicle type, and wherein:

the actual sales price and actual time of sale odometer reading determining step comprises, for each of a plurality of previously sold fleet vehicles corresponding to the vehicle type group associated with the selected vehicle type, determining an actual sales price and an actual time of sale odometer reading therefor;
the averaging step comprises categorizing the actual sales prices by vehicle type and averaging together the normalized sales prices that are commonly categorized to thereby create a plurality of average normalized sales prices, each average normalized sales price corresponding to a different vehicle type; and
the displaying step comprises displaying the averages of the normalized sales prices to the user.

**57.** The method of claim 56 wherein the user-selected vehicle type is a year, make, model, and series (YMMS).

**58.** The method of claim 57 wherein the normalizing step normalizes the actual sales prices to the determined average time of sale odometer reading using a cost per odometer reading data table.

**59.** The method of claim 58 wherein the cost per odometer reading data table relates a plurality of odometer readings for a vehicle type to a plurality of estimated values determined at least partially on the basis of a statistical model, wherein the average time of sale odometer reading step is performed on a per month basis across a plurality of years, and wherein the normalizing step and the averaging step are performed on a per month per year basis.

**60.** The method of claim 55 wherein the fleet comprises a plurality of rental vehicles.

**61.** The method of claim 55 wherein the fleet comprises a plurality of leased vehicles.

**62.** A computer-implemented method for selecting which of a plurality of vehicles within a fleet are to be deleted from the fleet; the method comprising:

displaying, on an electronic page presented to a computer user, a value analysis for at least one type of vehicle within a vehicle fleet;

providing at least one link on the electronic page for selection by the user to initiate a deletion from the fleet of at least one fleet vehicle corresponding to the at least one vehicle type; and
responsive to user selection of the at least one link, displaying a list of fleet vehicles for selectable deletion from the fleet by the user, the listed fleet vehicles corresponding to vehicles of the at least one vehicle type.

**63.** The method of claim 62 wherein the vehicle fleet is a rental vehicle fleet, wherein the value analysis is a cost going forward (CGF) analysis, and wherein the vehicle type is a year, make, model, and series (YMMS).

**64.** The method of claim 63 wherein the displaying step comprises displaying, on the electronic page, a cost going forward (CGF) analysis for each YMMS within the fleet corresponding to a user-selected vehicle class.

**65.** The method of claim 64 wherein the displaying step further comprises displaying a count of vehicles within the fleet for each YMMS corresponding to the user-selected vehicle class.

**66.** The method of claim 65 wherein the providing step comprises providing a plurality of links, each link being associated with a different one of the YMMSs corresponding to the user-selected vehicle class and being selectable by the user to initiate a deletion of at least one vehicle from the fleet that corresponds to the link's associated YMMS.

**67.** The method of claim 66 wherein the step of displaying a list of vehicles for selectable deletion from the fleet by the user comprises displaying a list of fleet vehicles within the YMMS corresponding to the selected link for selectable deletion by the user.

**68.** The method of claim 62 further comprising:

responsive to user selection of at least one vehicle from the list, sending an electronic message to a person having managerial control over that vehicle, wherein the message informs that person that that vehicle is to be deleted from the fleet.

**69.** The method of claim 62 further comprising:

responsive to user selection of at least one vehicle from the list, creating a flag in a fleet database that that vehicle is to be deleted from the fleet.

**70.** The method of claim 62 wherein the fleet comprises a plurality of rental vehicles.

**71.** The method of claim 62 wherein the fleet comprises a plurality of leased vehicles.

**72.** A method for creating a group of similar vehicle types to facilitate a historical sales price analysis of similar vehicles within a fleet of vehicles, the method comprising:

receiving an identification from user of at least one vehicle type;
receiving input from the user that indicates each identified vehicle type is deemed by the user to be similar to another vehicle type; and
responsive to the received user input, creating a vehicle type group comprising each identified vehicle type and the another vehicle type, the created group for use in performing a historical sales analysis of vehicle types that are similar to a user-selected vehicle type.

**73.** The method of claim 72 wherein the vehicle type is year, make, model, and series (YMMS).

**74.** The method of claim 73 wherein the identification receiving step further comprises receiving identifications of a plurality of YMMSs.

**75.** The method of claim 74 wherein the another vehicle type is a user-selected YMMS.

**76.** The method of claim 75 wherein at least two of the identified YMMSs are YMMSs of the same year.

**77.** A system for providing a user with data about a fleet comprising a plurality of vehicles, the apparatus comprising:

a database configured to store data relating to a plurality of vehicles comprising a fleet, the stored data including an identification of a vehicle classification for each fleet vehicle, the database being updated with vehicle data on a periodic basis, the periodic basis being either a regular periodic basis or an irregular periodic basis;
a computer in communication with the database, the computer being configured to:
process the stored data to (1) determine a total number of vehicles within the fleet, (2) determine a total count of fleet vehicles for each of a plurality of vehicle classifications, and (3) determine a mix percentage for each vehicle classification from the determined total number and the determined total counts, each mix percentage representing how much of the total fleet count is made up of fleet vehicles of a given vehicle class; and
create a page for display to a user that displays the determined total counts and the determined mix percentages together with their corresponding vehicle classes, the displayed counts and mix percentages being current as to the last time the database was updated each time that the page is created and displayed.

**78.** The system of claim 77 wherein the page includes a table, the table identifying the plurality of vehicle classes and identifying the determined total counts and the determined mix percentages for each vehicle class.

**79.** The system of claim 78 wherein the fleet comprises a plurality of rental vehicles.

**80.** The system of claim 78 wherein the fleet comprises a plurality of leased vehicles.

**81.** A system for determining a quantity of vehicles to be purchased for delivery to and inclusion within a vehicle fleet during a future predetermined time period, the fleet comprising a plurality of vehicles, the system comprising:

a database in which vehicle data is stored, at least a portion of the stored vehicle data corresponding to vehicles currently within the fleet;
a computer in communication with the database, the computer being configured to execute a fleet planning software program in response to user input, the fleet software program being configured to (1) determine a current size for the fleet on the basis of the vehicle data stored in the database, (2) define a desired fleet size for the predetermined future time period in response to user input, (3) determine, at least partially on the basis of data stored in the database, a quantity of new vehicles that are expected to be incoming to the fleet prior to the predetermined future time period, (4) perform a future cost estimate analysis for a plurality of vehicles within the fleet based on a plurality of user-specified residual values for the plurality of vehicles to which the future cost estimate analysis is applicable, (5) define a number of future vehicle deletions from the fleet in response to user input, the future vehicle deletions comprising vehicle deletions that are to occur prior to and during the predetermined future time period, and (6) compute the quantity of vehicles to be purchased for delivery to and inclusion within the fleet during the future predetermined time period based on the determined current fleet size, the defined desired fleet size, the determined quantity of incoming vehicles, and the defined number of future vehicle deletions.

**82.** The system of claim 81 wherein the computed quantity comprises a plurality of subquantities, each subquantity comprising a total number of vehicle purchases to be made for delivery to and inclusion within the fleet during a subperiod of the future predetermined time period.

**83.** The system of claim 82 wherein each vehicle has an associated vehicle class, and wherein each subquantity further comprises a total number of vehicle purchases within a different vehicle class during the future predetermined time period for delivery to an inclusion within the fleet.

**84.** The system of claim 83 wherein the future predetermined time period comprises an upcoming fiscal year, and wherein the subperiod comprises at least one selected from the group consisting of a month and a quarter.

**85.** The system of claim 81 wherein the future cost estimate analysis comprises at least one selected from the group consisting of a cost going forward (CGF) analysis and a depreciation analysis, wherein each vehicle has an associated vehicle type, and wherein the fleet planning software program is further configured to both receive the user-specified residual values and perform the future cost estimate analysis on a vehicle type basis.

**86.** The system of claim 85 wherein the computer comprises a server, the system further comprising a plurality of user computers in communication with the server via a network, wherein the fleet planning software program is configured to provide a plurality of user interface screens to the user computers for display thereon, the user interface screens being configured to interact with the user to receive user input corresponding to the desired fleet size, the residual values, and the number of future vehicle deletions.

**87.** The system of claim 86 wherein the future time period comprises an upcoming fiscal year, and wherein the user interface screens comprise a plurality of user interface screens that are dedicated to a different task of a long term fleet planning process.

**88.** The system of claim 87 wherein the vehicle types comprise YMMSs, wherein at least one of the dedicated user interface screens is configured to receive residual value input from the user for a plurality of YMMSs associated with a plurality of vehicles within the fleet, and wherein at least one of the dedicated user interface screens is configured to (1) display a CGF analysis for the plurality of YMMSs, the CGF analysis being at least partially based on the residual value input, and (2) receive user input defining a quantity of future vehicle deletions from the fleet for a remainder of a current fiscal year for vehicles associated with the YMMSs corresponding to the displayed CGF analysis.

**89.** The system of claim 87 wherein at least one of the dedicated user interface screens is configured to interact with the user to define the desired fleet size, and wherein at least one of the dedicated user interface screens is configured to define the determined quantity of incoming vehicles at least partially in response to user input.

**90.** The system of claim 89 wherein at least one of the dedicated user interface screens is configured to define, in response to user input, a desired mix of vehicle classes within the fleet for vehicles within the desired fleet size.

**91.** The system of claim 87 wherein at least one of the dedicated user interface screens is configured to perform an optimal delete point process in response to user input.

**92.** The system of claim 81 wherein at least one of the dedicated user interface screens is configured to display, in response to user input, a cycling analysis report for at least one vehicle type.

**93.** The system of claim 91 wherein at least one of the dedicated user interface screens is configured to perform a deletion distribution process in response to user input.

**94.** The system of claim 87 wherein at least one of the dedicated user interface screens is configured to display the computed vehicle purchase quantity and include a plurality of fields for user entry of at least one adjustment to the computed vehicle purchase quantity.

**95.** The system of claim 87 wherein the fleet software program is further configured to allow different ones of the plurality of dedicated user interface screens to be simultaneously accessed by and receive input from a plurality of different users of different user computers, all contributing toward the computation of the same vehicle purchase quantity.

**96.** A computer-implemented method for determining a quantity of vehicles to be purchased for inclusion in a vehicle fleet during a future time period, the vehicle fleet comprising a plurality of vehicles, the method comprising:

retrieving vehicle data from a computer memory, at least a portion of the vehicle data corresponding to vehicles currently within the fleet;
executing a software program to (1) determine a current size for the fleet on the basis of the retrieved vehicle data, (2) define a desired fleet size for the future time period in response to user input, (3) determine, at least partially on the basis of the retrieved data, a quantity of new vehicles that are expected to be incoming to the fleet prior to the future time period, (4) perform a future cost estimate analysis for a plurality of vehicles within the fleet based on a plurality of user-specified residual values corresponding to the vehicles for which the future cost estimate analysis is applicable, (5) define a number of future vehicle deletions from the fleet in response to user input, the future vehicle deletions comprising vehicle deletions that are to occur prior to and during the future time period, and (6) compute the quantity of vehicles to be purchased for inclusion in a vehicle fleet during the future time period based on the determined current fleet size, the user-specified desired fleet size, the determined quantity of incoming vehicles, and the user-specified number of future vehicle deletions.

**97.** The method of claim 96 further comprising:

simultaneously accessing the fleet planning software program from a plurality of different remote computers, wherein each remote computer accesses the fleet planning software program to perform a different task within a long term fleet planning process.

**98.** The method of claim 97 wherein each vehicle has an associated vehicle class, and wherein the future time period comprises an upcoming fiscal year, wherein the executing step further comprises executing the fleet planning software program to compute the vehicle purchase quantity as a plurality of subquantities, each subquantity comprising a total number of vehicle purchases within a different vehicle class during the upcoming fiscal year.

**99.** The method of claim 98 wherein the executing step further comprises executing the fleet planning software program to divide each of the subquantities into a total number of vehicle purchases to be made during a subperiod of the upcoming fiscal year.

**100.** The method of claim 98 wherein the vehicle fleet comprises a rental vehicle fleet.

**101.** A distributed computing system for allocating a workflow among a plurality of different user computers that share access to a server, the system comprising:

a plurality of user computers;
a server in communication with the user computers via a network, wherein the server is configured to execute a long term fleet planning software program, the long term fleet planning software program being configured to execute a long term fleet planning workflow in response to input from a plurality of users through the user computers, the long term fleet planning workflow comprising a plurality of discrete but interrelated tasks whose individual completions by the plurality of users contributes to a determination of a total quantity of vehicles to purchase for inclusion in a vehicle fleet throughout a future time period, wherein the long term fleet planning software program is further configured to allocate different tasks of the workflow among a plurality of different user computers in response to requests from the different user computers to access the workflow tasks, and wherein the long term fleet planning software program is further configured to allow different user computers to simultaneously access and take action on at least two different ones of the workflow tasks.

**102.** The system of claim 101 wherein the vehicle fleet comprises a plurality of vehicle subfleets, and wherein the long term fleet planning software program is further configured to individually execute the long term fleet planning workflow for each of the subfleets to determine a total quantity of vehicles to purchase for each one of the subfleets throughout the future time period.

**103.** The system of claim 102 further comprising a database in communication with the server, the database being configured to store vehicle data, wherein at least a portion of the stored vehicle data corresponds to vehicles currently within the fleet, and wherein the workflow tasks comprise (1) a task configured to determine a current size for a user-specified subfleet on the basis of the vehicle data stored in the database, (2) a task configured to define a size for the user-specified subfleet for the future time period in response to user input through at least one user interface screen provided to a user computer by the server for display thereon, (3) a task configured to determine, at least partially on the basis of the vehicle data stored in the database, a quantity of new vehicles that are expected to be incoming to the user-specified subfleet prior to the future time period, (4) a task configured to perform a cost going forward (CGF) analysis on at least one vehicle type associated with a plurality of vehicles within the user-specified subfleet based on a plurality of user-specified residual values for vehicles that are associated with the at least one vehicle type, wherein the user-specified residual values are input by a user of a user computer through at least one user interface screen provided to that user computer by the server for display thereon,, (5) a task configured to define a number of future vehicle deletions from the user-specified subfleet in response to user input through at least one user interface screen provided to a user computer by the server for display thereon, the future vehicle deletions comprising vehicle deletions that are to occur prior to and during the future time period, and (6) a task configured to compute the quantity of vehicles to be purchased for inclusion within the user-specified subfleet during the future time period based on the determined current size of the user-specified subfleet, the user-specified desired subfleet size, the determined quantity of incoming vehicles for the user-specified subfleet, and the defined number of future vehicle deletions for the user-specified subfleet.

**104.** The system of claim 101 wherein the plurality of workflow tasks have a hierarchical order, and wherein the long term fleet planning software program is further configured to (1) assign a status to each task that is indicative of each task's progress toward completion, (2) track each task's status such that a user action in a task that affects the status of a downstream task will cause a change in the status for that downstream task, and (3) display each task's status to a user.

**105.** In a computer configured to compute a quantity of additional vehicles to be purchased for delivery to a fleet during a future predetermined time period, the improvement comprising the computer being configured to (1) perform and display a future cost estimate analysis for a plurality of vehicles within the fleet, (2) define, in response to user input, a number of vehicle deletions from the fleet prior to the future predetermined time period, and (3) base its computation of the additional vehicles at least in part on the defined vehicle deletions.

**106.** In the computer of claim 105, the improvement further comprising:

wherein the future cost estimate analysis comprises a cost going forward analysis based on user-specified residual values that are applicable to a plurality of vehicles within the fleet.

**107.** In the computer of claim 105, the improvement further comprising:

wherein the future cost estimate analysis comprises a depreciation analysis based on user-specified residual values that are applicable to a plurality of vehicles within the fleet.

**108.** In the computer of claim 105, the improvement further comprising:

the computer being further configured to display, prior to performance of the future cost estimate analysis, a plurality of normalized historical sales prices applicable to a plurality of vehicles within the fleet.

**109.** In the computer of claim 105, the improvement further comprising:

the computer being further configured to base its computation of the additional vehicles at least in part on the defined vehicle deletions, a user-defined desired fleet size and mix, and a determined number of vehicles that are already scheduled to be incoming to the fleet prior to the future time period.

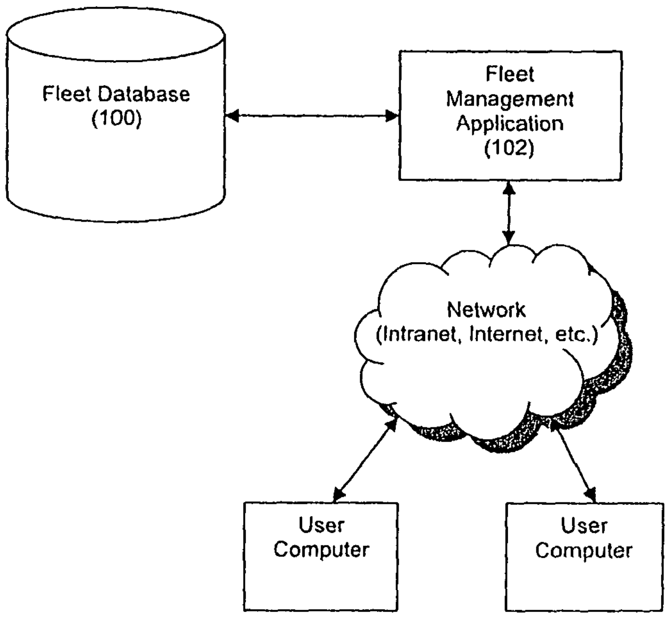
Fleet Database
(100)
Fleet
Management
Application
(102)
Network
(Intranet, Internet, etc.)
User
Computer
User
Computer

**Figure 1**

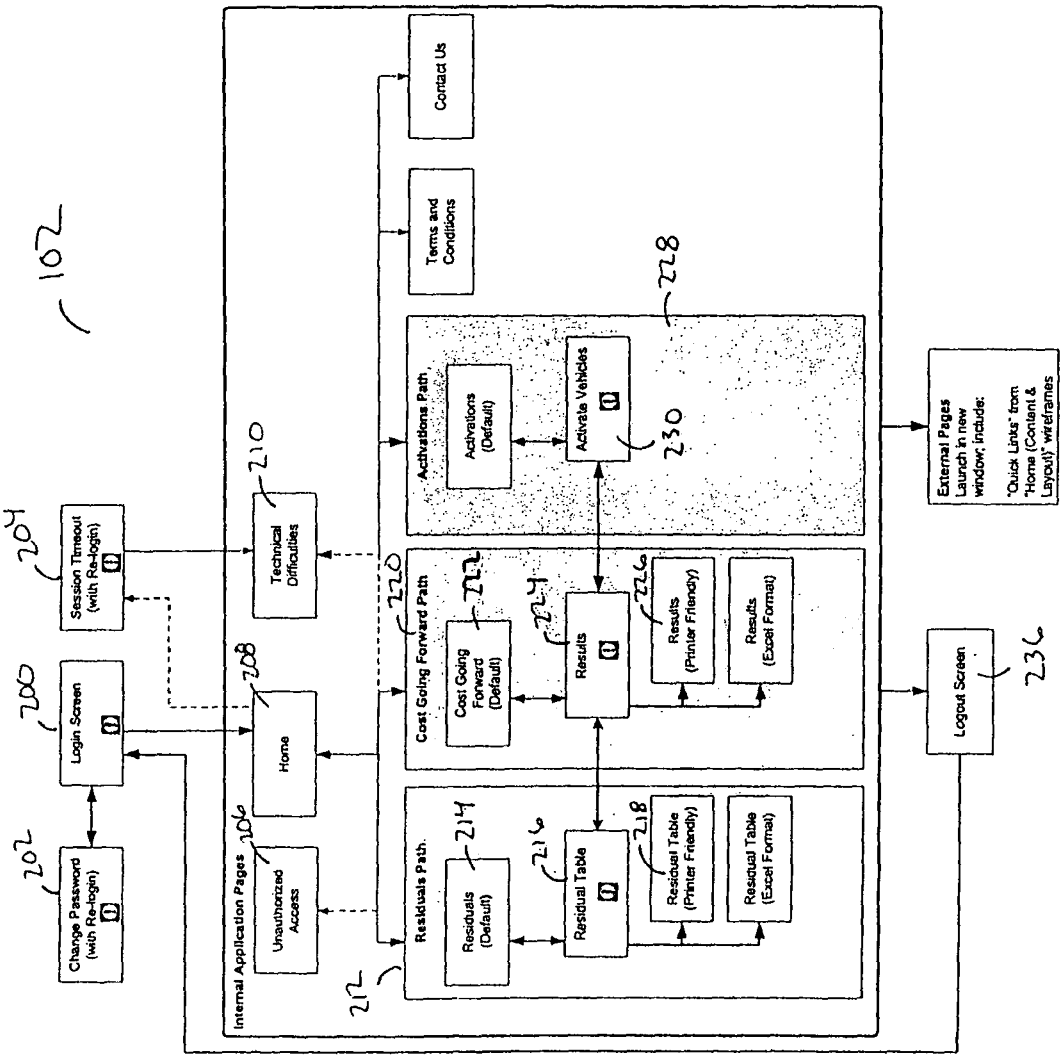
102
Internal Application Pages
Change Password (with Re-login)
Login Screen
Session Timeout (with Re-login)
Unauthorized Access
Home
Technical Difficulties
Residuals Path
Residuals (Default)
Residual Table
Residual Table (Printer Friendly)
Residual Table (Excel Format)
Cost Going Forward Path
Cost Going Forward (Default)
Results
Results (Printer Friendly)
Results (Excel Format)
Activations Path
Activations (Default)
Activate Vehicles
Terms and Conditions
Contact Us
External Pages Launch in new window; include:
"Quick Links" from "Home (Content & Layout)" wireframes
Logout Screen
200
202
204
206
208
210
212
214
216
218
220
222
224
226
228
230
236

Figure 2

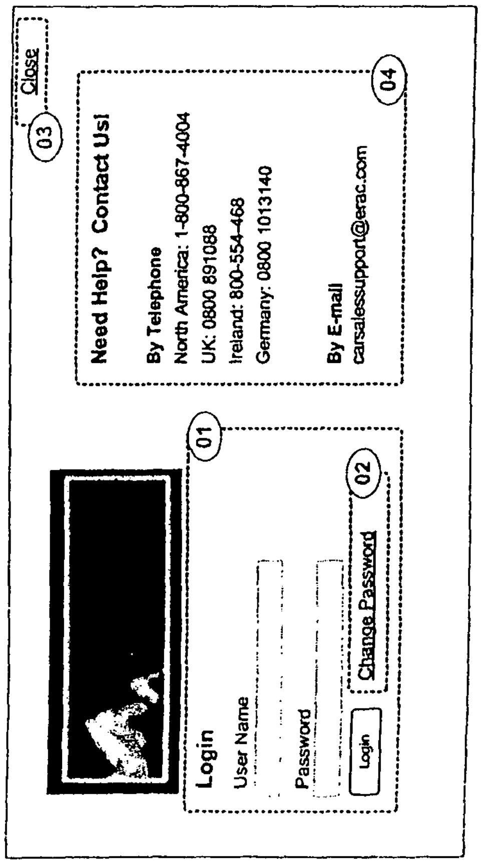
Close
03
Need Help? Contact Us!
By Telephone
North America: 1-800-867-4004
UK: 0800 891088
Ireland: 800-554-468
Germany: 0800 1013140
By E-mail
carsalessupport@erac.com
04
01
Login
User Name
Password
02
Change Password
Login

Figure 3 (a)

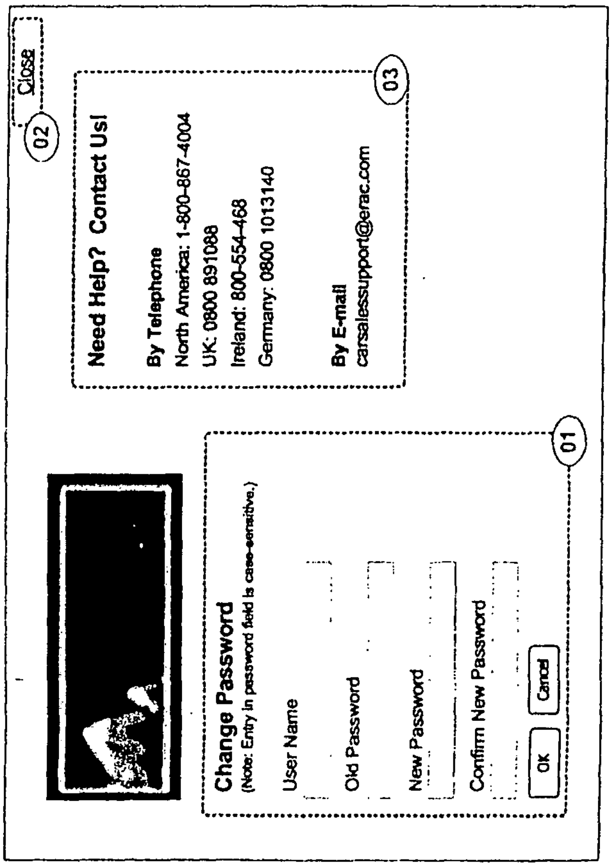
Close
02
Need Help? Contact Us!
By Telephone
North America: 1-800-867-4004
UK: 0800 891088
Ireland: 800-554-468
Germany: 0800 1013140
By E-mail
carsalessupport@erac.com
03
Change Password
(Note: Entry in password field is case-sensitive.)
User Name
Old Password
New Password
Confirm New Password
OK
Cancel
01

Figure 3(b)

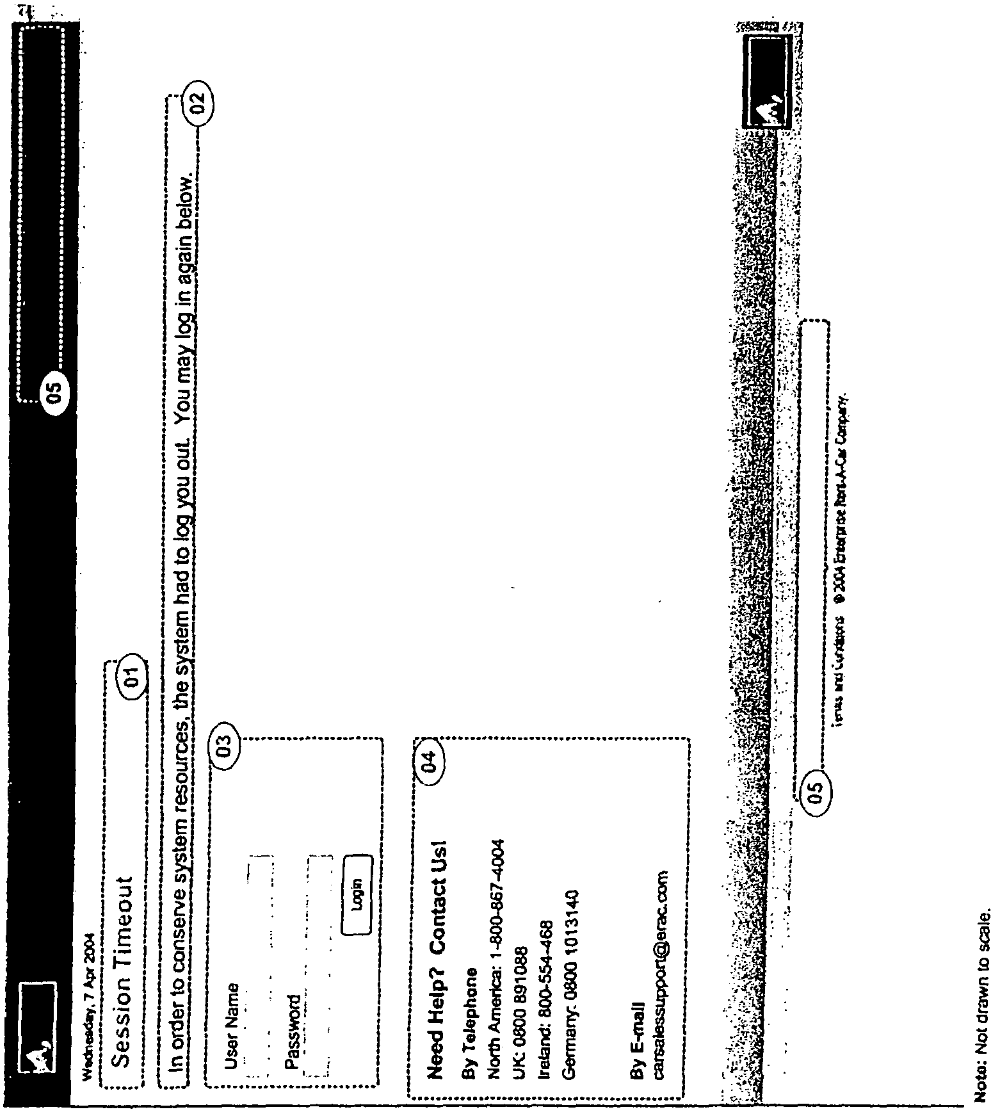

05
Wednesday, 7 Apr 2004
Session Timeout
01
In order to conserve system resources, the system had to log you out. You may log in again below.
02
03
User Name
Password
Login
04
Need Help? Contact Us!
By Telephone
North America: 1-800-867-4004
UK: 0800 891088
Ireland: 800-554-468
Germany: 0800 1013140
By E-mail
carsalessupport@erac.com
05
Terms and Conditions © 2004 Enterprise Rent-A-Car Company.
Note: Not drawn to scale.


Figure 3(c)

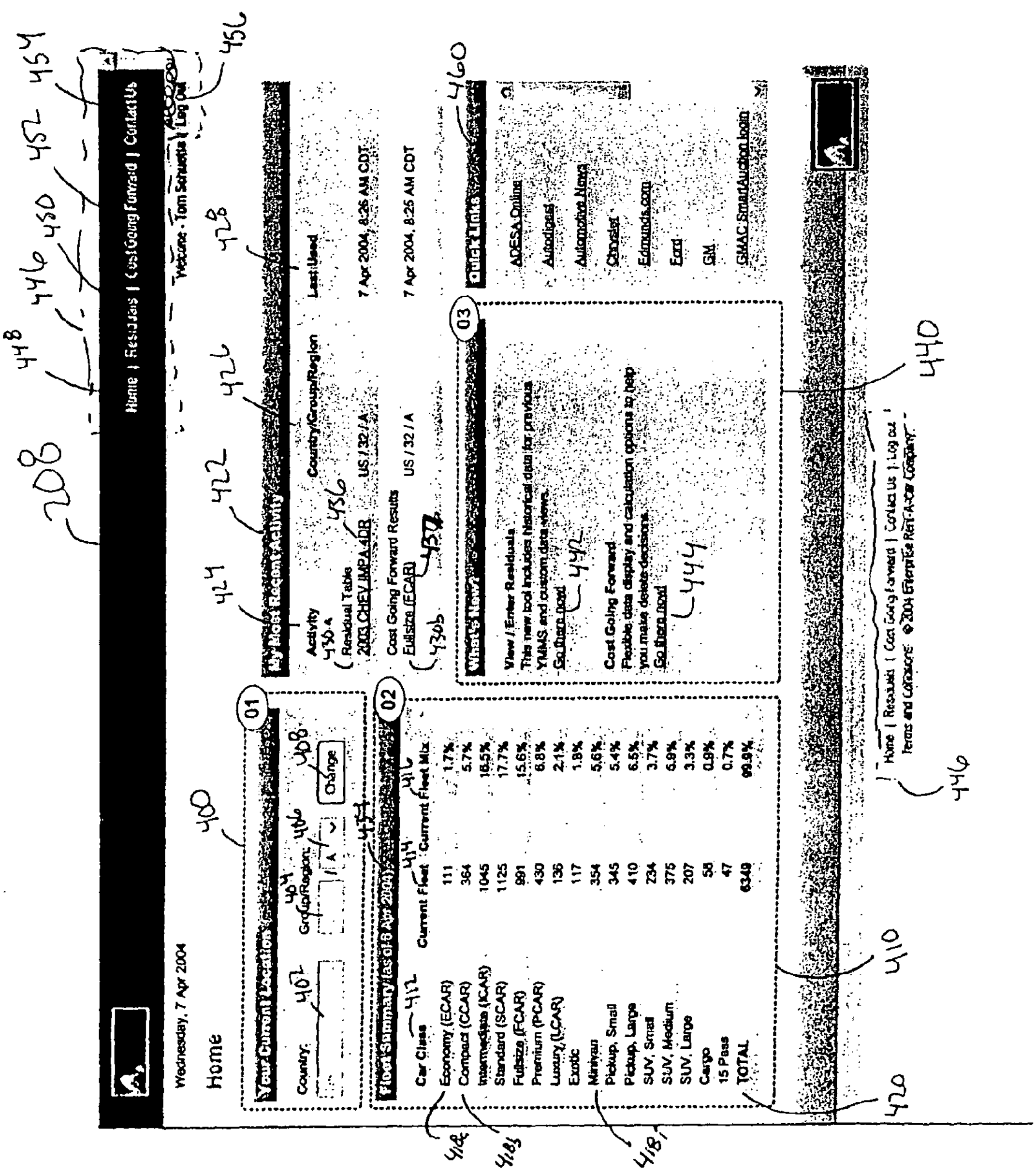


Note: Not drawn to scale.

Figure 4

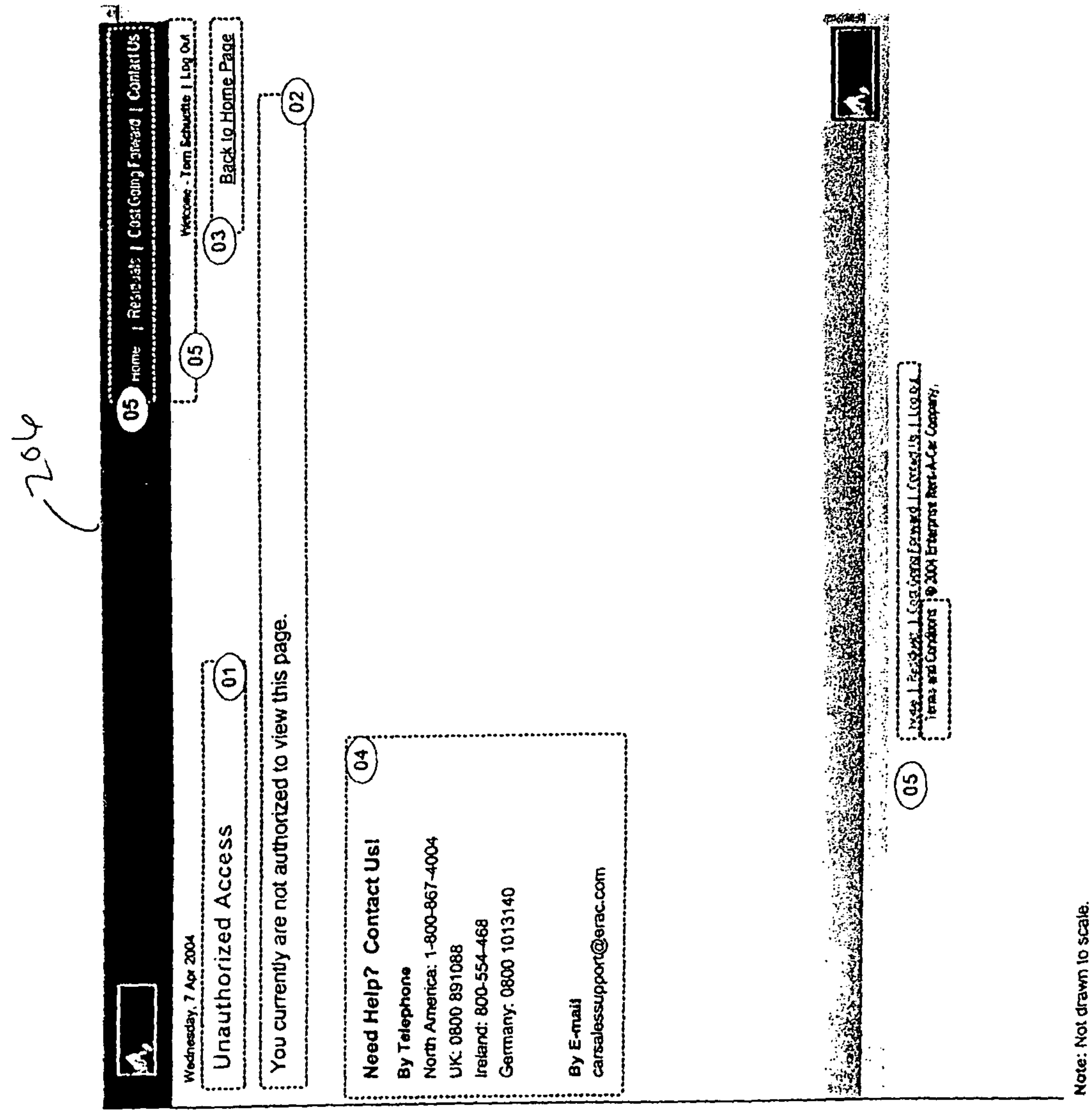
204
05
Home | Cost Going Forward | Contact Us
Wednesday, 7 Apr 2004
Welcome : Tom Schuette | Log Out
05
03
Back to Home Page
Unauthorized Access
01
You currently are not authorized to view this page.
02
Need Help? Contact Us!
04
By Telephone
North America: 1-800-867-4004
UK: 0800 891088
Ireland: 800-554-468
Germany: 0800 1013140
By E-mail
carsalessupport@erac.com
05
Terms and Conditions
© 2004 Enterprise Rent-A-Car Company.
Note: Not drawn to scale.

Figure 5 (a)

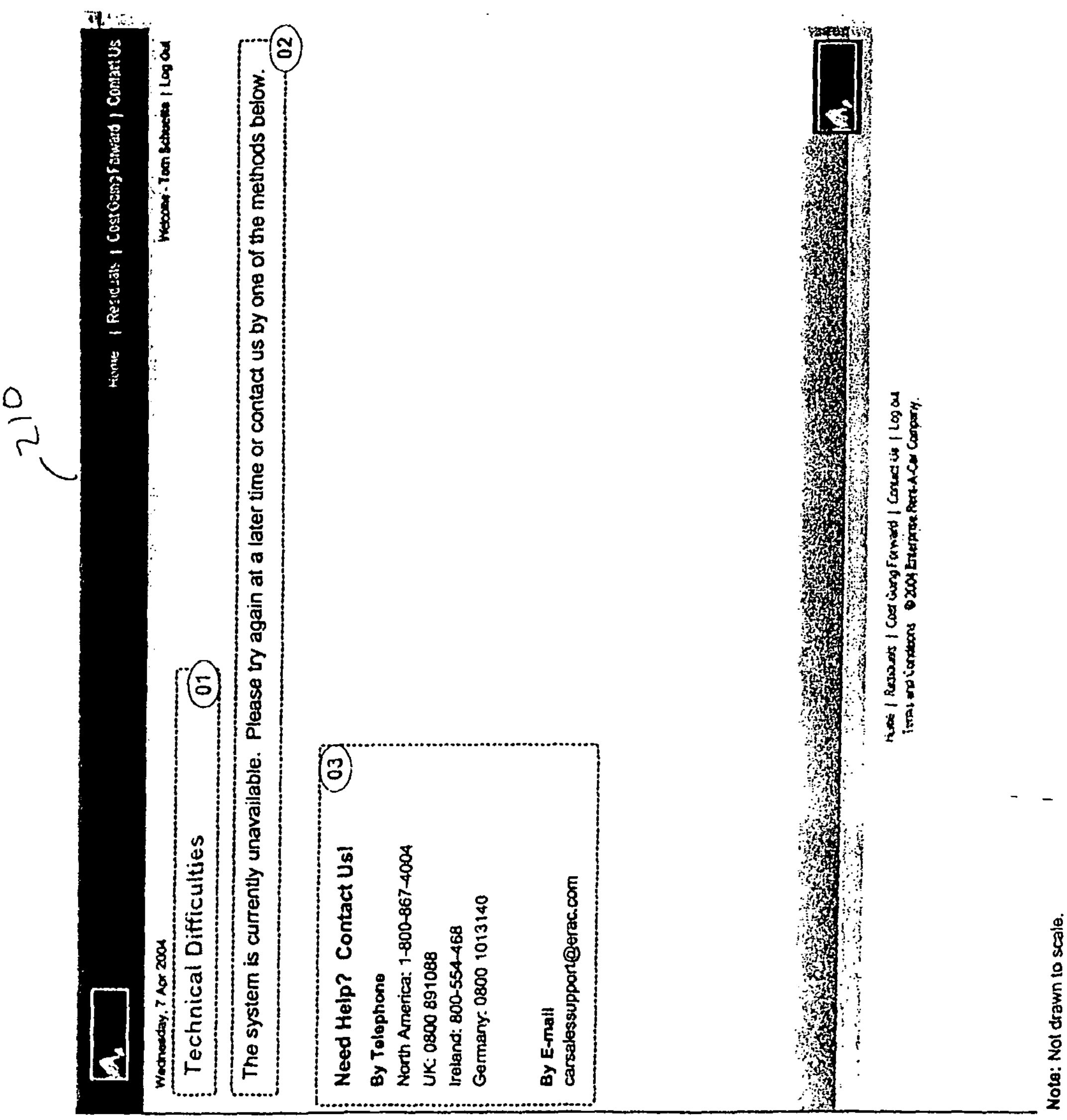
210
Home | Residuals | Cost Going Forward | Contact Us
Wednesday, 7 Apr 2004
Welcome - Tom Schoettle | Log Out
Technical Difficulties
01
The system is currently unavailable. Please try again at a later time or contact us by one of the methods below.
02
Need Help? Contact Us!
03
By Telephone
North America: 1-800-867-4004
UK: 0800 891088
Ireland: 800-554-468
Germany: 0800 1013140
By E-mail
carsalessupport@erac.com
Home | Residuals | Cost Going Forward | Contact Us | Log Out
Terms and Conditions © 2004 Enterprise Rent-A-Car Company.
Note: Not drawn to scale.

Figure 5(b)

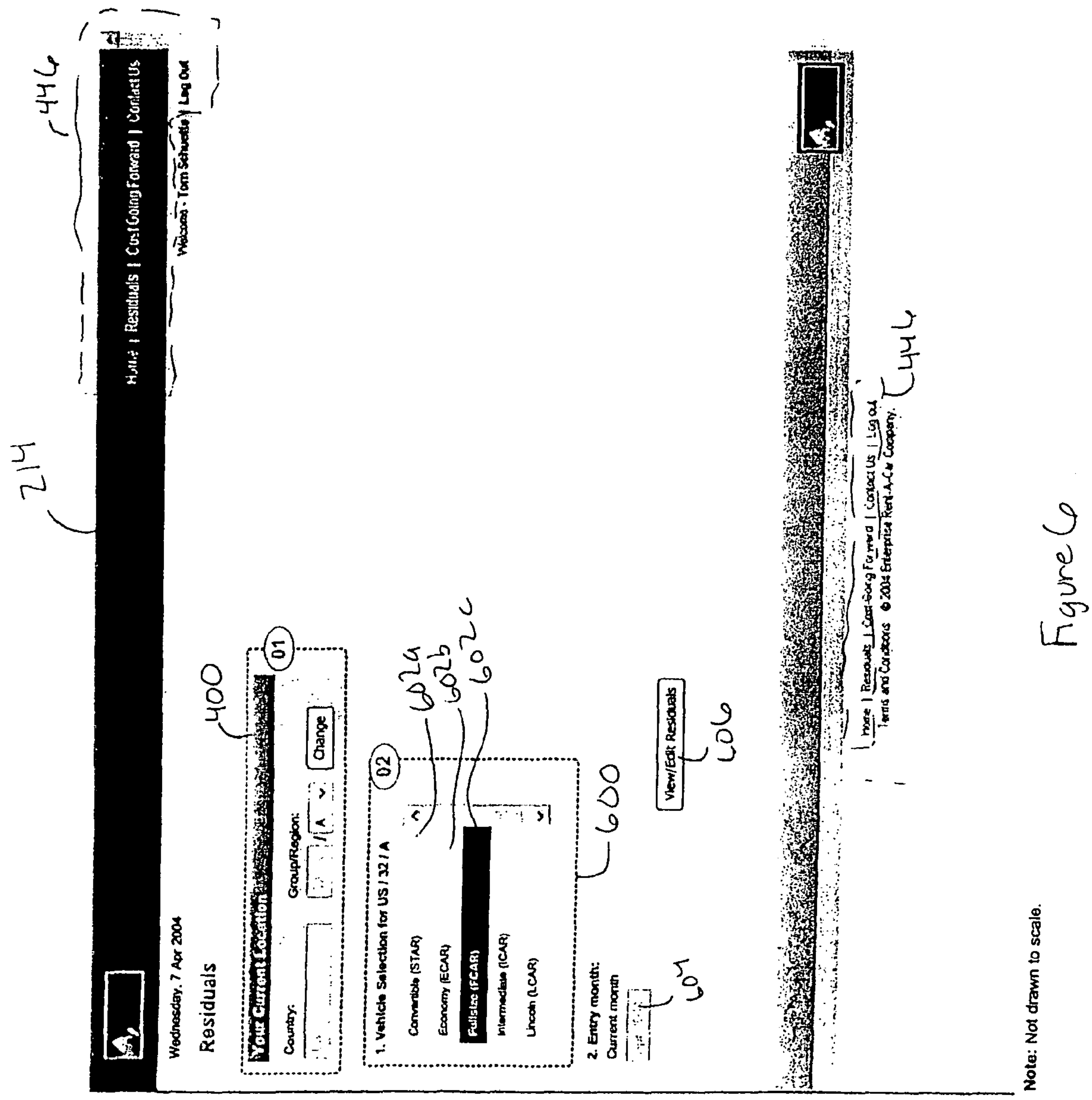
Home | Residuals | Cost Going Forward | Contact Us
Welcome - Tom Schuette | Log Out
Wednesday, 7 Apr 2004
Residuals
Your Current Location
Country:
Group/Region:
Change
01
02
1. Vehicle Selection for US / 32 / A
Convertible (STAR)
Economy (ECAR)
Fullsize (FCAR)
Intermediate (ICAR)
Lincoln (LCAR)
2. Entry month:
Current month
View/Edit Residuals
Home | Residuals | Cost Going Forward | Contact Us | Log Out
Terms and Conditions © 2004 Enterprise Rent-A-Car Company.
214
446
400
600
602a
602b
602c
604
606
Note: Not drawn to scale.

Figure 6

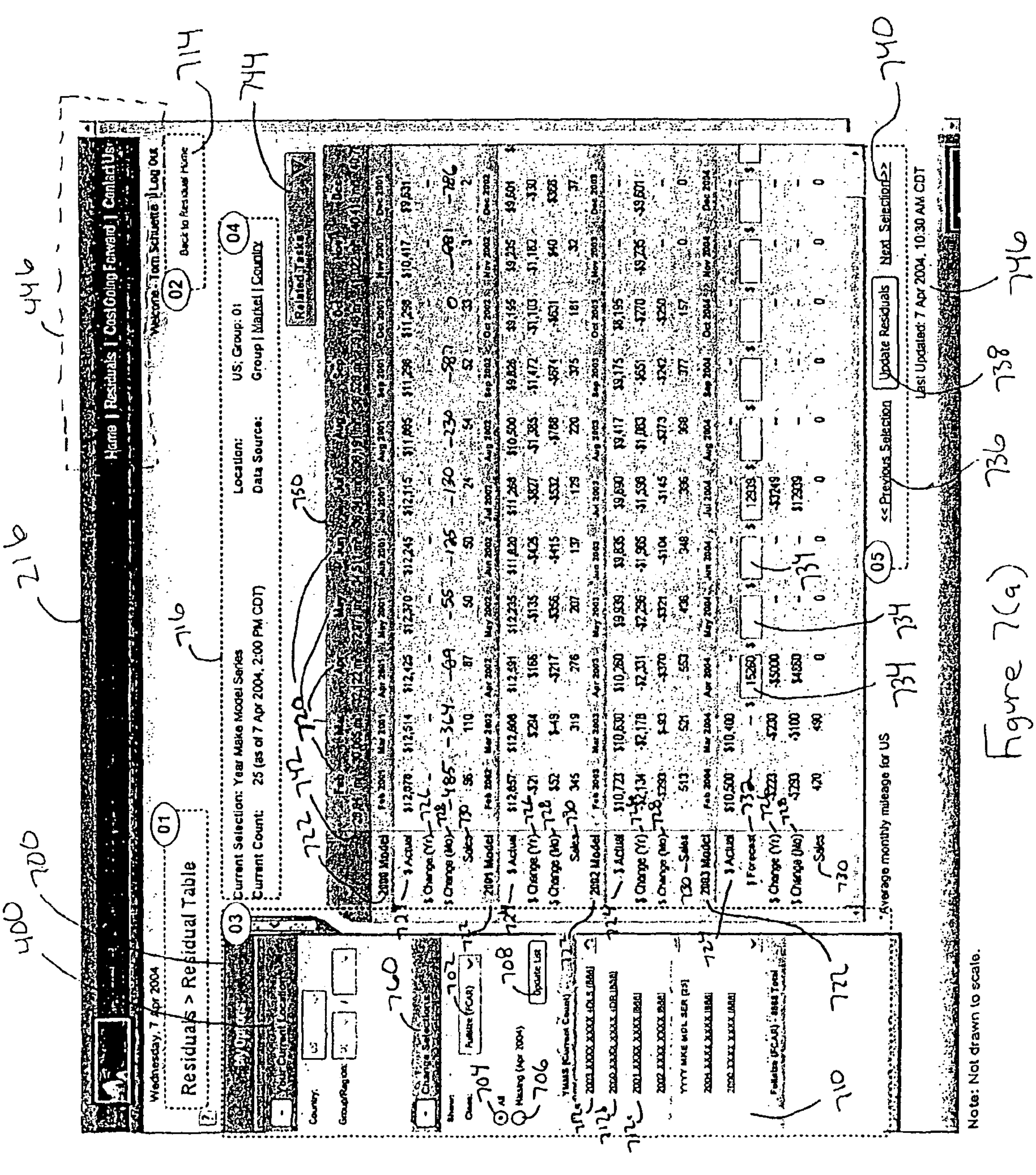

Figure 7(a)

Note: Not drawn to scale.

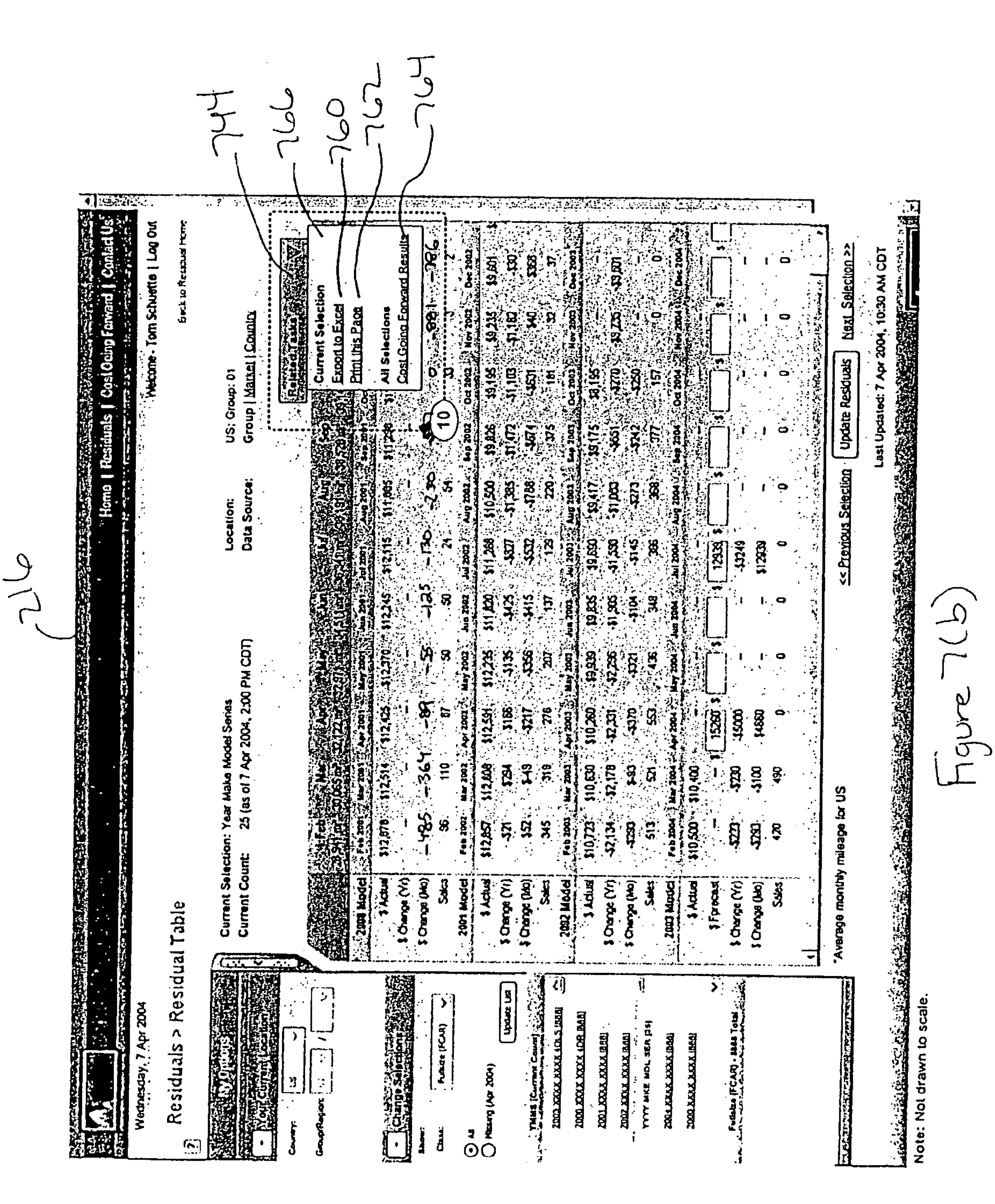
216
744
766
760
762
764
Home | Residuals | Cost Going Forward | Contact Us
Welcome - Tom Schuette | Log Out
Wednesday, 7 Apr 2004
Residuals > Residual Table
Current Selection: Year Make Model Series
Current Count: 25 (as of 7 Apr 2004, 2:00 PM CDT)
Location: US; Group: 01
Data Source: Group | Market | Country
Related Tasks
Current Selection
Export to Excel
Print this Page
All Selections
Cost Going Forward Results
10
*Average monthly mileage for US
<< Previous Selection
Update Residuals
Next Selection >>
Last Updated: 7 Apr 2004, 10:30 AM CDT
Note: Not drawn to scale.

Figure 7(b)

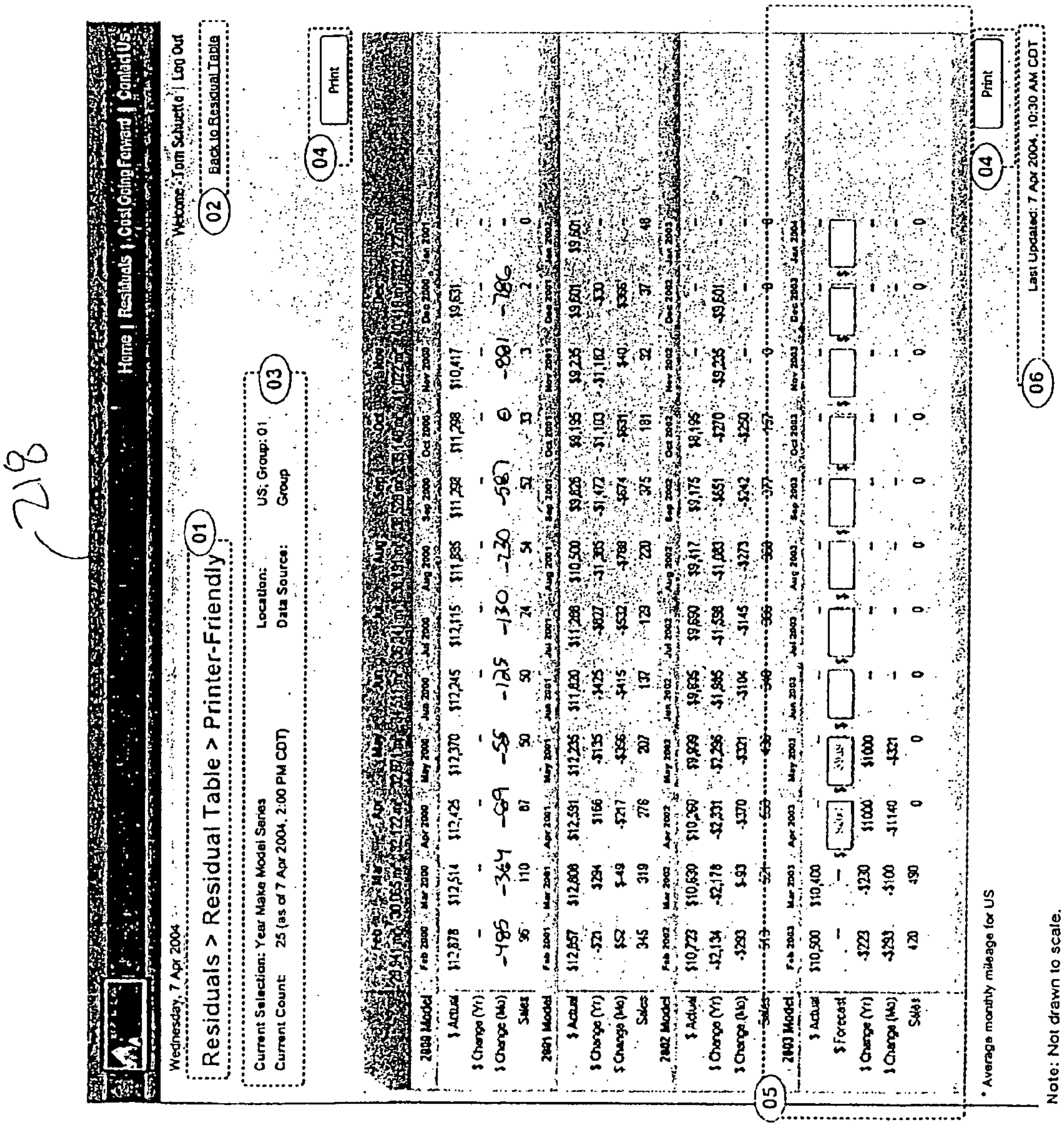
218
Home | Residuals | Cost Going Forward | Contact Us
Wednesday, 7 Apr 2004
Welcome: Tom Schuette | Log Out
Residuals > Residual Table > Printer-Friendly
01
02
Back to Residual Table
Current Selection: Year Make Model Series
Current Count: 25 (as of 7 Apr 2004, 2:00 PM CDT)
Location: US; Group: 01
Data Source: Group
03
04
Print
05
06
* Average monthly mileage for US
Note: Not drawn to scale.
Last Updated: 7 Apr 2004, 10:30 AM CDT

Figure 7(c)

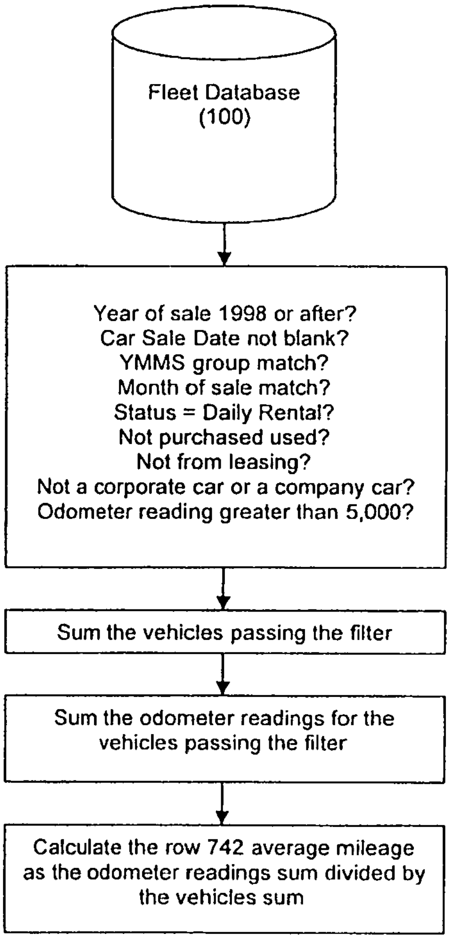


Figure 8

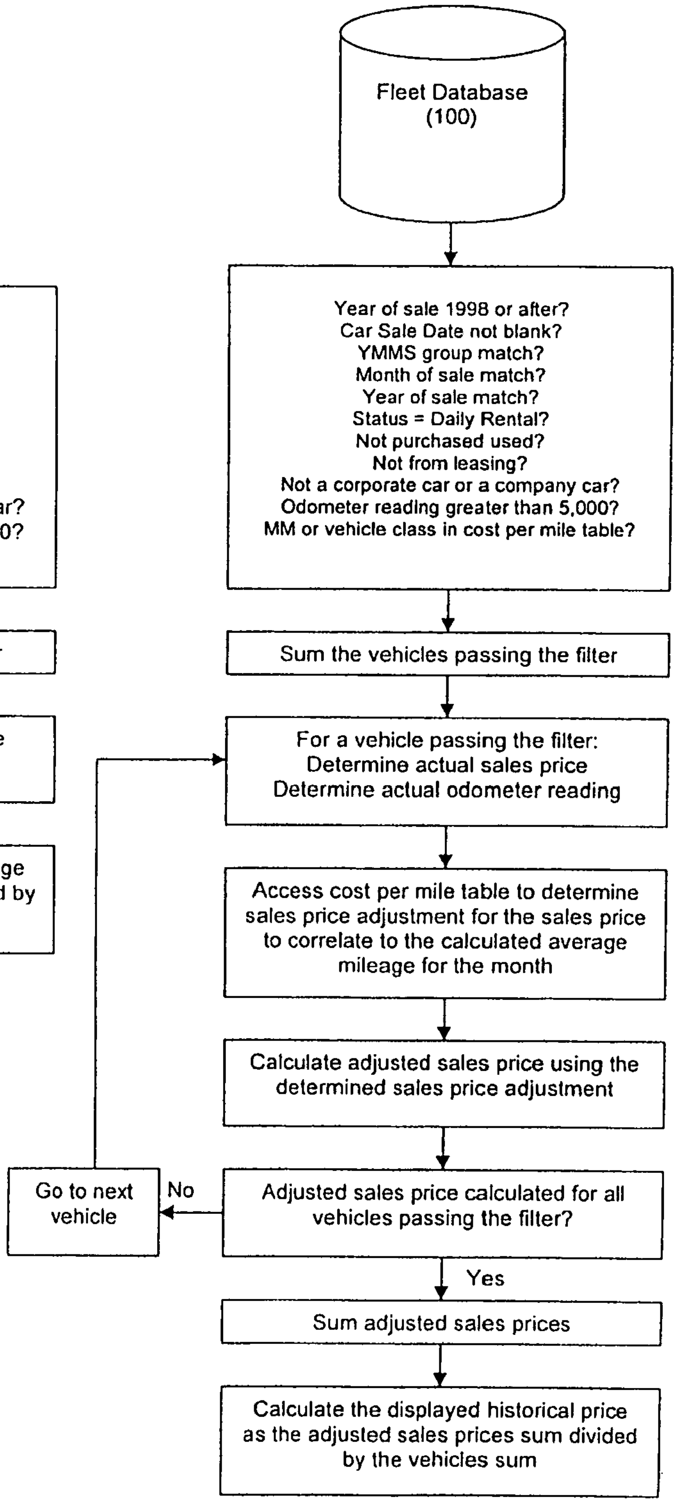


Figure 9

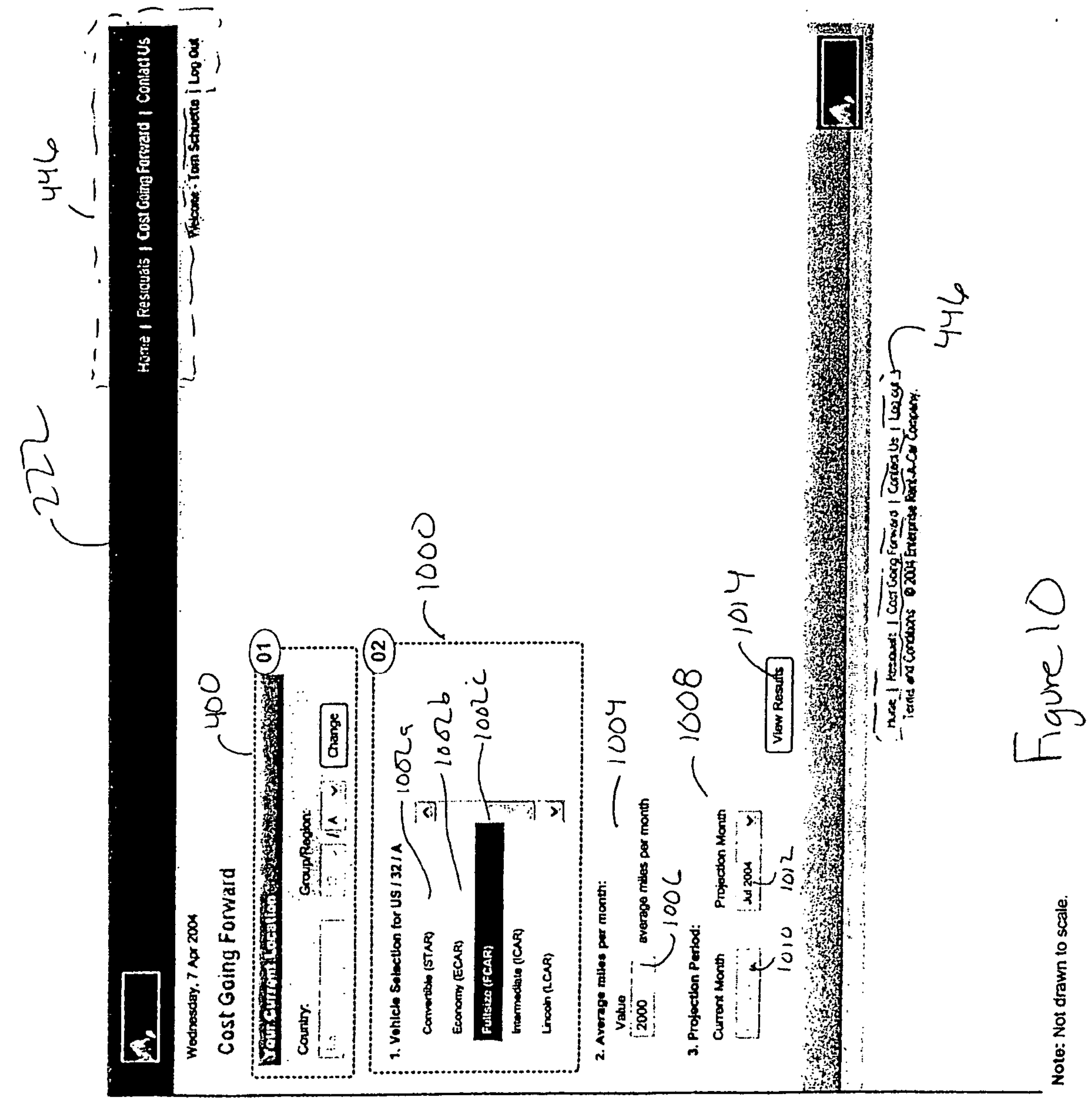


Figure 10

Note: Not drawn to scale.

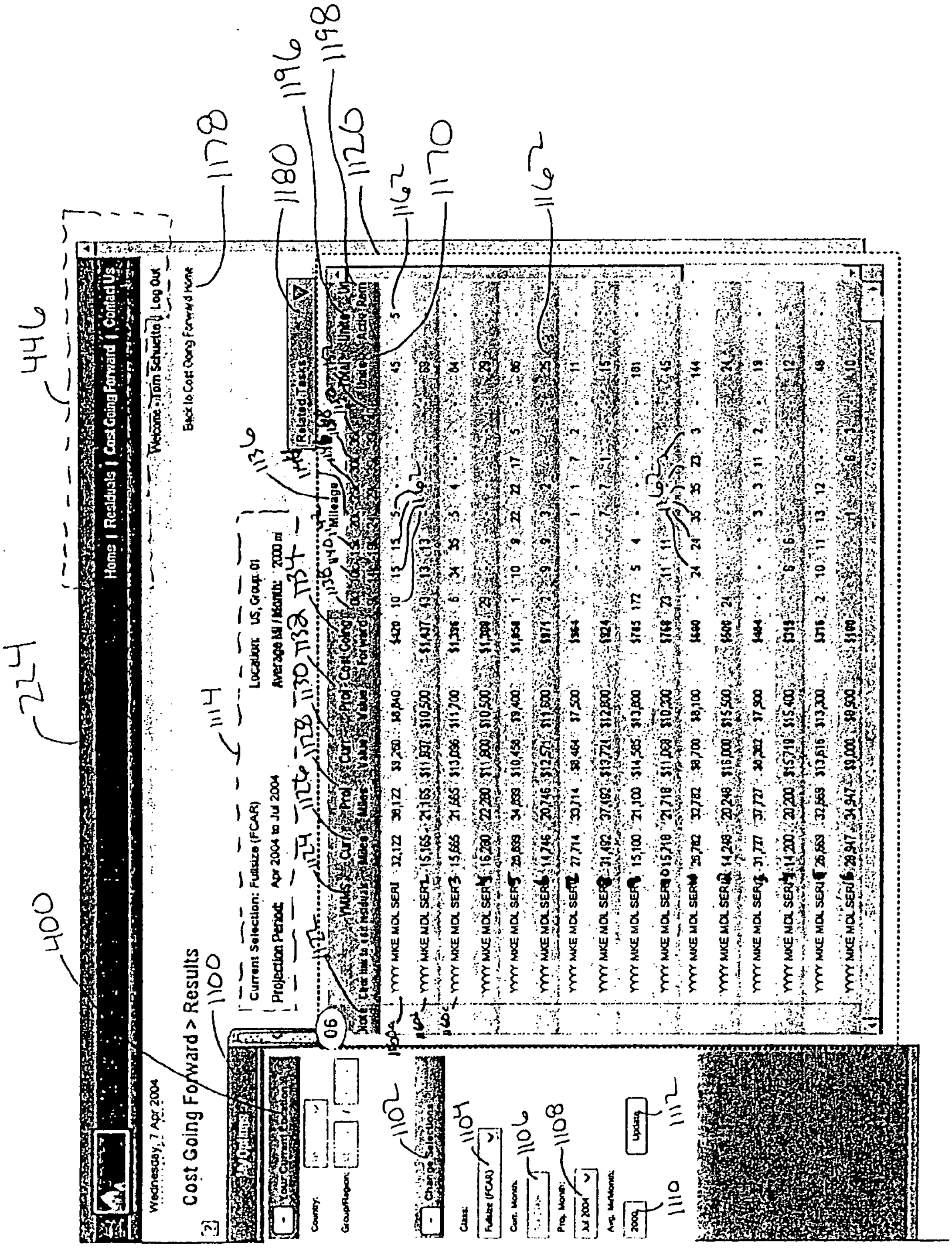

Figure 11(a)

Note: Not drawn to scale.

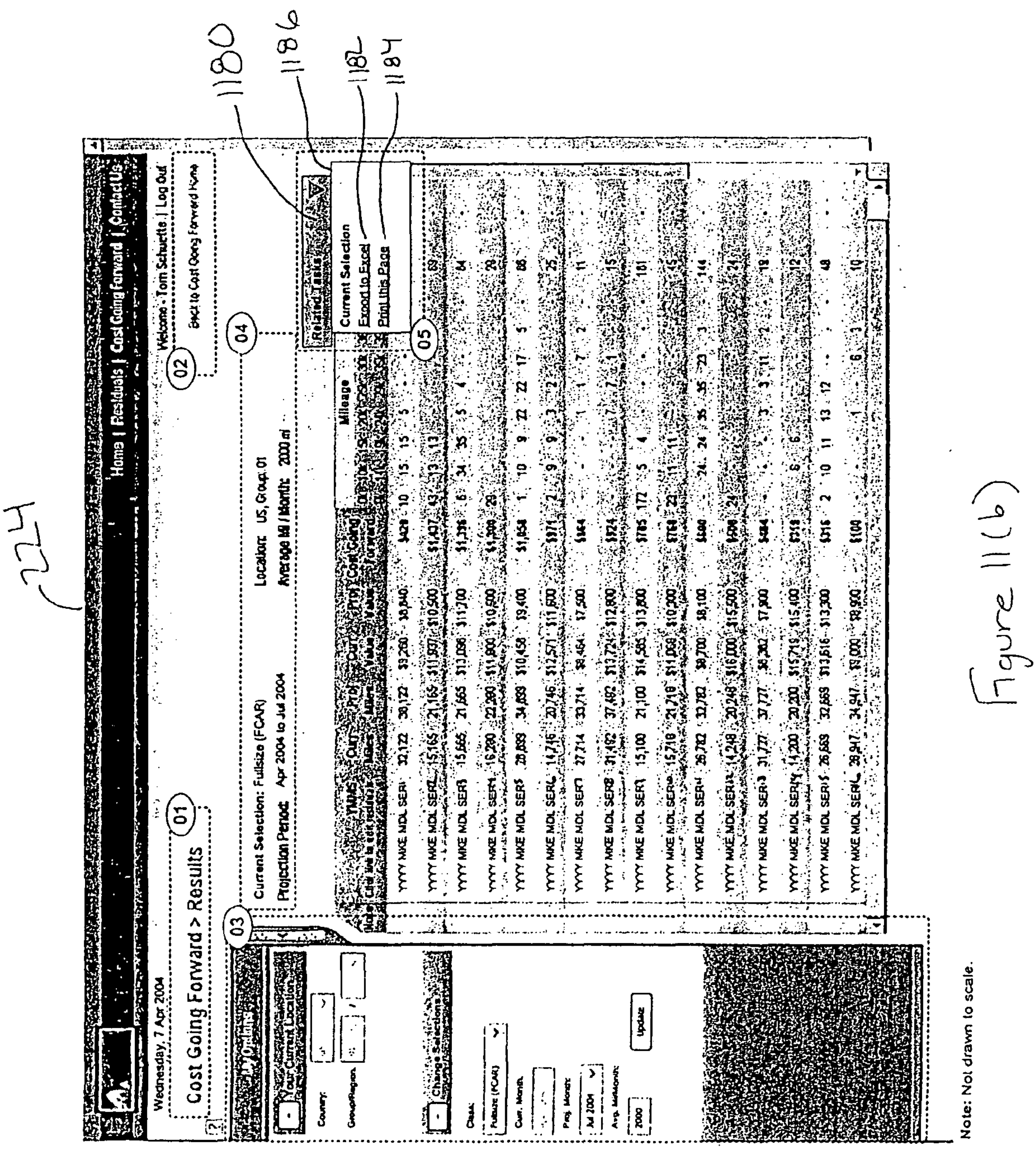
224
1180
1186
1182
1184
Home | Residuals | Cost Going Forward | Contact Us
Wednesday, 7 Apr 2004
Welcome - Tom Schuette | Log Out
Cost Going Forward > Results
Back to Cost Going Forward Home
Current Selection: Fullsize (FCAR)
Location: US, Group: 01
Projection Period: Apr 2004 to Jul 2004
Average Mi / Month: 2000 mi
Related Tasks
Current Selection
Export to Excel
Print this Page
Mileage
Change Selections
Update
Note: Not drawn to scale.

Figure 11(b)

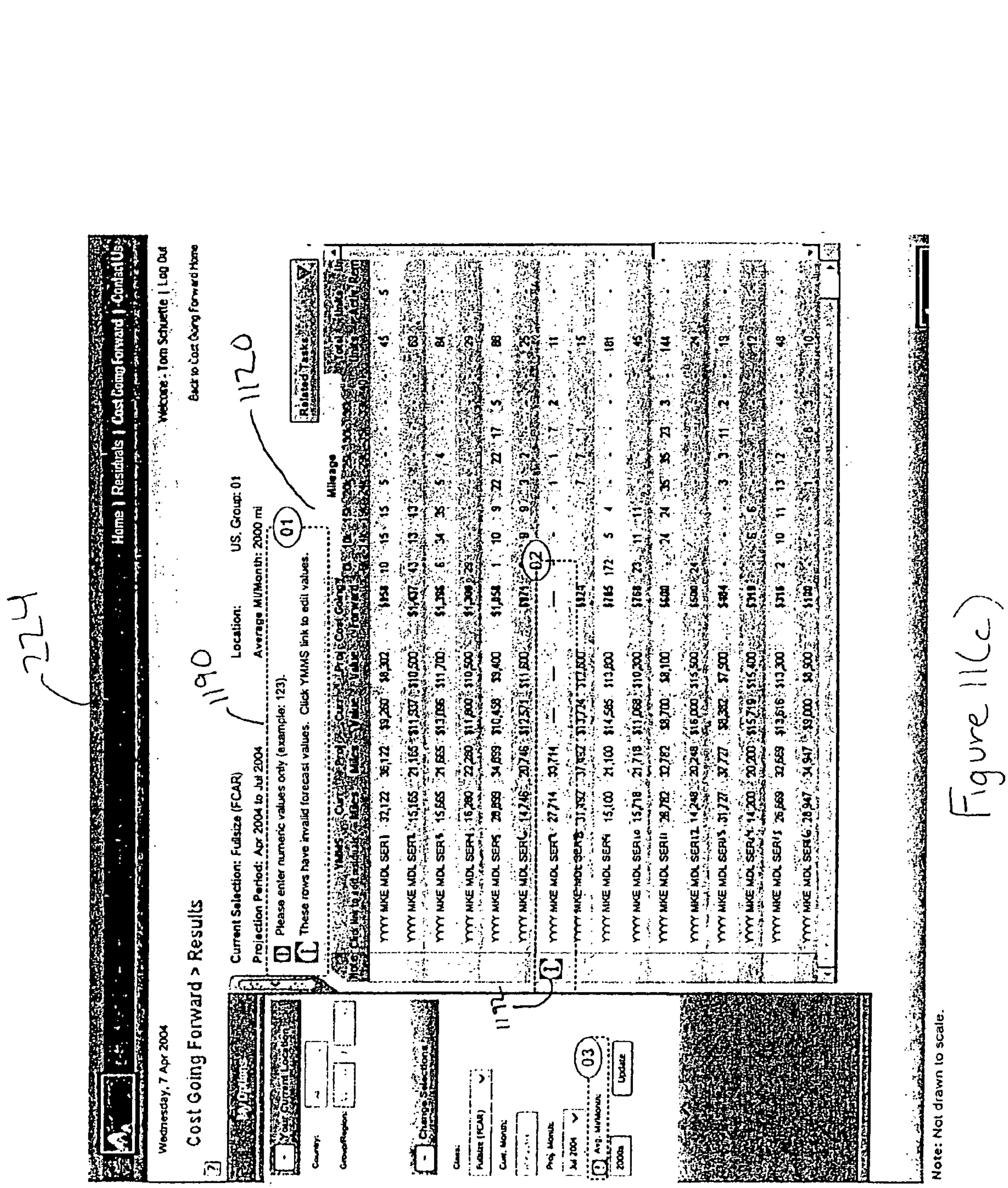

224
1190
1120
1172
Cost Going Forward > Results
Note: Not drawn to scale.


Figure 11(c)

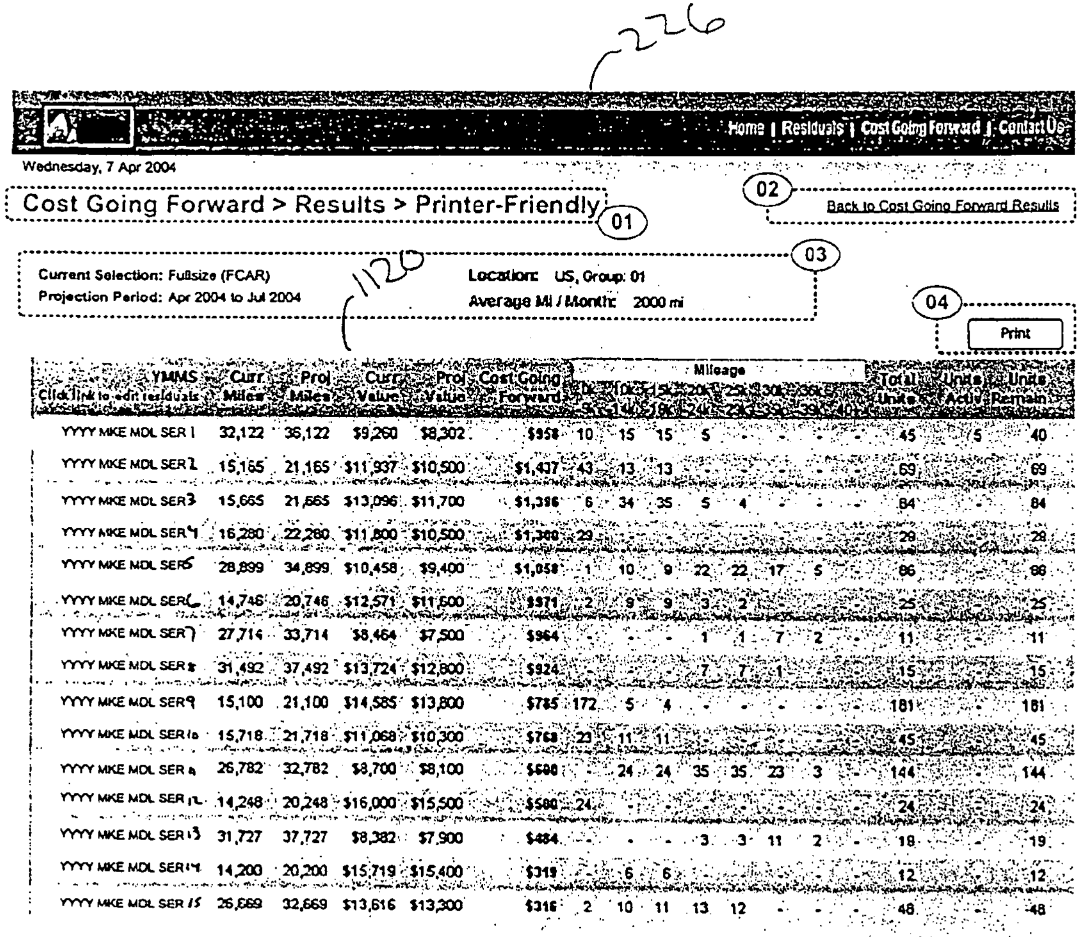


Note: Not drawn to scale.

Figure 11(d)

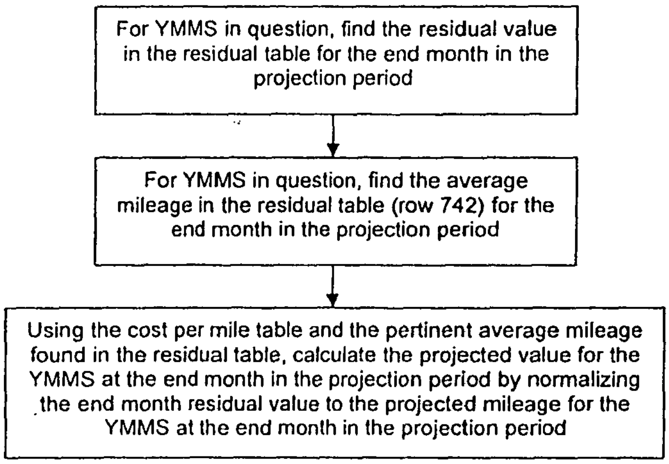
For YMMS in question, find the residual value in the residual table for the end month in the projection period
For YMMS in question, find the average mileage in the residual table (row 742) for the end month in the projection period
Using the cost per mile table and the pertinent average mileage found in the residual table, calculate the projected value for the YMMS at the end month in the projection period by normalizing the end month residual value to the projected mileage for the YMMS at the end month in the projection period

Figure 12

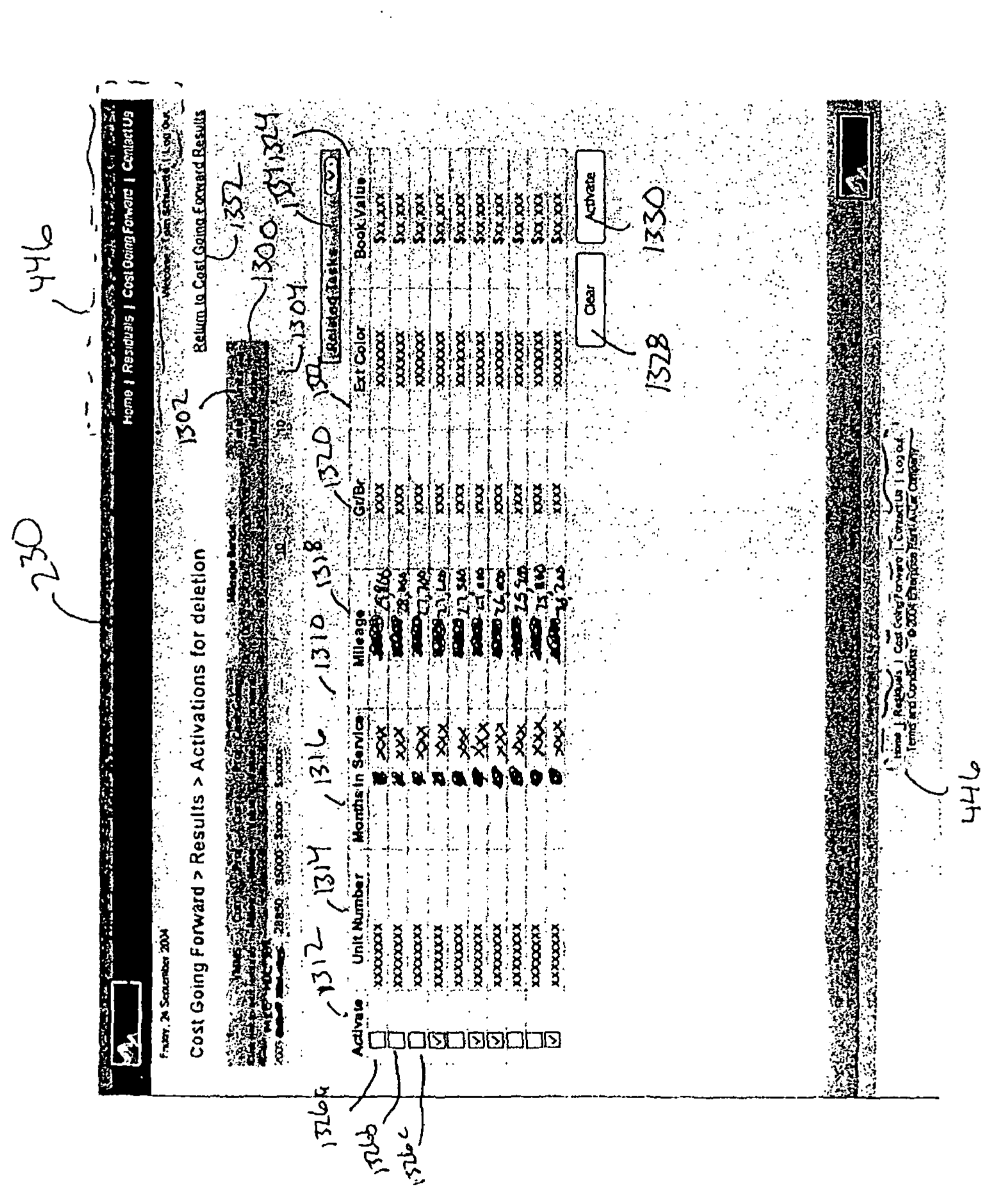

Figure 13

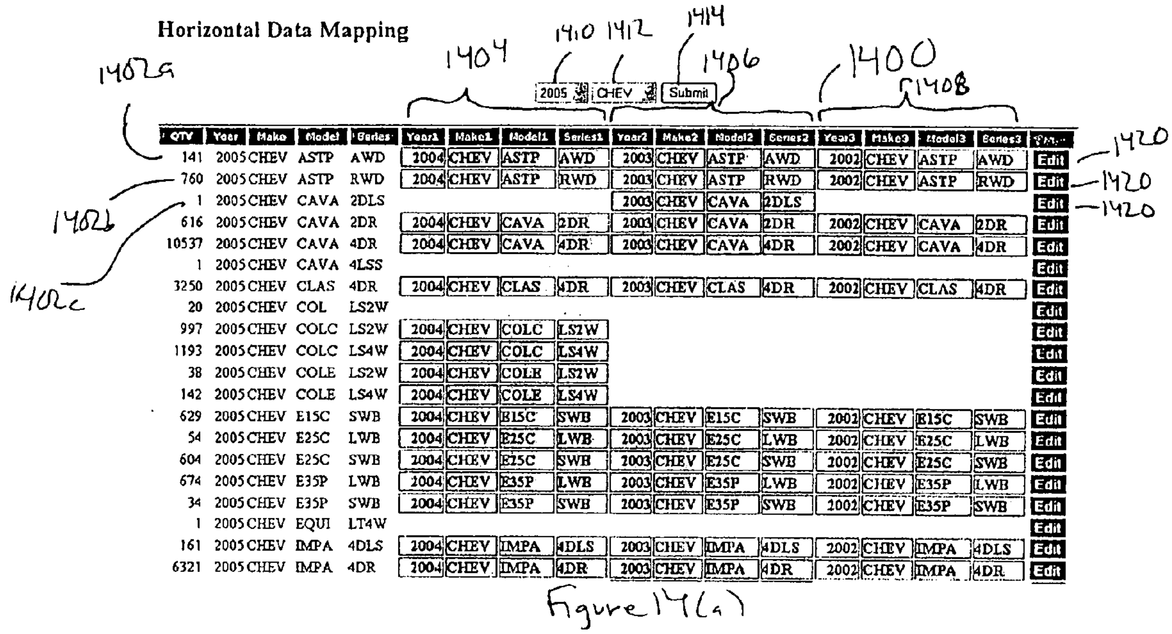


Figure 14(a)

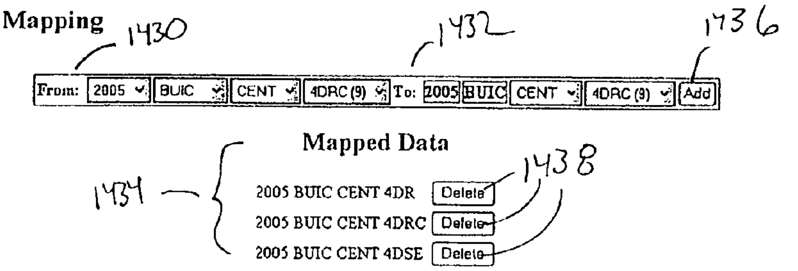


Figure 14(b)

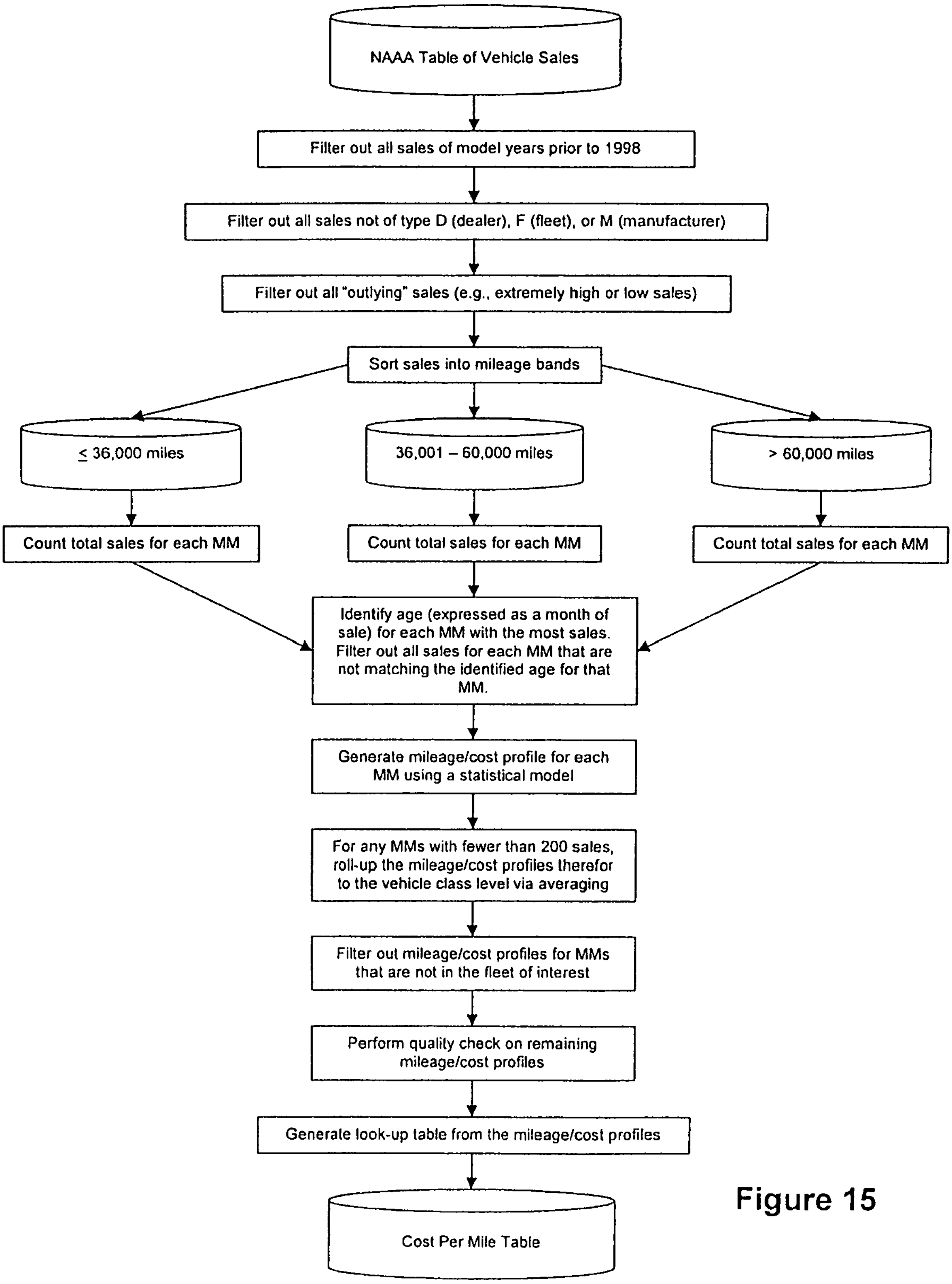
NAAA Table of Vehicle Sales
Filter out all sales of model years prior to 1998
Filter out all sales not of type D (dealer), F (fleet), or M (manufacturer)
Filter out all "outlying" sales (e.g., extremely high or low sales)
Sort sales into mileage bands
≤ 36,000 miles
36,001 – 60,000 miles
> 60,000 miles
Count total sales for each MM
Count total sales for each MM
Count total sales for each MM
Identify age (expressed as a month of sale) for each MM with the most sales. Filter out all sales for each MM that are not matching the identified age for that MM.
Generate mileage/cost profile for each MM using a statistical model
For any MMs with fewer than 200 sales, roll-up the mileage/cost profiles therefor to the vehicle class level via averaging
Filter out mileage/cost profiles for MMs that are not in the fleet of interest
Perform quality check on remaining mileage/cost profiles
Generate look-up table from the mileage/cost profiles
Cost Per Mile Table

Figure 15

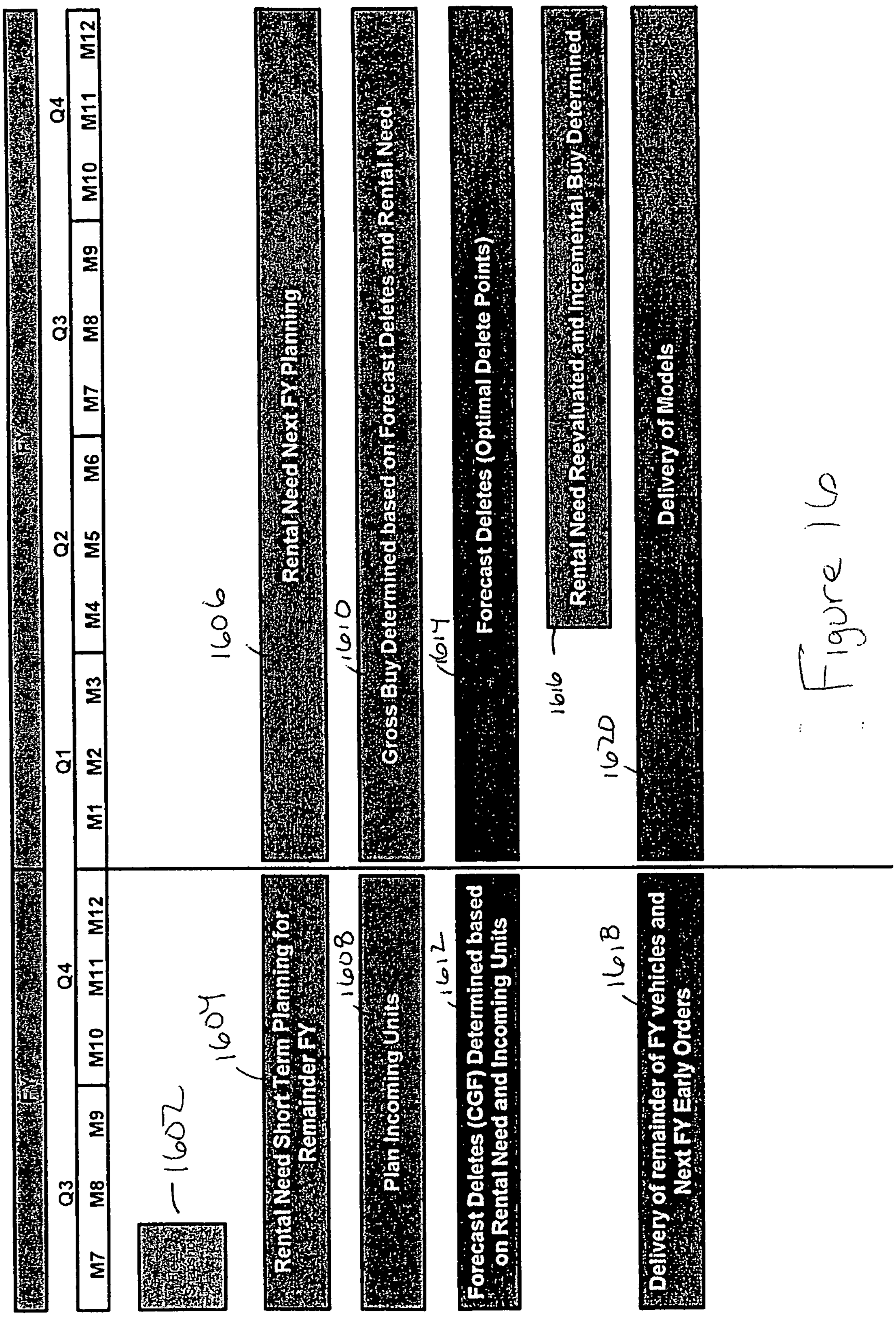
FY
FY
Q3
Q4
M7
M8
M9
M10
M11
M12
Q1
Q2
Q3
Q4
M1
M2
M3
M4
M5
M6
M7
M8
M9
M10
M11
M12
1602
1604
Rental Need Short Term Planning for Remainder FY
1606
Rental Need Next FY Planning
1608
Plan Incoming Units
1610
Gross Buy Determined based on Forecast Deletes and Rental Need
1612
Forecast Deletes (CGF) Determined based on Rental Need and Incoming Units
1614
Forecast Deletes (Optimal Delete Points)
1616
Rental Need Reevaluated and Incremental Buy Determined
1618
Delivery of remainder of FY vehicles and Next FY Early Orders
1620
Delivery of Models

Figure 16

## High Level LTFP Process

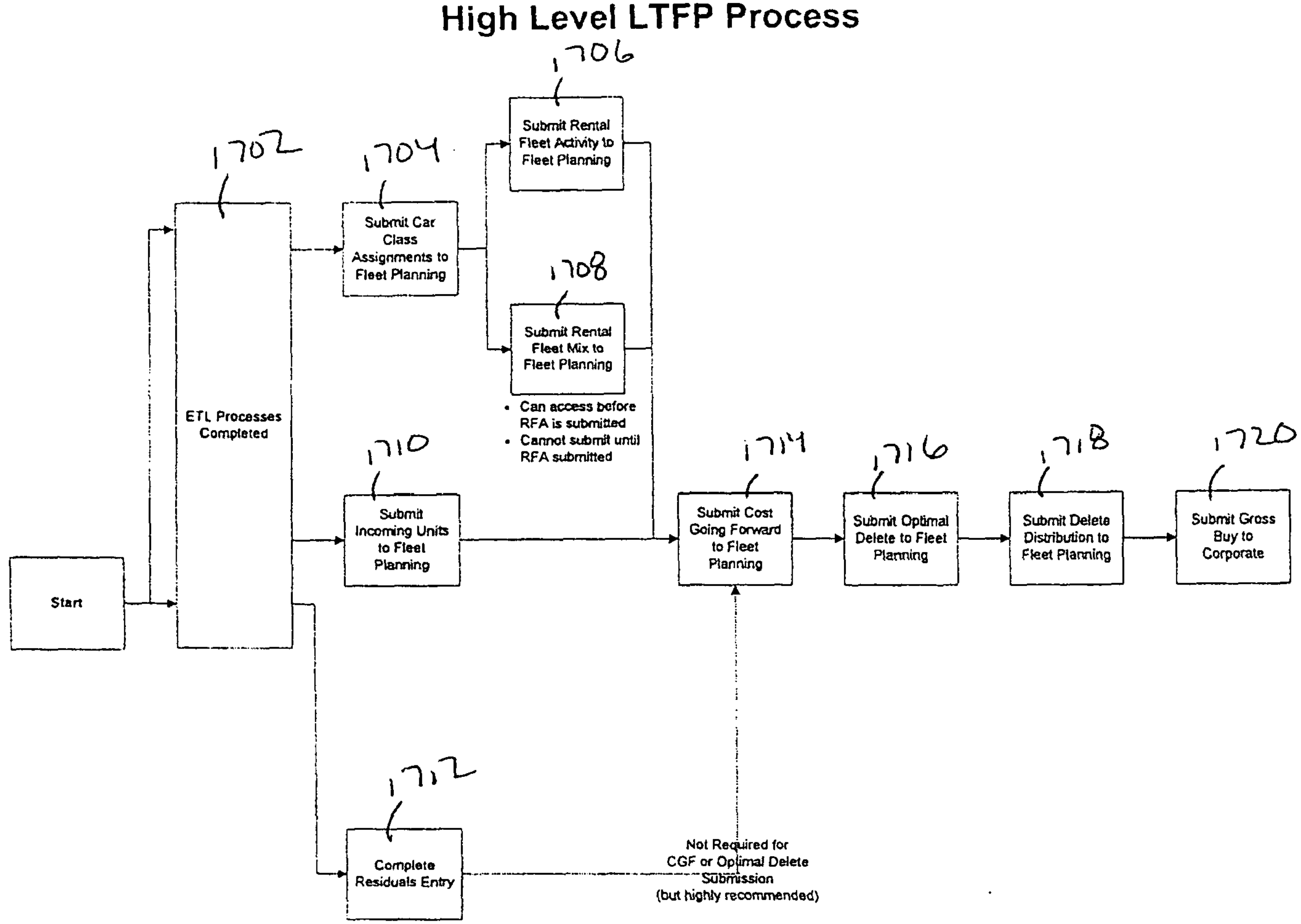


Figure 17

Checklist and Workflow

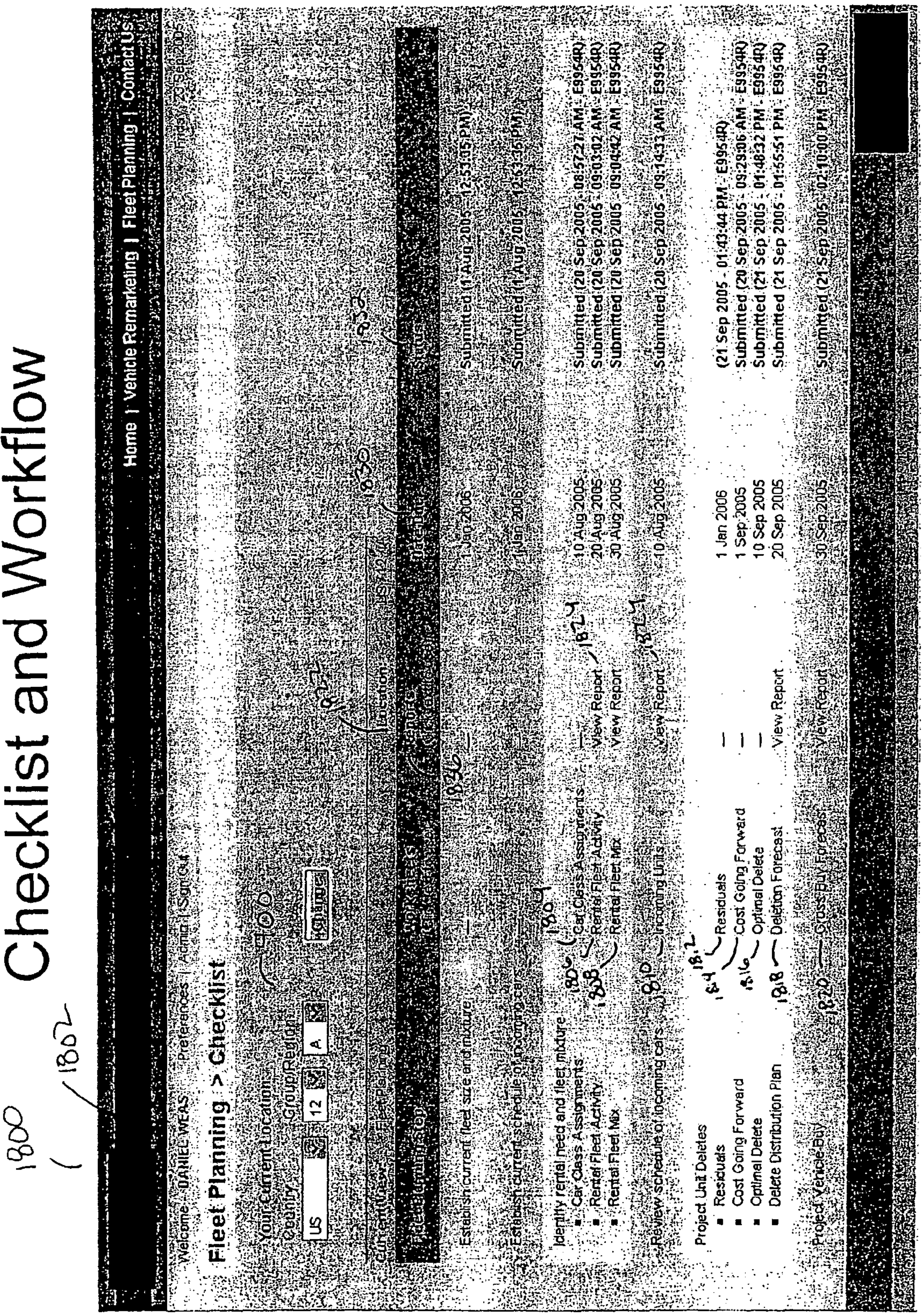


Figure 18

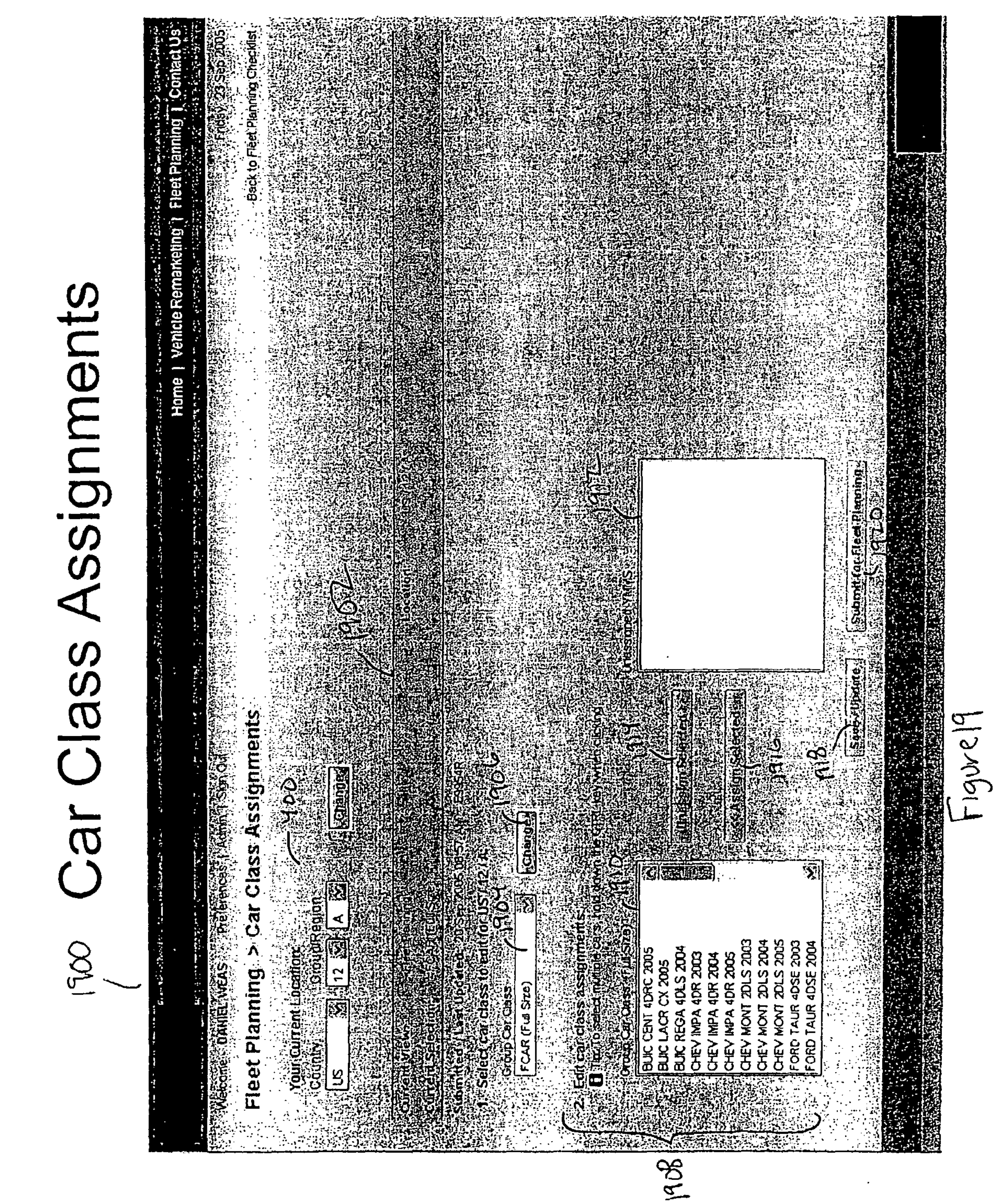
1900
Car Class Assignments
Welcome: DANIEL WEAS | Preferences | Admin | Sign Out
Home | Vehicle Remarketing | Fleet Planning | Contact Us
Friday, 23 Sep 2005
Back to Fleet Planning Checklist
Fleet Planning > Car Class Assignments
Your Current Location:
Country
Group/Region
US
12
A
Change
400
1902
1. Select Car class to edit for US/12/A
Group Car Class
FCAR (Full Size)
Change
1904
1906
2. Edit car class assignments
1908
1910
BUIC CENT 4DRC 2005
BUIC LACR CX 2005
BUIC REGA 4DLS 2004
CHEV IMPA 4DR 2003
CHEV IMPA 4DR 2004
CHEV IMPA 4DR 2005
CHEV MONT 2DLS 2003
CHEV MONT 2DLS 2004
CHEV MONT 2DLS 2005
FORD TAUR 4DSE 2003
FORD TAUR 4DSE 2004
1912
1914
1916
1918
Save/Update
Submit for Fleet Planning
1920

Figure19

# Rental Fleet Need Home Page

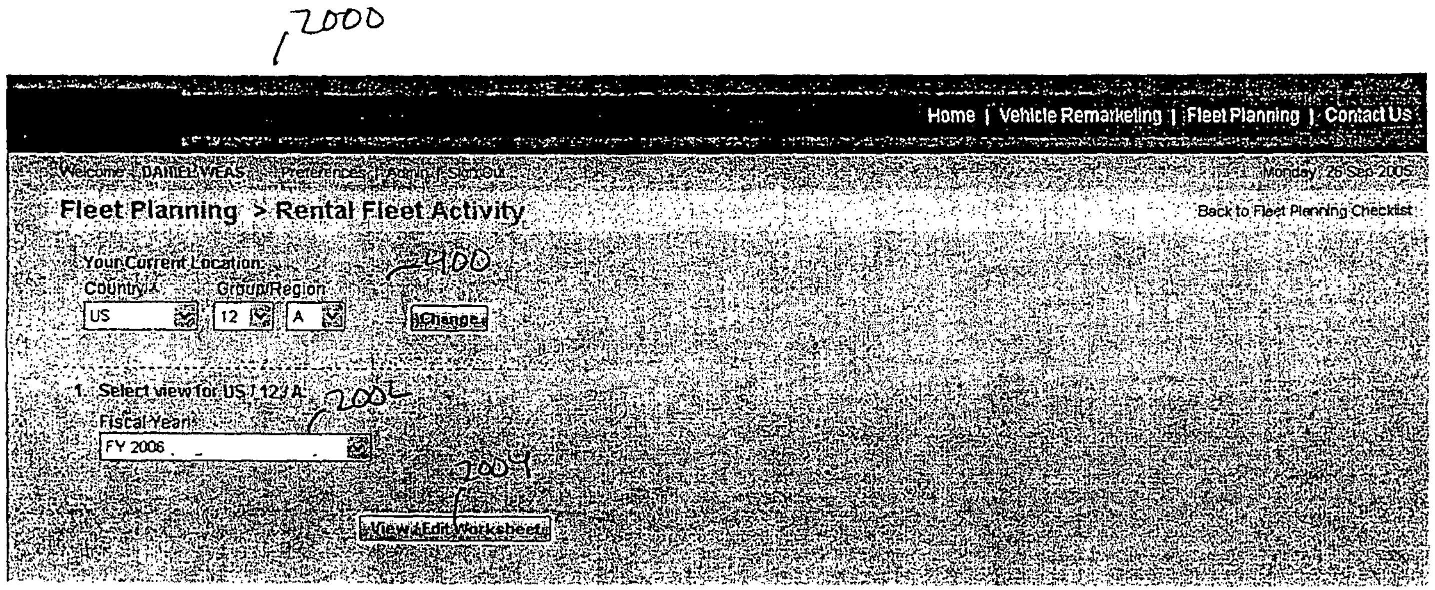


Figure 20(a)

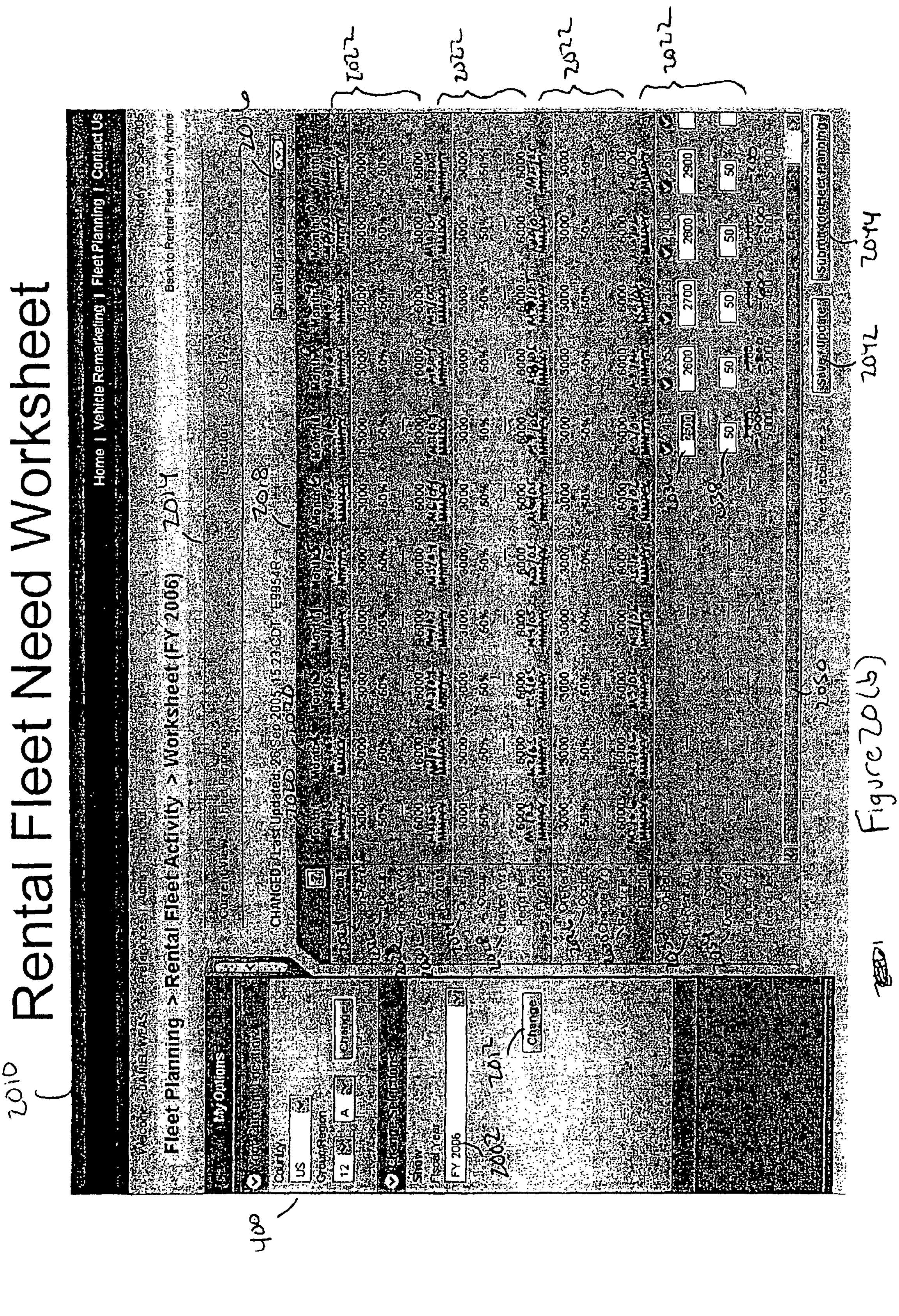
Rental Fleet Need Worksheet
Fleet Planning > Rental Fleet Activity > Worksheet (FY 2006)
Home | Vehicle Remarketing | Fleet Planning | Contact Us
Save Updates
Submit to Fleet Planning
Change
FY 2006
US
Figure 20(b)

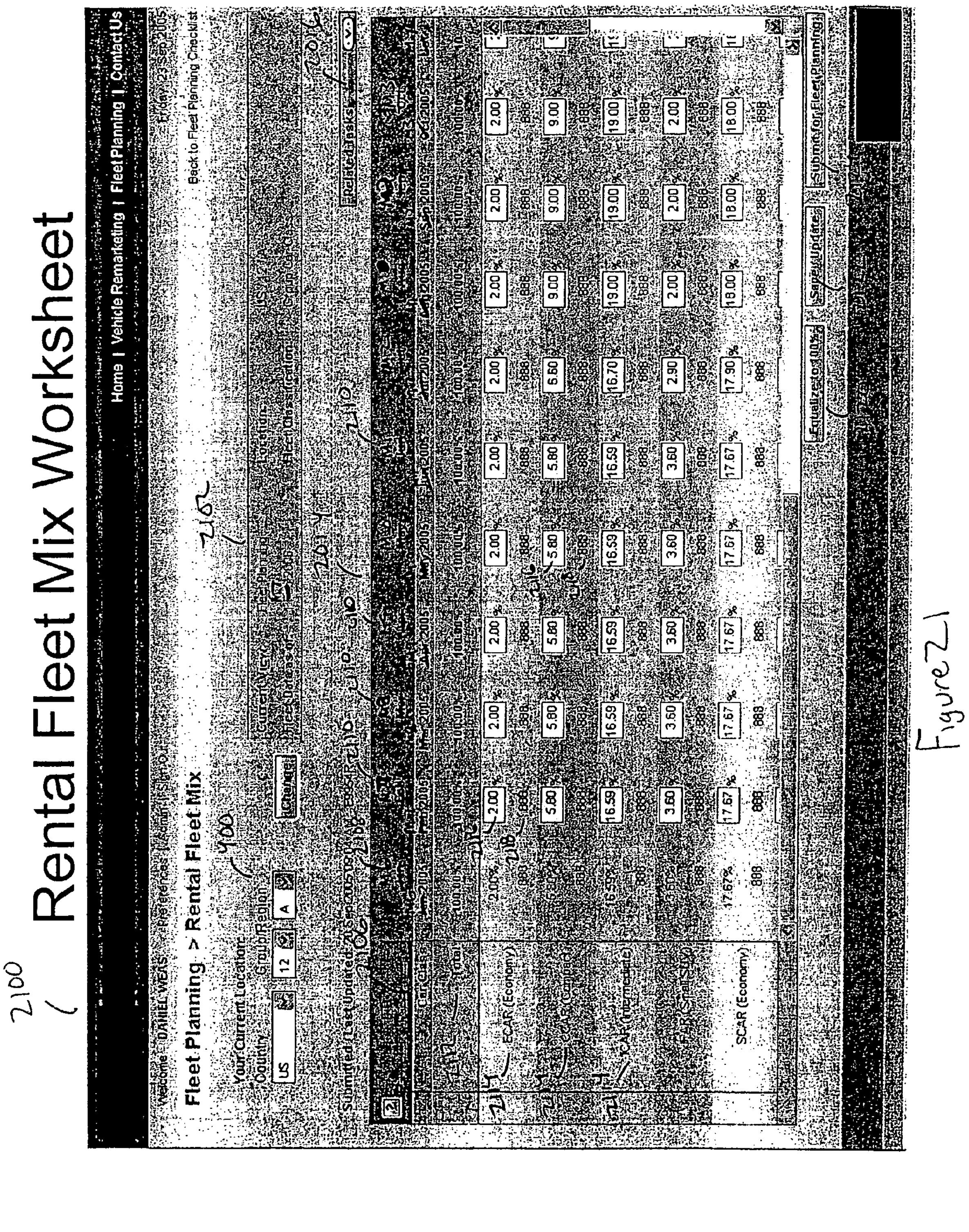
Rental Fleet Mix Worksheet
Fleet Planning > Rental Fleet Mix
Home | Vehicle Remarketing | Fleet Planning | Contact Us
Figure 21

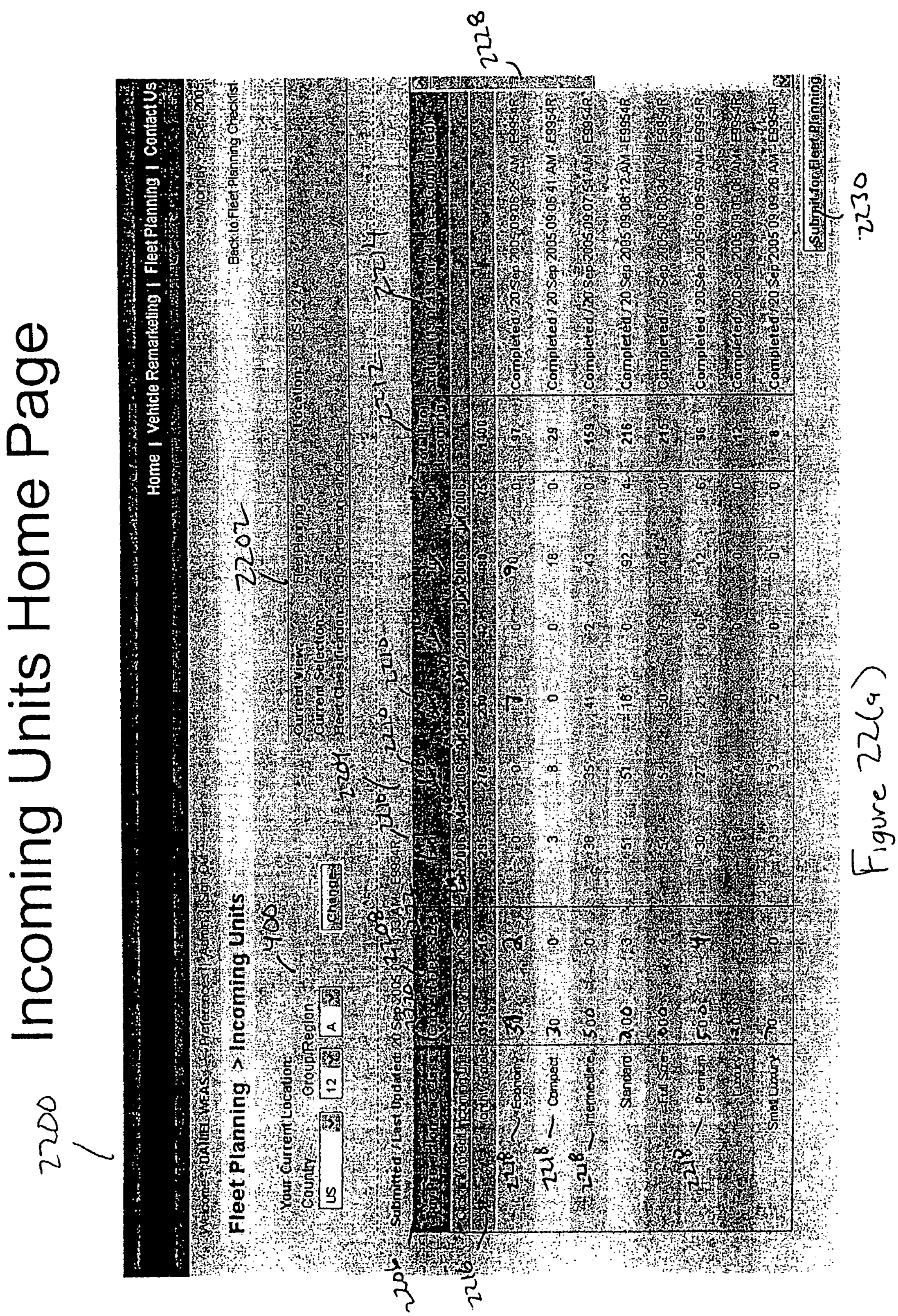
Incoming Units Home Page
Home | Vehicle Remarketing | Fleet Planning | Contact Us
Fleet Planning > Incoming Units
Your Current Location:
Country
Group/Region
Change
Back to Fleet Planning Checklist
Submit for Fleet Planning
2200
2202
2228
2230

Figure 22(a)

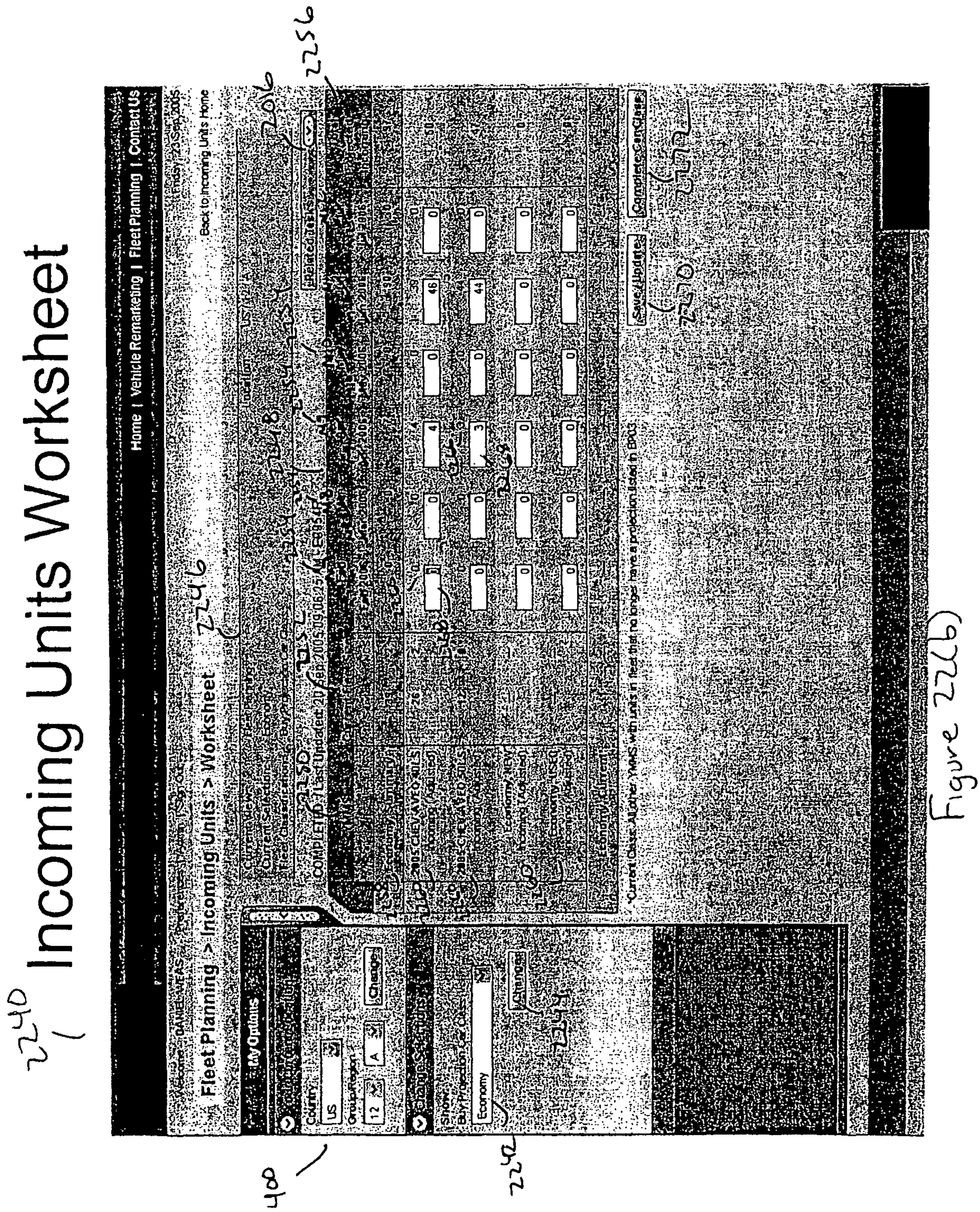
Incoming Units Worksheet
Home | Vehicle Remarketing | Fleet Planning | Contact Us
Fleet Planning > Incoming Units > Worksheet
Back to Incoming Units Home
My Options
Change
Economy
Save/Update
CompleteGenClass
2240
400
2242
2244
2246
2248
2250
2252
2254
2256
2258
2260
2262
2264
2266
2268
2270
2272

Figure 22(b)

# Residual Values Home Page

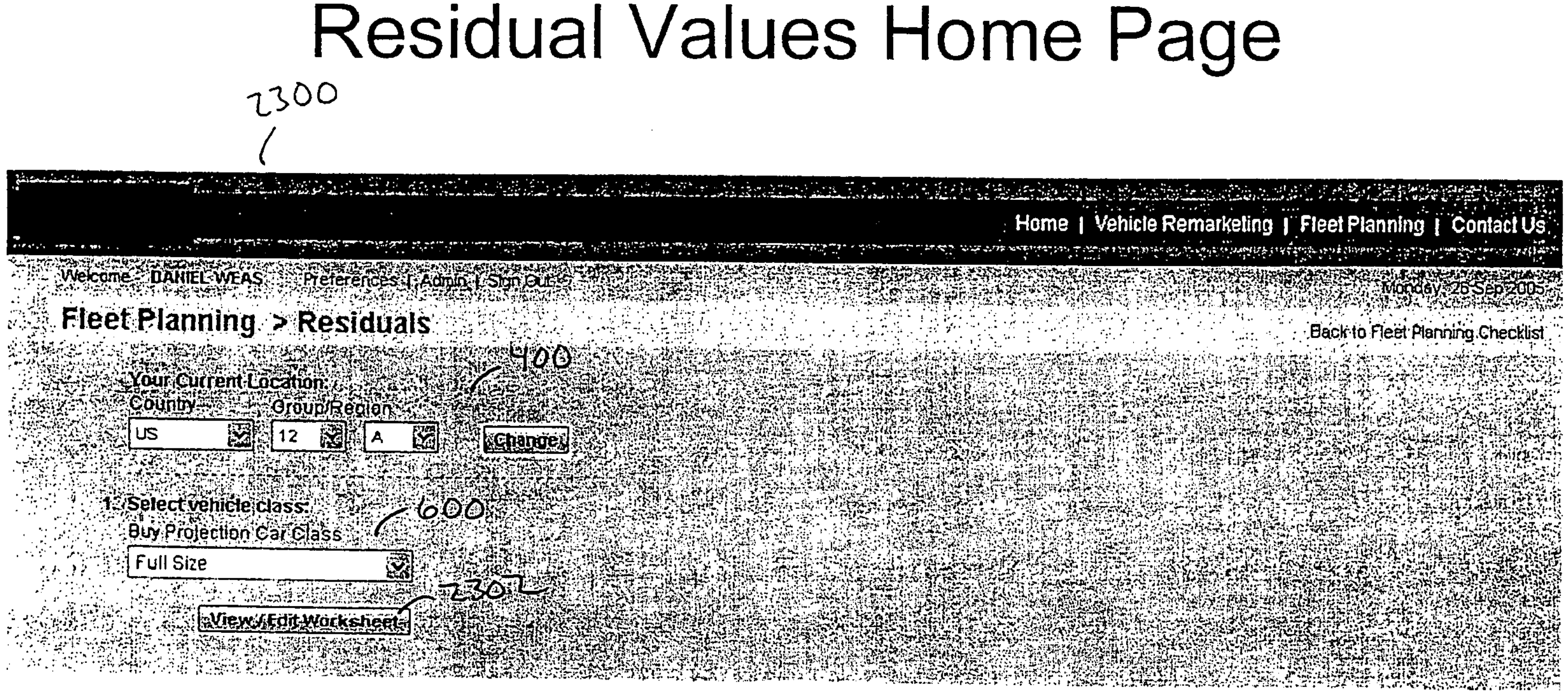


Figure 23(a)

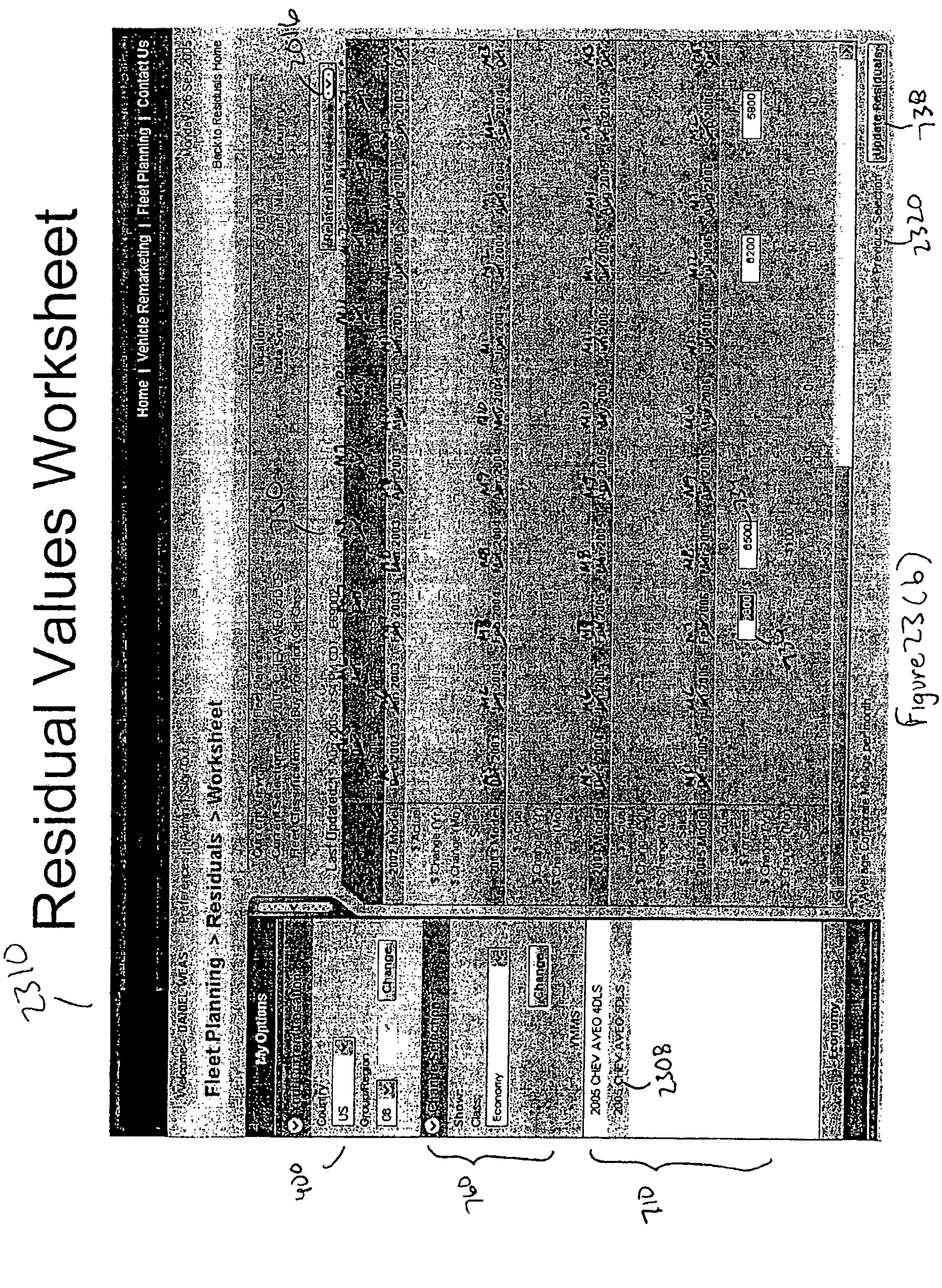
Residual Values Worksheet
Home | Vehicle Remarketing | Fleet Planning | Contact Us
Fleet Planning > Residuals > Worksheet
Back to Residuals Home
My Options
Country
US
Change
Show:
Class:
Economy
Change
2005 CHEV AVEO 4DLS
2005 CHEV AVEO 5DLS
Update Residuals
2310
2308
2320
400
760
710

Figure 23(b)

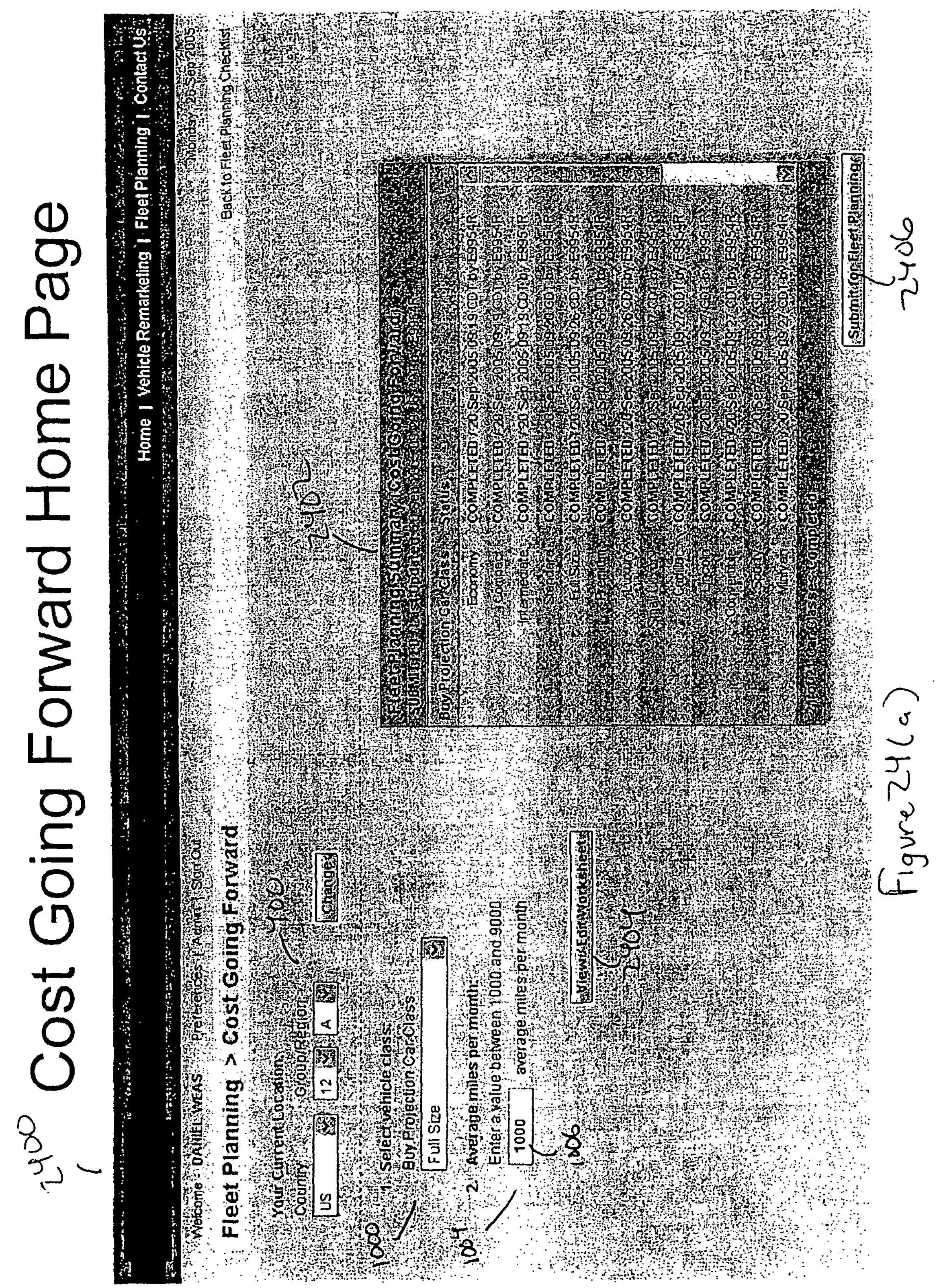
Cost Going Forward Home Page
2400
Home | Vehicle Remarketing | Fleet Planning | Contact Us
Fleet Planning > Cost Going Forward
Back to Fleet Planning Checklist
Your Current Location
Country
Group/Region
US
12
A
Change
1. Select vehicle class
Buy Projection Car Class
Full Size
2. Average miles per month
Enter a value between 1000 and 9000
1000
average miles per month
View/Edit Worksheets
Fleet Planning Summary (Cost Going Forward)
Buy Projection Car Class
Status
Economy
Compact
Intermediate
COMPLETED
Submit for Fleet Planning
1000
1004
1006
2402
2404
2406
Figure 24(a)

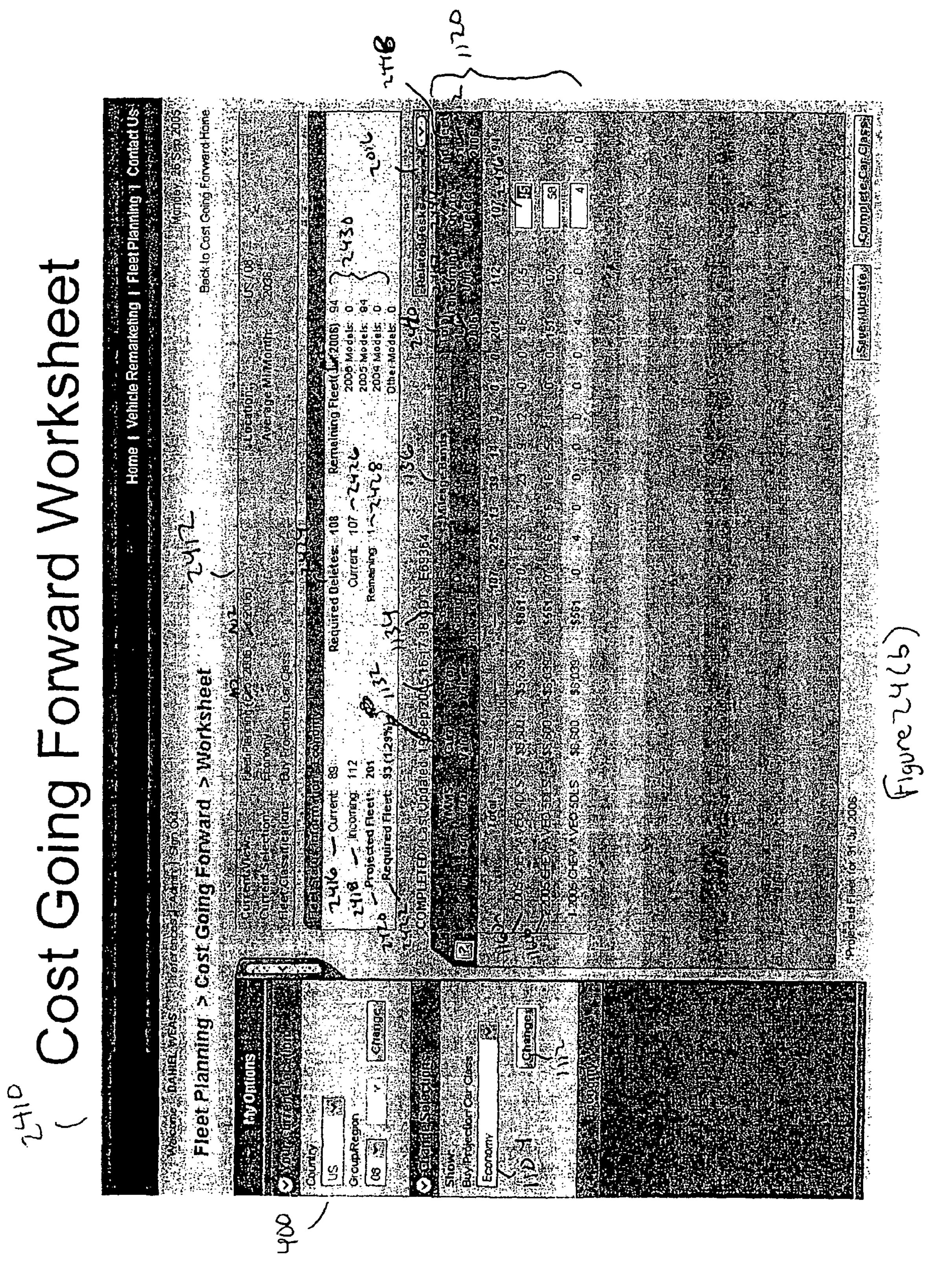
Cost Going Forward Worksheet
Home | Vehicle Remarketing | Fleet Planning | Contact Us
Fleet Planning > Cost Going Forward > Worksheet
My Options
Country
US
Group/Region
Change
Buy/Projection Car Class
Economy
Save/Update
Complete Car Class
2410
400
2412
2416
2418
2420
2422
2424
2426
2428
2430
1120

Figure 24(b)

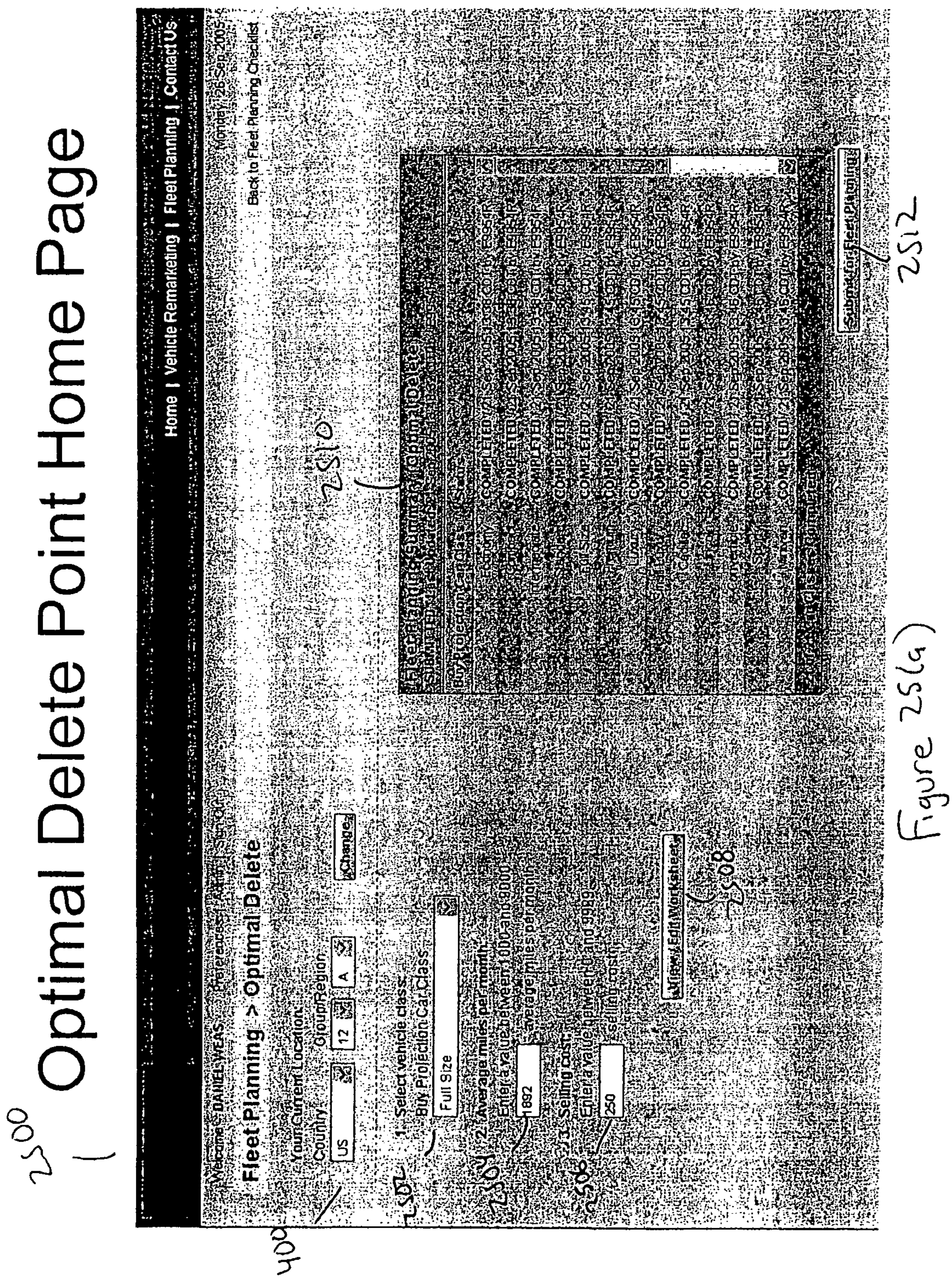
Optimal Delete Point Home Page
2500
400
Home | Vehicle Remarketing | Fleet Planning | Contact Us
Back to Fleet Planning Checklist
Fleet Planning > Optimal Delete
Your Current Location
Country
Group/Region
US
12
A
Change
2502
1. Select vehicle class:
Buy Projection Car Class
Full Size
2504
2. Average miles per month:
1892
2506
3. Selling cost:
250
2508
2510
Submit for Fleet Planning
2512

Figure 25(a)

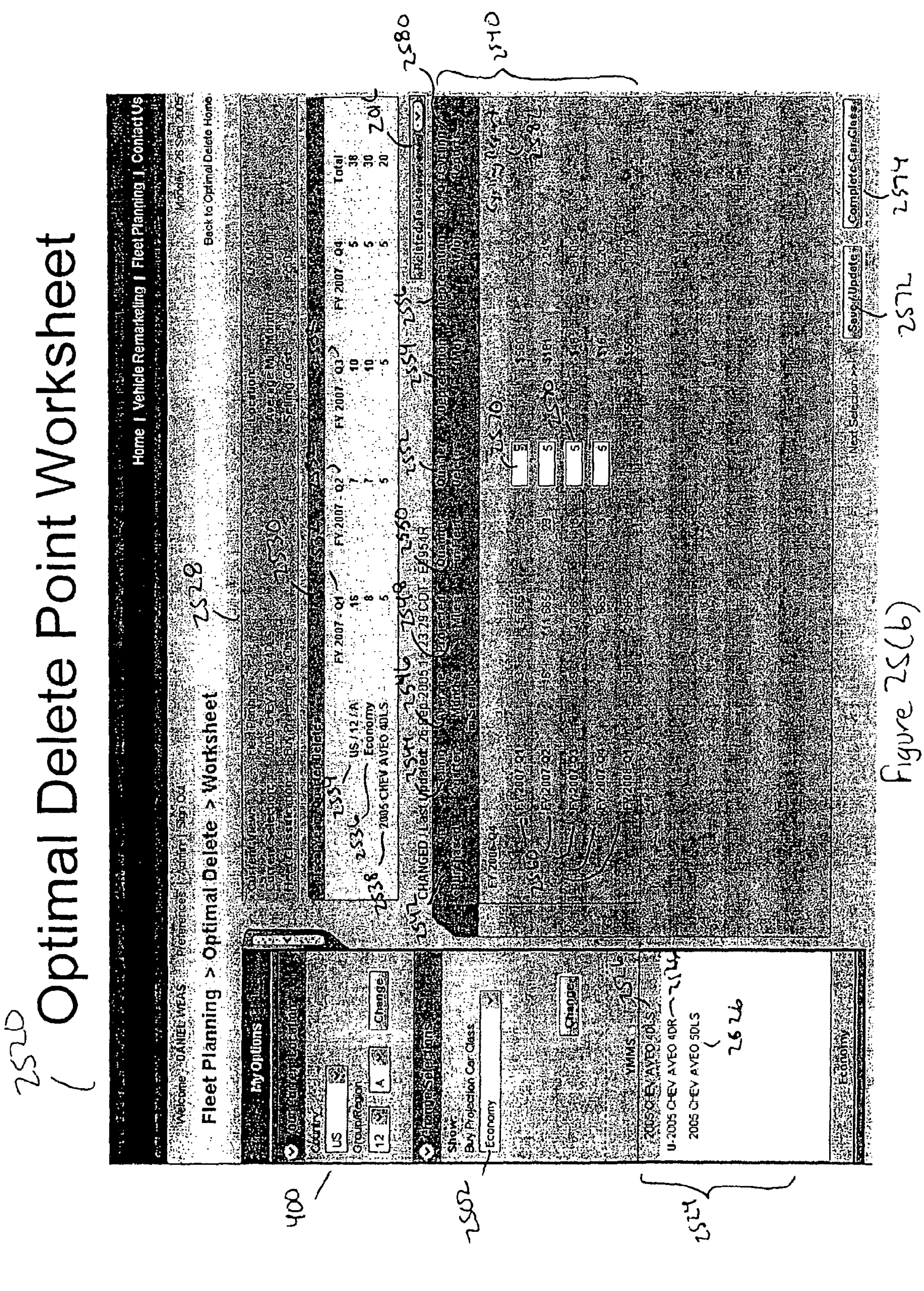
Optimal Delete Point Worksheet
Home | Vehicle Remarketing | Fleet Planning | Contact Us
Fleet Planning > Optimal Delete > Worksheet
Back to Optimal Delete Home
My Options
Country
US
Group/Region
12
A
Change
Show:
Buy Projection Car Class
Economy
Change
YMMS
2005 CHEV AVEO 4DLS
U-2005 CHEV AVEO 4DR
2005 CHEV AVEO 5DLS
Economy
FY 2007 - Q1
FY 2007 - Q2
FY 2007 - Q3
FY 2007 - Q4
Total
US / 12 / A
Economy
2005 CHEV AVEO 4DLS
CHANGED / Last Updated: 26-SEP-2005 13:29 CDT - E7954R
Next Selection >>
Save / Update
Complete Car Class
2520
400
2502
2524
2526
2528
2530
2532
2534
2536
2538
2540
2542
2544
2546
2548
2550
2552
2554
2556
2560
2570
2572
2574
2580
Figure 25(b)

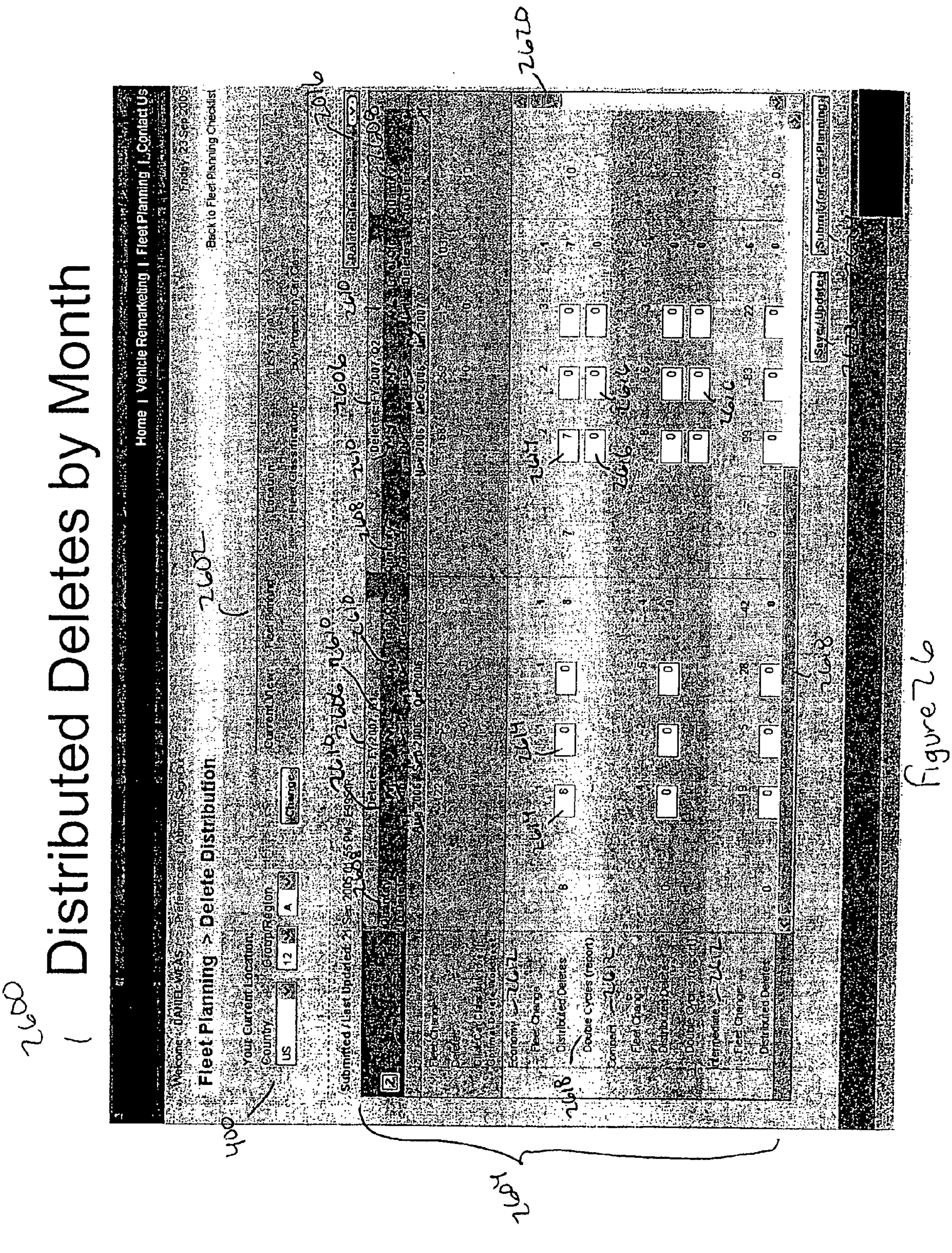
Distributed Deletes by Month
Home | Vehicle Remarketing | Fleet Planning | Contact Us
Fleet Planning > Delete Distribution
Back to Fleet Planning Checklist
Your Current Location:
Country:
US
Group/Region
Change
Submitted / Last Updated:
Economy
Fleet Change
Distributed Deletes
Double Cycles (report)
Compact
Intermediate
Save/Update
Submit for Fleet Planning
2600
2602
2604
2606
2608
2610
2612
2614
2616
2618
2620
400

Figure 26

2700

## Fourth Quarter Long Term Cycle Comparison 8-7 vs. 15 Month

| | |
|---|---|
| **Current View:** | Fleet Planning for Fiscal Year 2007 |
| **Location:** | US / 32 / A |
| **Buy Projection Car Class:** | STANDARD |
| **Selling Cost:** | $250 |
| **Average Miles per Month:** | 1,907 |

2702

2706 2708 2710

| Year/Make/Model/Series | Original Unit Cost | Cost to Run 8 - 7 | Cost to Run 15 |
|---|---|---|---|
| 2006 PONT G6 4D6C | $16,192 | - | - |
| 2006 PONT G6 4DR | - | - | - |
| | | - | - |

2704 2704

Figure 27(a)

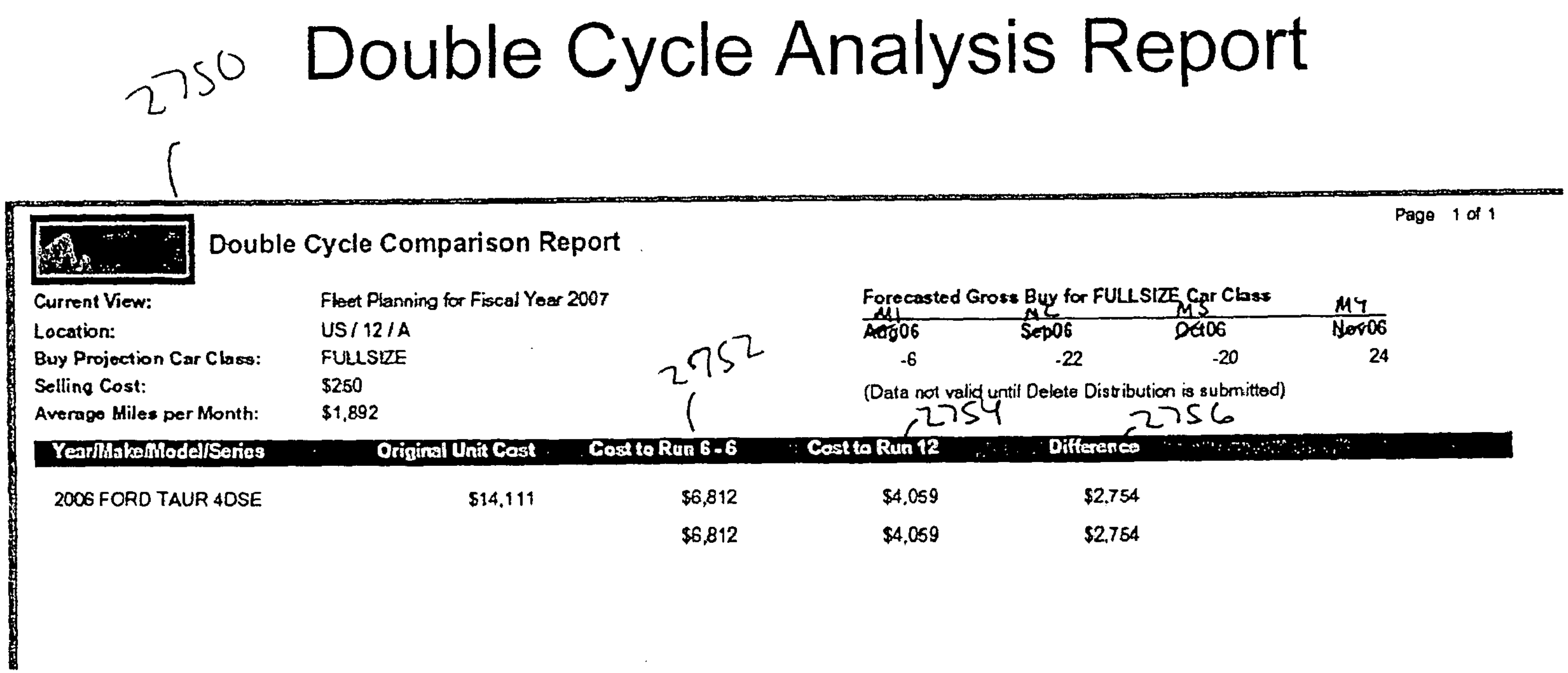
2750

# Double Cycle Analysis Report

Page 1 of 1

## Double Cycle Comparison Report

| | |
|---|---|
| **Current View:** | Fleet Planning for Fiscal Year 2007 |
| **Location:** | US / 12 / A |
| **Buy Projection Car Class:** | FULLSIZE |
| **Selling Cost:** | $250 |
| **Average Miles per Month:** | $1,892 |

**Forecasted Gross Buy for FULLSIZE Car Class**

| M1 Aug06 | M2 Sep06 | M3 Oct06 | M4 Nov06 |
|---|---|---|---|
| -6 | -22 | -20 | 24 |

(Data not valid until Delete Distribution is submitted)

2752 2754 2756

| Year/Make/Model/Series | Original Unit Cost | Cost to Run 6 - 6 | Cost to Run 12 | Difference |
|---|---|---|---|---|
| 2006 FORD TAUR 4DSE | $14,111 | $6,812 | $4,059 | $2,754 |
| | | $6,812 | $4,059 | $2,754 |

Figure 27(b)

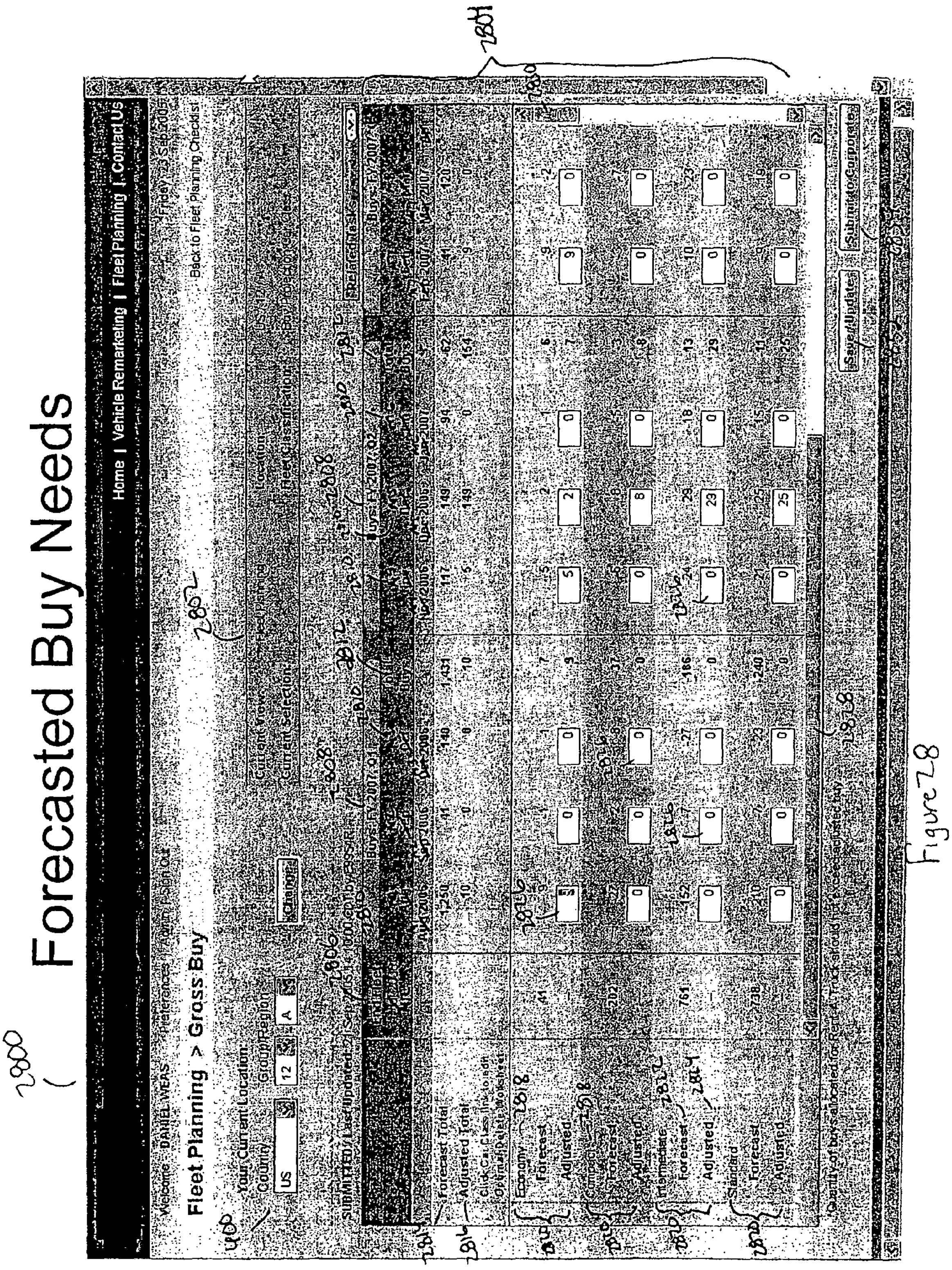
Forecasted Buy Needs
Fleet Planning > Gross Buy
Home | Vehicle Remarketing | Fleet Planning | Contact Us
Save/Update
Submit to Corporate

Figure 28

2900

# Reporting Page

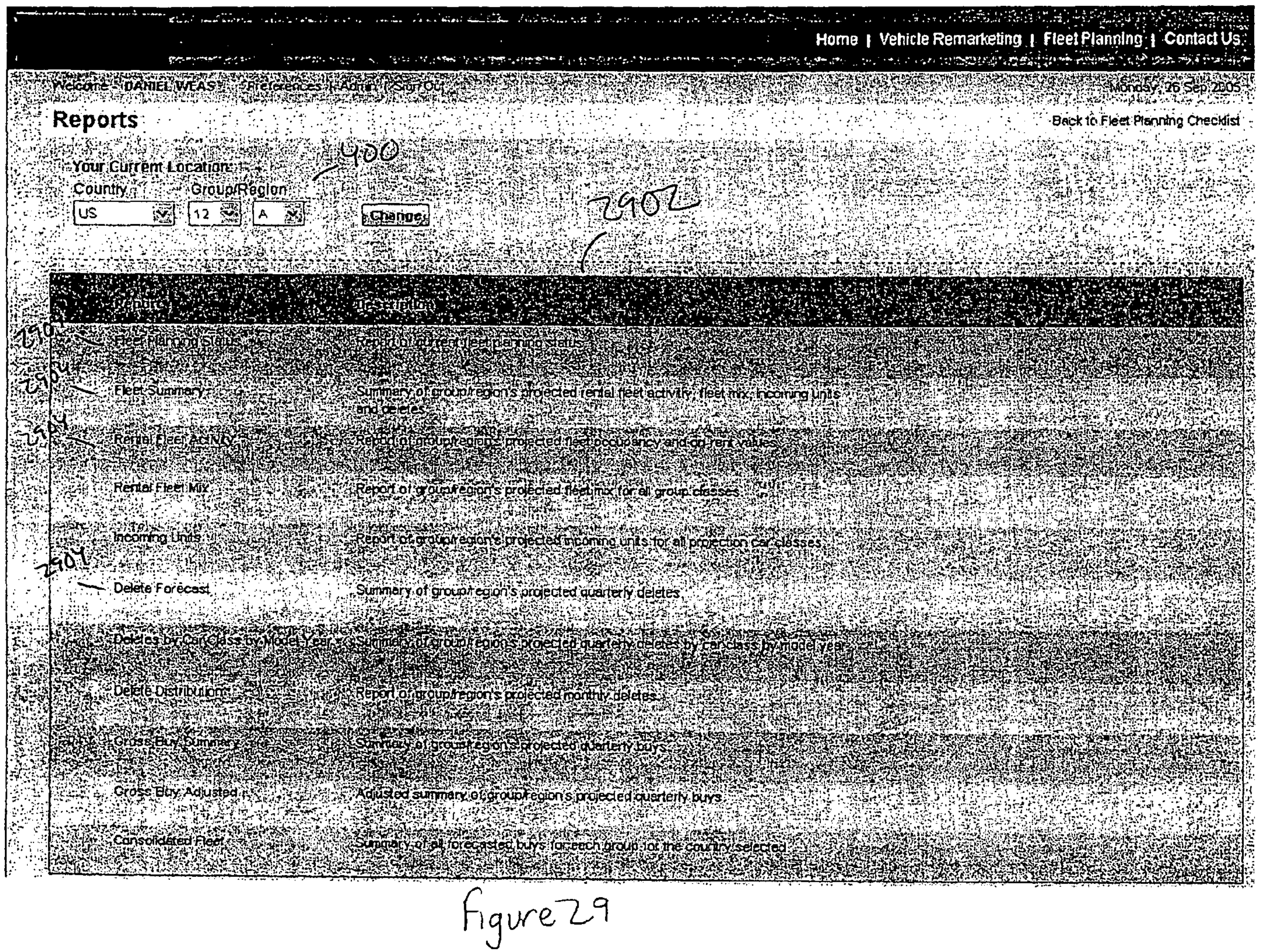


figure 29

## Car Class Assignments

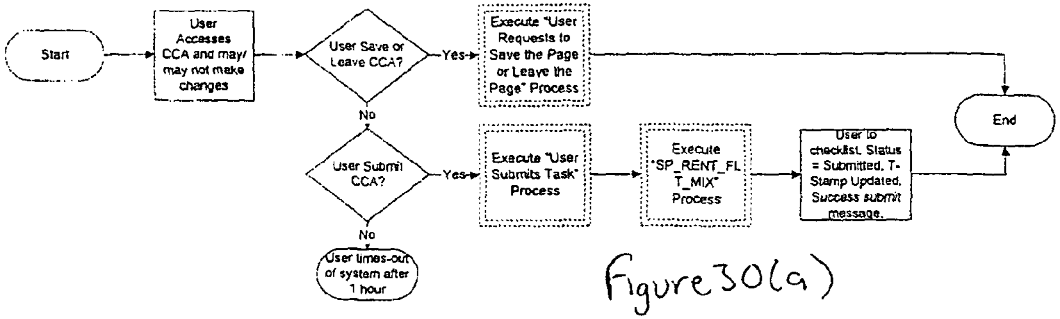


Figure 30(a)

## Residuals

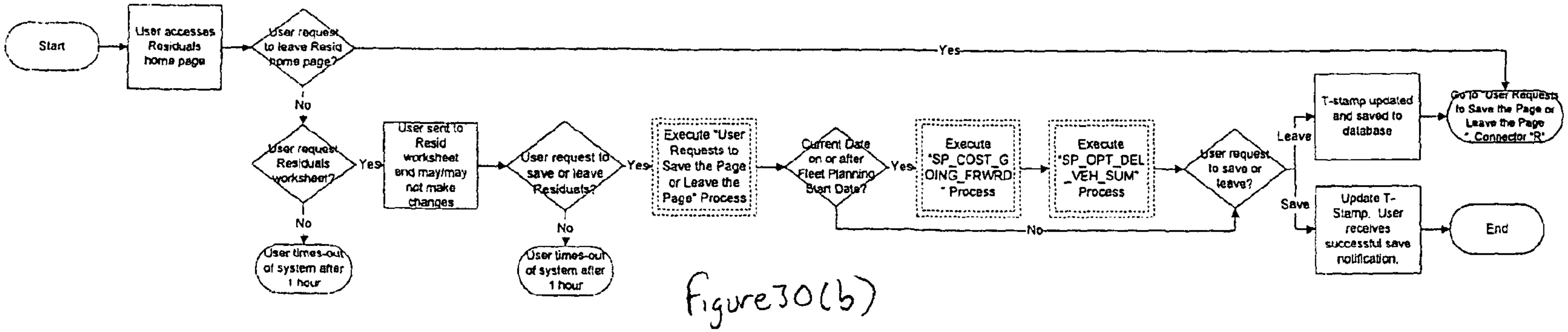


Figure 30(b)

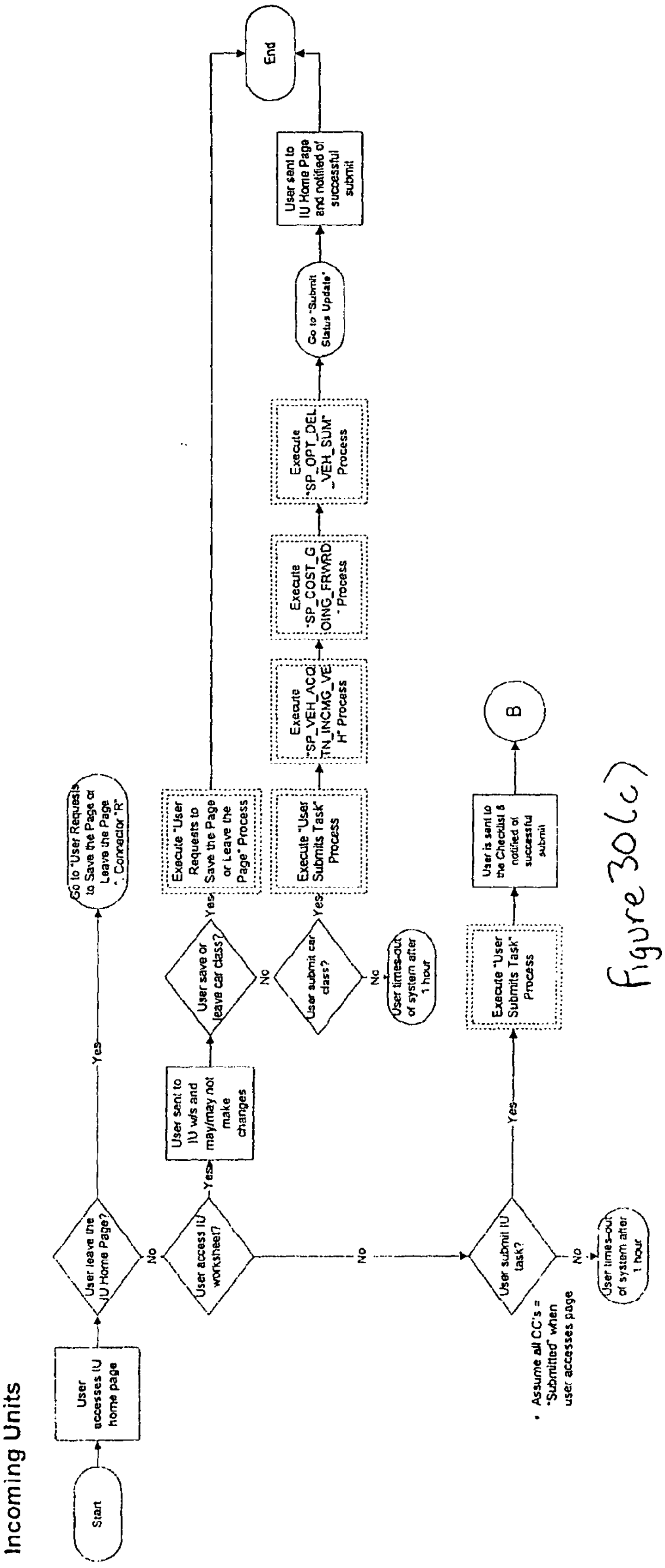
Incoming Units
Start
User accesses IU home page
User leave the IU Home Page?
Yes
Go to "User Requests to Save the Page or Leave the Page" Connector "R"
No
User access IU worksheet?
Yes
User sent to IU w/s and may/may not make changes
User save or leave car class?
Yes
Execute "User Requests to Save the Page or Leave the Page" Process
No
User submit car class?
Yes
Execute "User Submits Task" Process
Execute "SP_VEH_ACQTN_INCMG_VEH" Process
Execute "SP_COST_GOING_FRWRD" Process
Execute "SP_OPT_DEL_VEH_SUM" Process
Go to "Submit Status Update"
User sent to IU Home Page and notified of successful submit
End
No
User times-out of system after 1 hour
No
User submit IU task?
Yes
Execute "User Submits Task" Process
User is sent to the Checklist & notified of successful submit
B
No
User times-out of system after 1 hour
• Assume all CC's = "Submitted" when user accesses page

Figure 30(c)

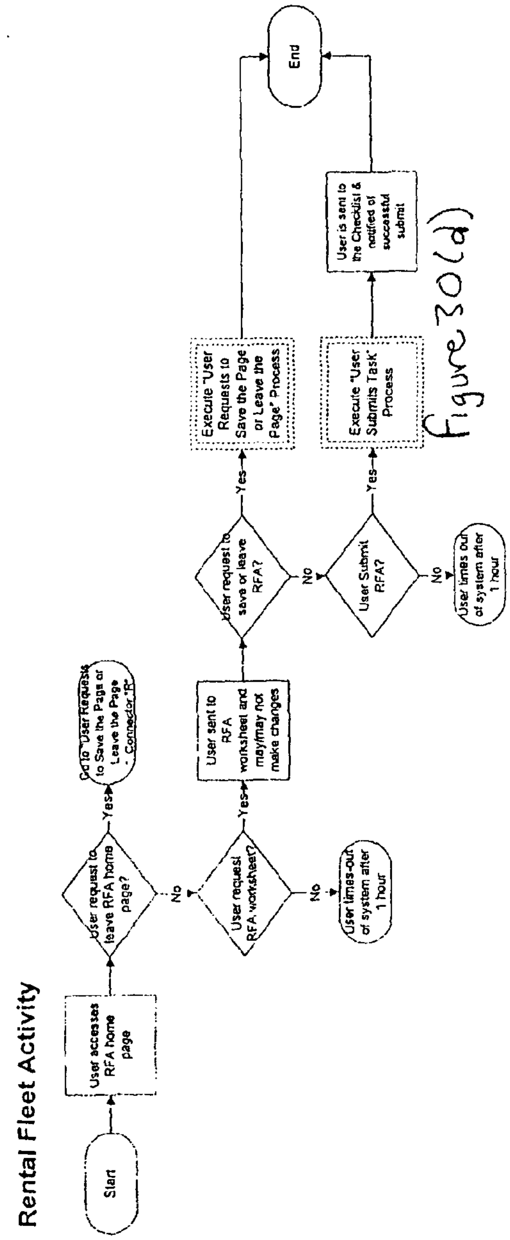


figure 30(d)

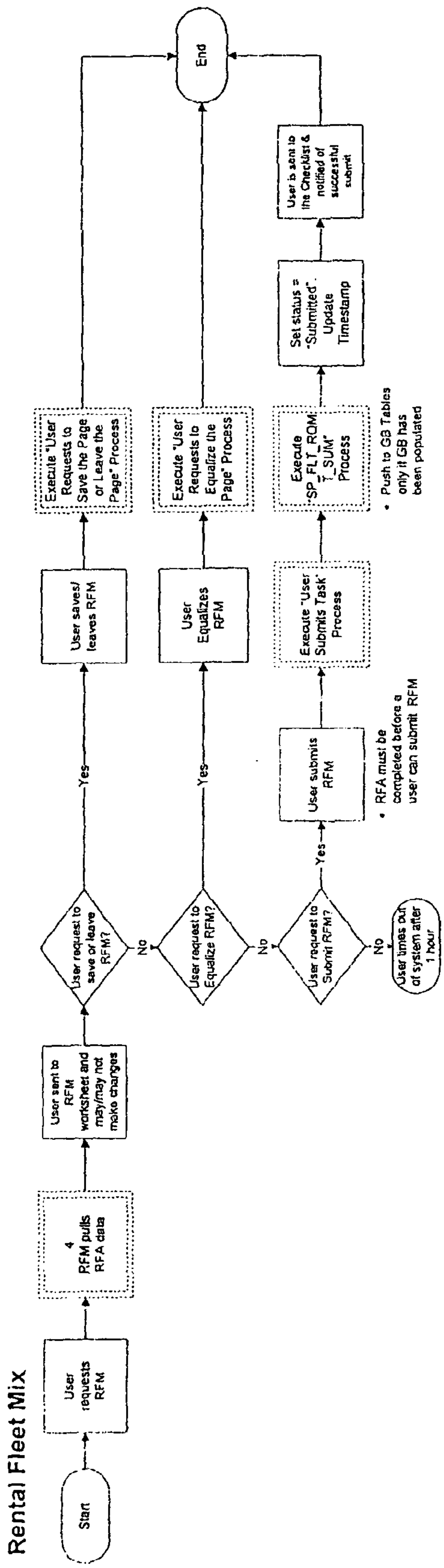


figure 30(e)

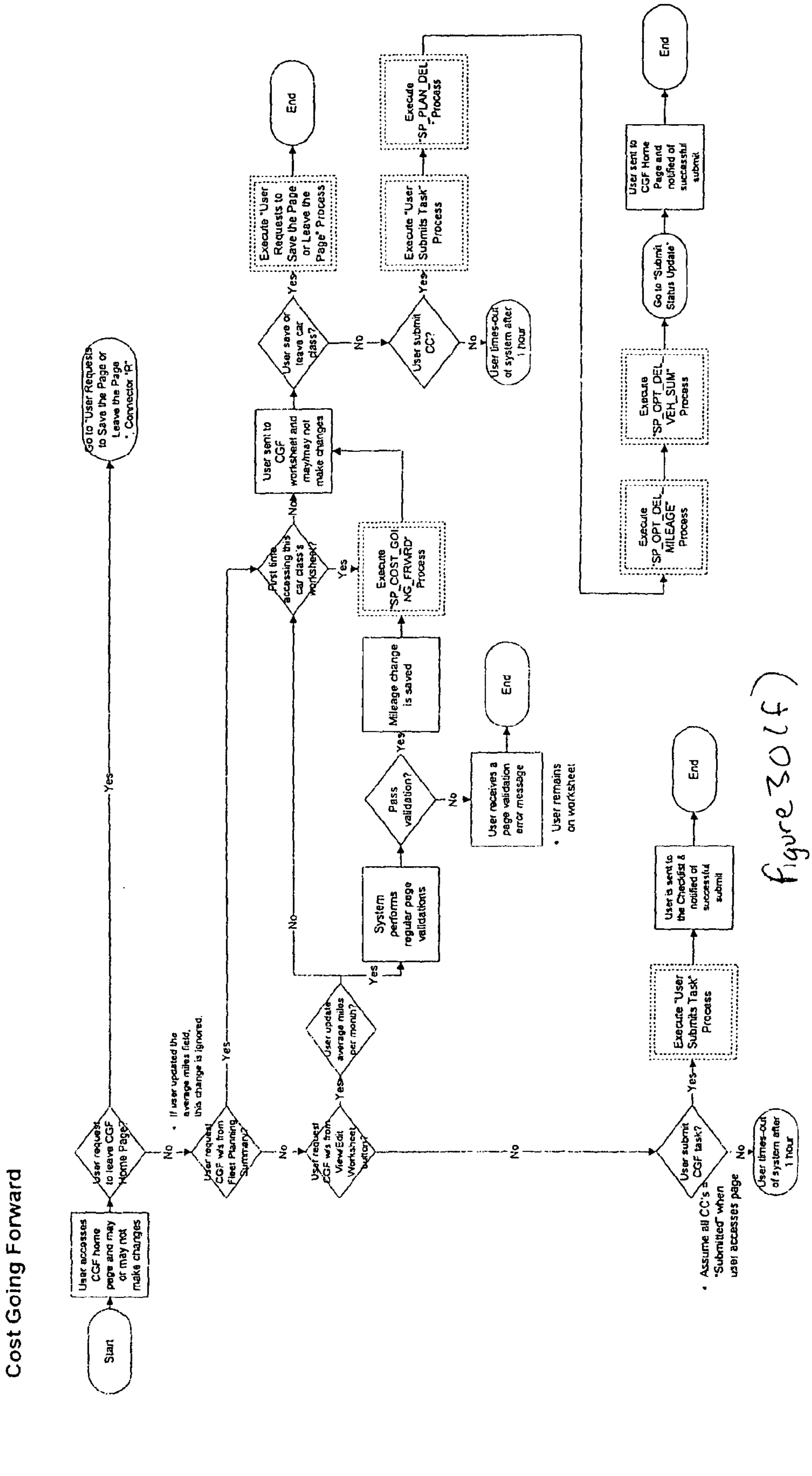
Cost Going Forward
Start
User accesses CGF home page and may or may not make changes
User request to leave CGF Home Page?
Yes
Go to "User Requests to Save the Page or Leave the Page", Connector "R"
No
User request CGF w/s from Fleet Planning Summary?
If user updated the average miles field, this change is ignored.
Yes
No
User request CGF w/s from View/Edit Worksheet button?
Yes
User update average miles per month?
Yes
No
System performs regular page validations
Pass validation?
No
User receives a page validation error message
User remains on worksheet
End
Yes
Mileage change is saved
Execute "SP_COST_GOING_FRWRD" Process
First time accessing this car class's worksheet?
Yes
No
User sent to CGF worksheet and may/may not make changes
User save or leave car class?
Yes
Execute "User Requests to Save the Page or Leave the Page" Process
End
No
User submit CC?
Yes
Execute "User Submits Task" Process
Execute "SP_PLAN_DEL" Process
No
User times-out of system after 1 hour
Execute "SP_OPT_DEL_MILEAGE" Process
Execute "SP_OPT_DEL_VEH_SUM" Process
Go to "Submit Status Update"
User sent to CGF Home Page and notified of successful submit
End
No
User submit CGF task?
Assume all CC's = "Submitted" when user accesses page
Yes
Execute "User Submits Task" Process
User is sent to the Checklist & notified of successful submit
End
No
User times-out of system after 1 hour
Figure 30(f)

## Optimal Delete

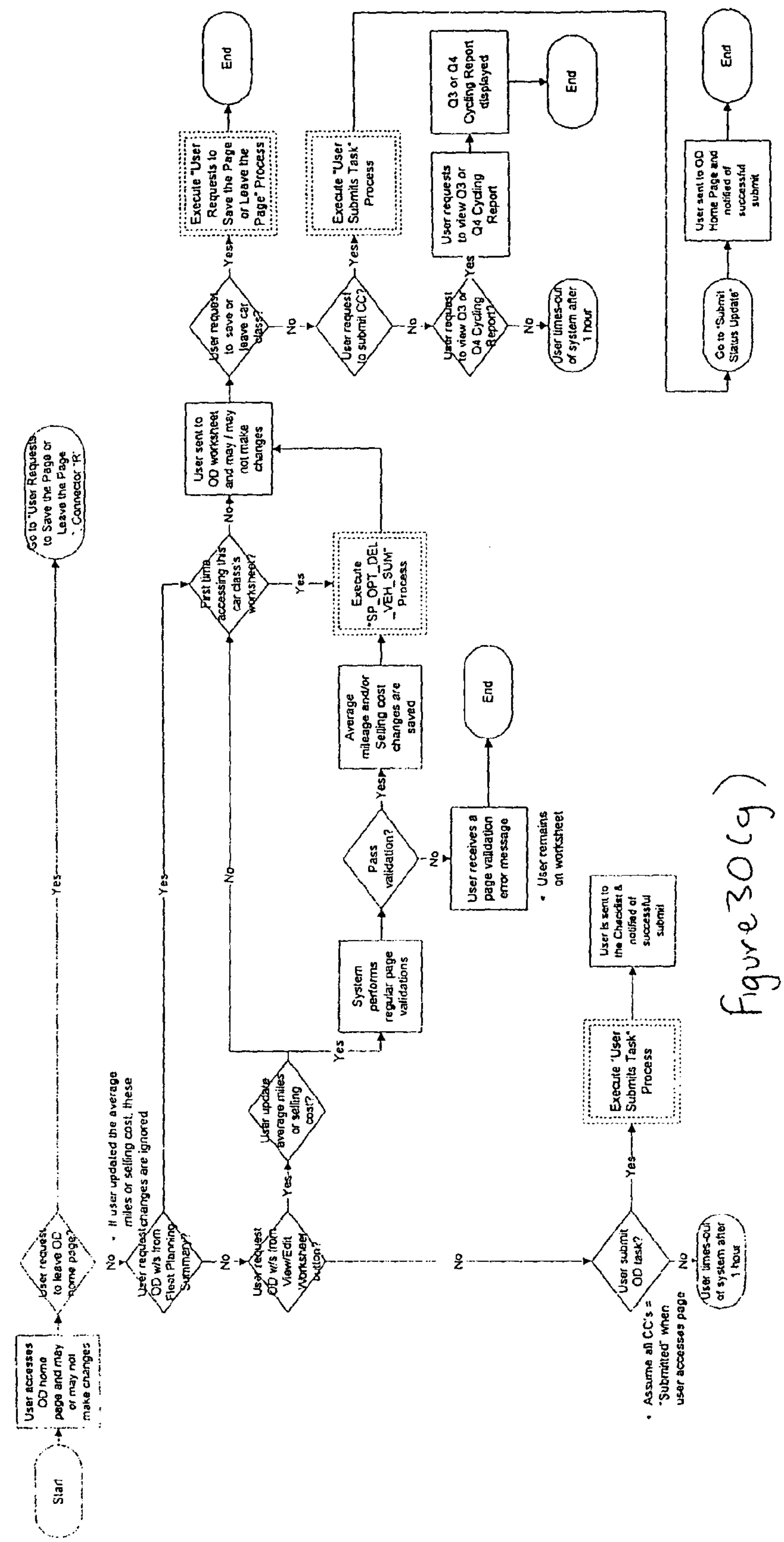


Figure 30(g)

## Delete Distribution

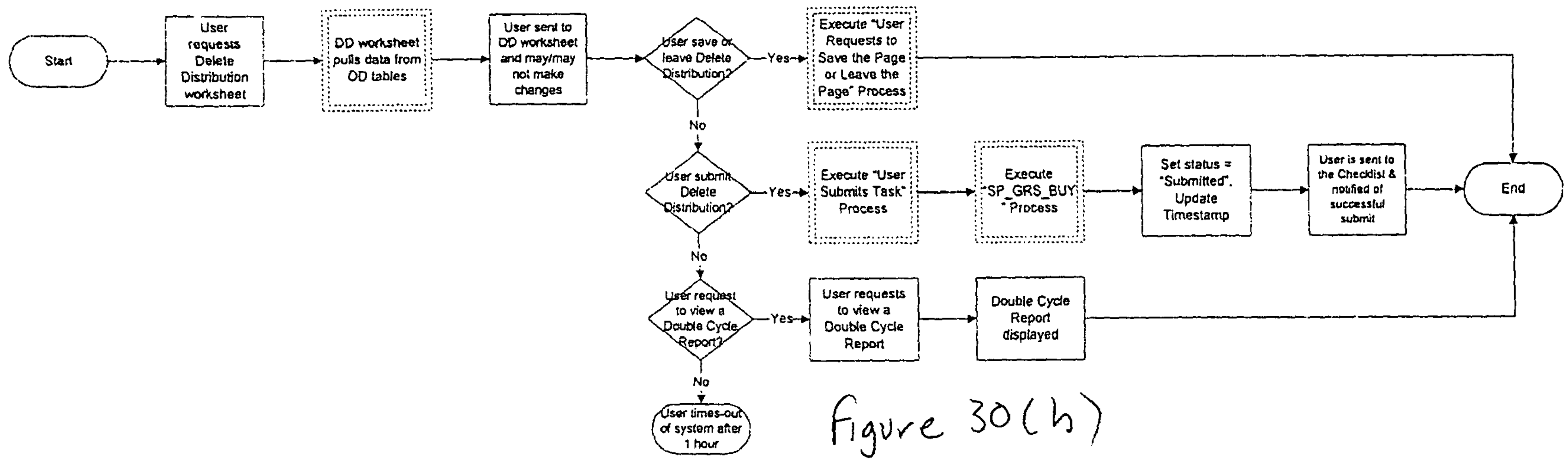


Figure 30(h)

## Gross Buy

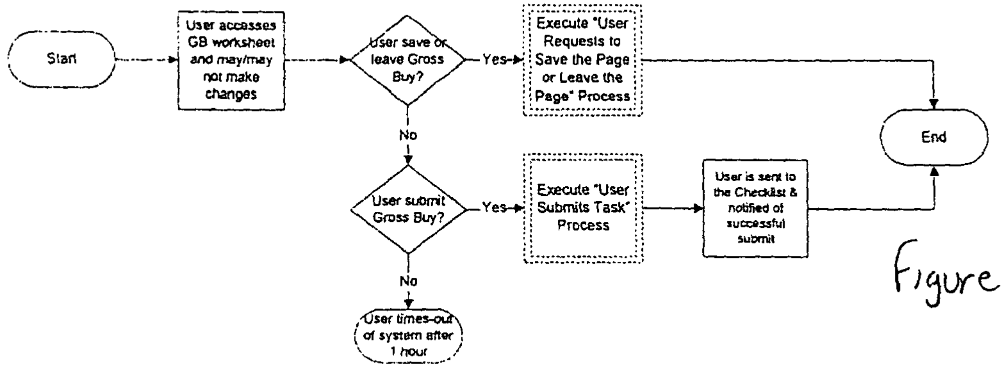


Figure 30(i)

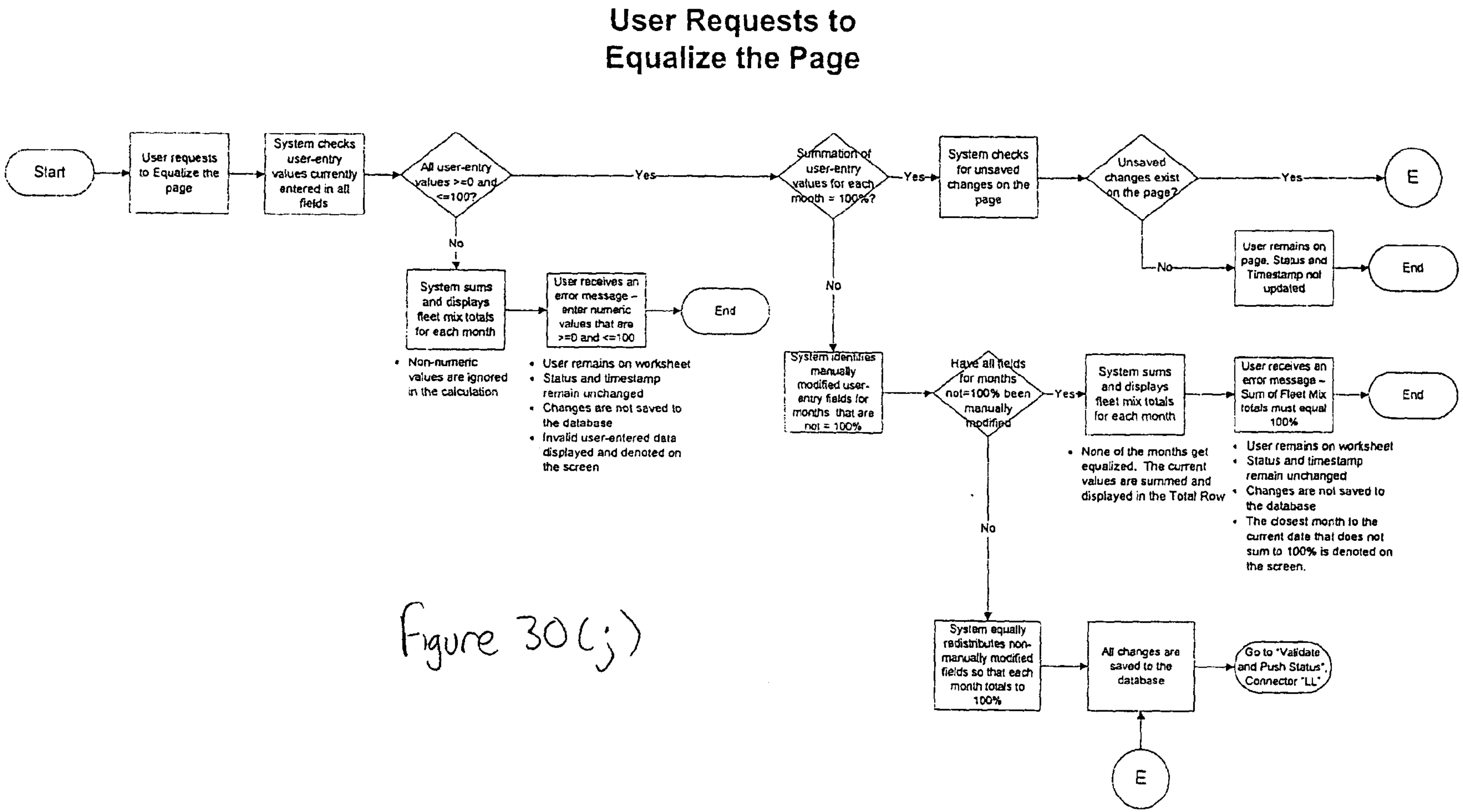
User Requests to
Equalize the Page
Start
User requests to Equalize the page
System checks user-entry values currently entered in all fields
All user-entry values >=0 and <=100?
Yes
No
System sums and displays fleet mix totals for each month
• Non-numeric values are ignored in the calculation
User receives an error message – enter numeric values that are >=0 and <=100
• User remains on worksheet
• Status and timestamp remain unchanged
• Changes are not saved to the database
• Invalid user-entered data displayed and denoted on the screen
End
Summation of user-entry values for each month = 100%?
Yes
No
System checks for unsaved changes on the page
Unsaved changes exist on the page?
Yes
E
No
User remains on page. Status and Timestamp not updated
End
System identifies manually modified user-entry fields for months that are not = 100%
Have all fields for months not=100% been manually modified
Yes
System sums and displays fleet mix totals for each month
• None of the months get equalized. The current values are summed and displayed in the Total Row
User receives an error message – Sum of Fleet Mix totals must equal 100%
• User remains on worksheet
• Status and timestamp remain unchanged
• Changes are not saved to the database
• The closest month to the current date that does not sum to 100% is denoted on the screen.
End
No
System equally redistributes non-manually modified fields so that each month totals to 100%
All changes are saved to the database
E
Go to "Validate and Push Status", Connector "LL"

Figure 30(j)

## Save, Leave or Equalize Status Update

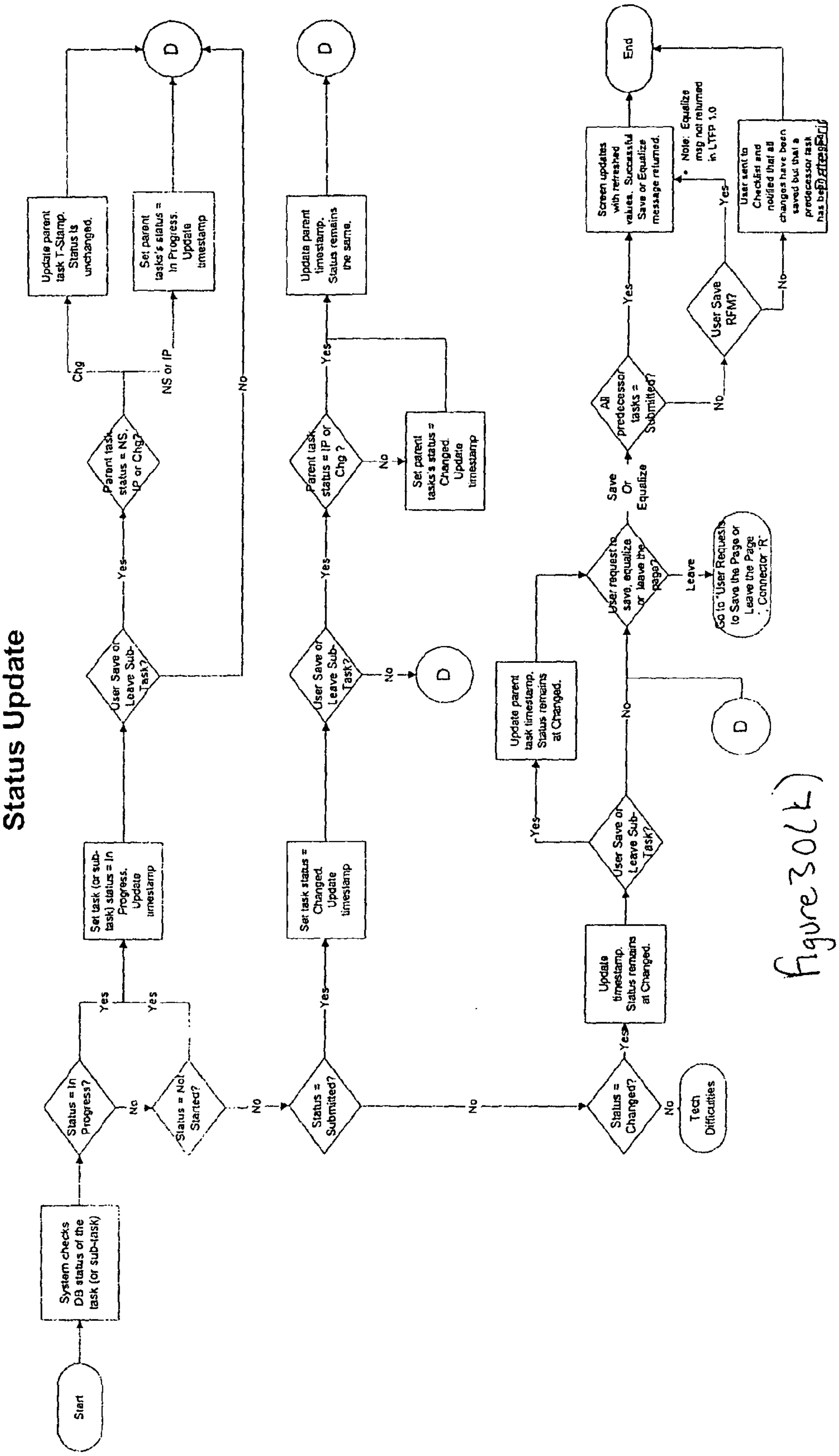


Figure 30(k)

# User Requests to Save the Page or Leave the Page

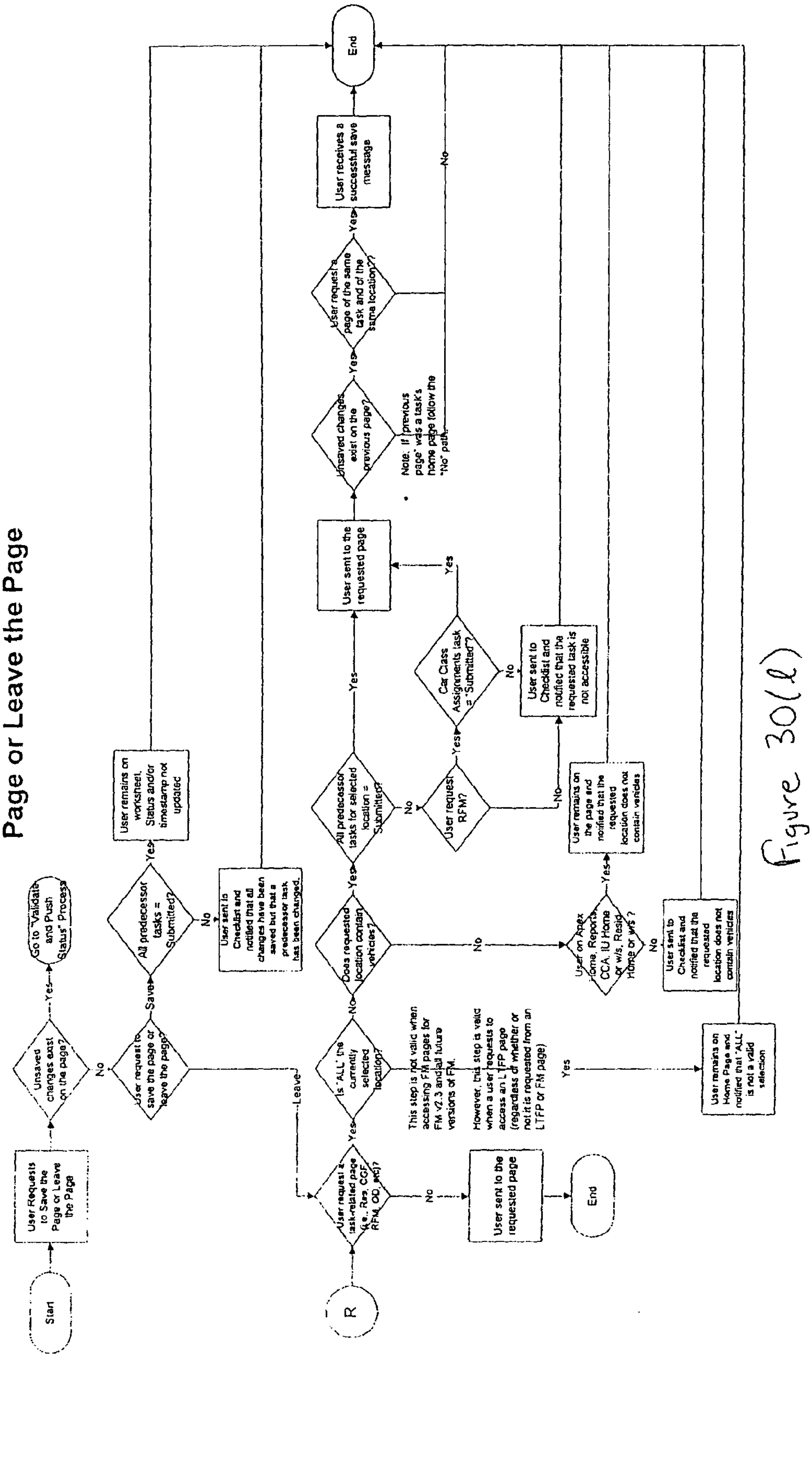


Figure 30(l)

## User Submits Task

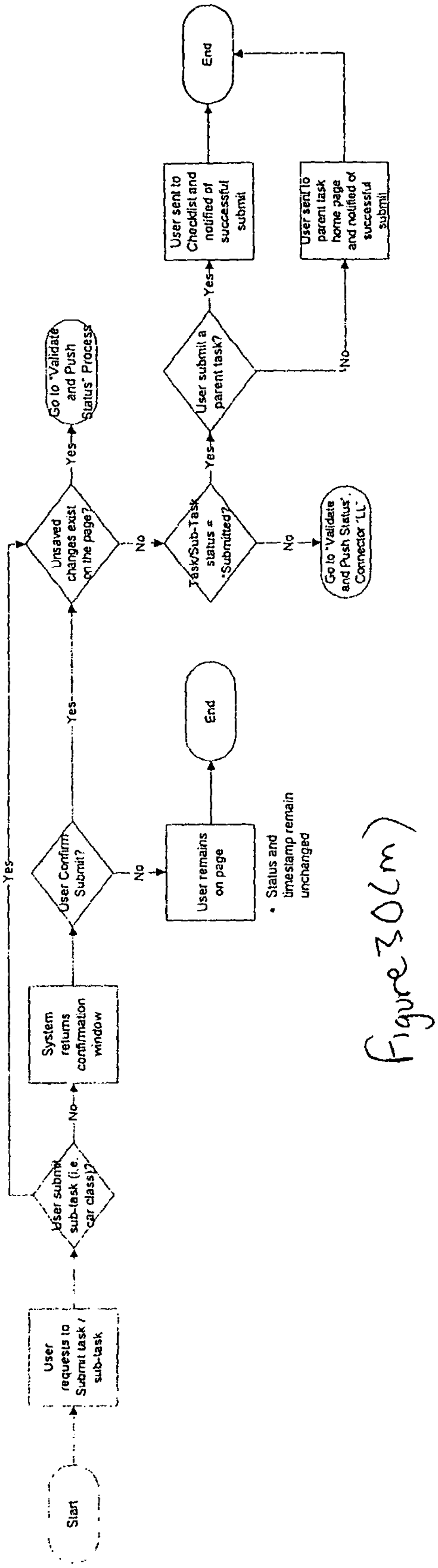


Figure 30(m)

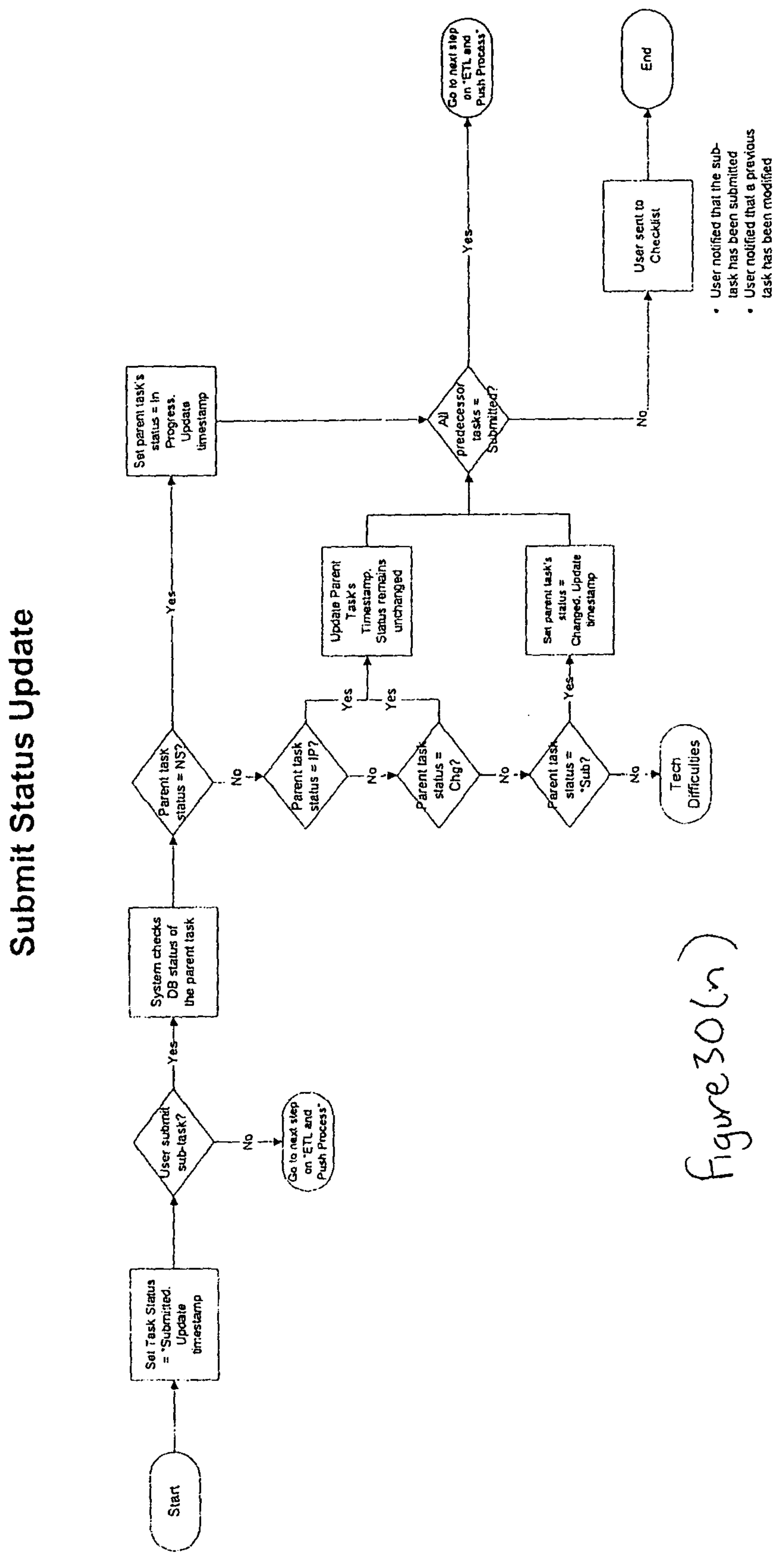

Submit Status Update
Start
Set Task Status = "Submitted. Update timestamp
User submit sub-task?
No
Go to next step on "ETL and Push Process"
Yes
System checks DB status of the parent task
Parent task status = NS?
Yes
Set parent task's status = In Progress. Update timestamp
No
Parent task status = IP?
Yes
Update Parent Task's Timestamp. Status remains unchanged
No
Parent task status = Chg?
Yes
No
Parent task status = "Sub?
Yes
Set parent task's status = Changed. Update timestamp
No
Tech Difficulties
All predecessor tasks = Submitted?
Yes
Go to next step on "ETL and Push Process"
No
User sent to Checklist
End
• User notified that the sub-task has been submitted
• User notified that a previous task has been modified


Figure 30(n)

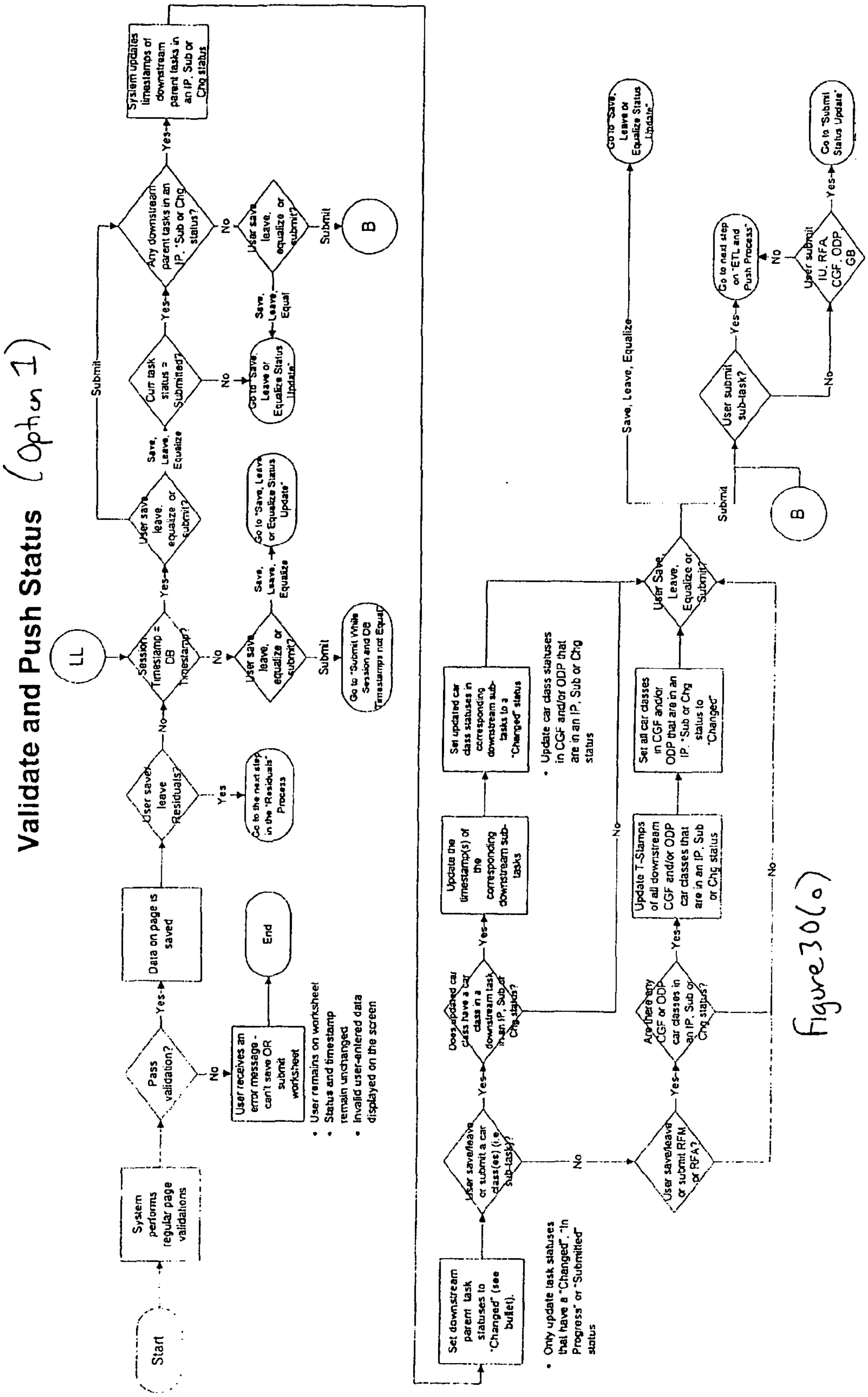
Validate and Push Status (Option 1)
Start
System performs regular page validations
Pass validation?
Yes
Data on page is saved
No
User receives an error message - can't save OR submit worksheet
End
User remains on worksheet
Status and timestamp remain unchanged
Invalid user-entered data displayed on the screen
User save/ leave Residuals?
Go to the next step in the "Residuals" Process
LL
Session Timestamp = DB Timestamp?
User save, leave, equalize or submit?
Submit
Go to "Submit While Session and DB Timestamps not Equal"
Save, Leave, Equalize
Go to "Save, Leave or Equalize Status Update"
Curr task status = Submitted?
Any downstream parent tasks in an IP, "Sub or Chg status?
System updates timestamps of downstream parent tasks in an IP, Sub or Chg status
B
Set downstream parent task statuses to "Changed" (see bullet).
Only update task statuses that have a "Changed", "In Progress" or "Submitted" status
User save/leave or submit a car class(es) (i.e. sub-task)?
Does updated car class have a car class in a downstream task in an IP, Sub or Chg status?
Update the timestamp(s) of the corresponding downstream sub-tasks
Set updated car class statuses in corresponding downstream sub-tasks to a "Changed" status
Update car class statuses in CGF and/or ODP that are in an IP, Sub or Chg status
User save/leave or submit RFM or RFA?
Are there any CGF or ODP car classes in an IP, Sub or Chg status?
Update T-Stamps of all downstream CGF and/or ODP car classes that are in an IP, Sub or Chg status
Set all car classes in CGF and/or ODP that are in an IP, "Sub or Chg status to "Changed"
User Save, Leave, Equalize or Submit?
Save, Leave, Equalize
User submit sub-task?
Go to next step on "ETL and Push Process"
User submit IU, RFA, CGF, ODP, GB
Go to "Submit Status Update"
Figure 30(a)

# Validate and Push Status (Option 2)

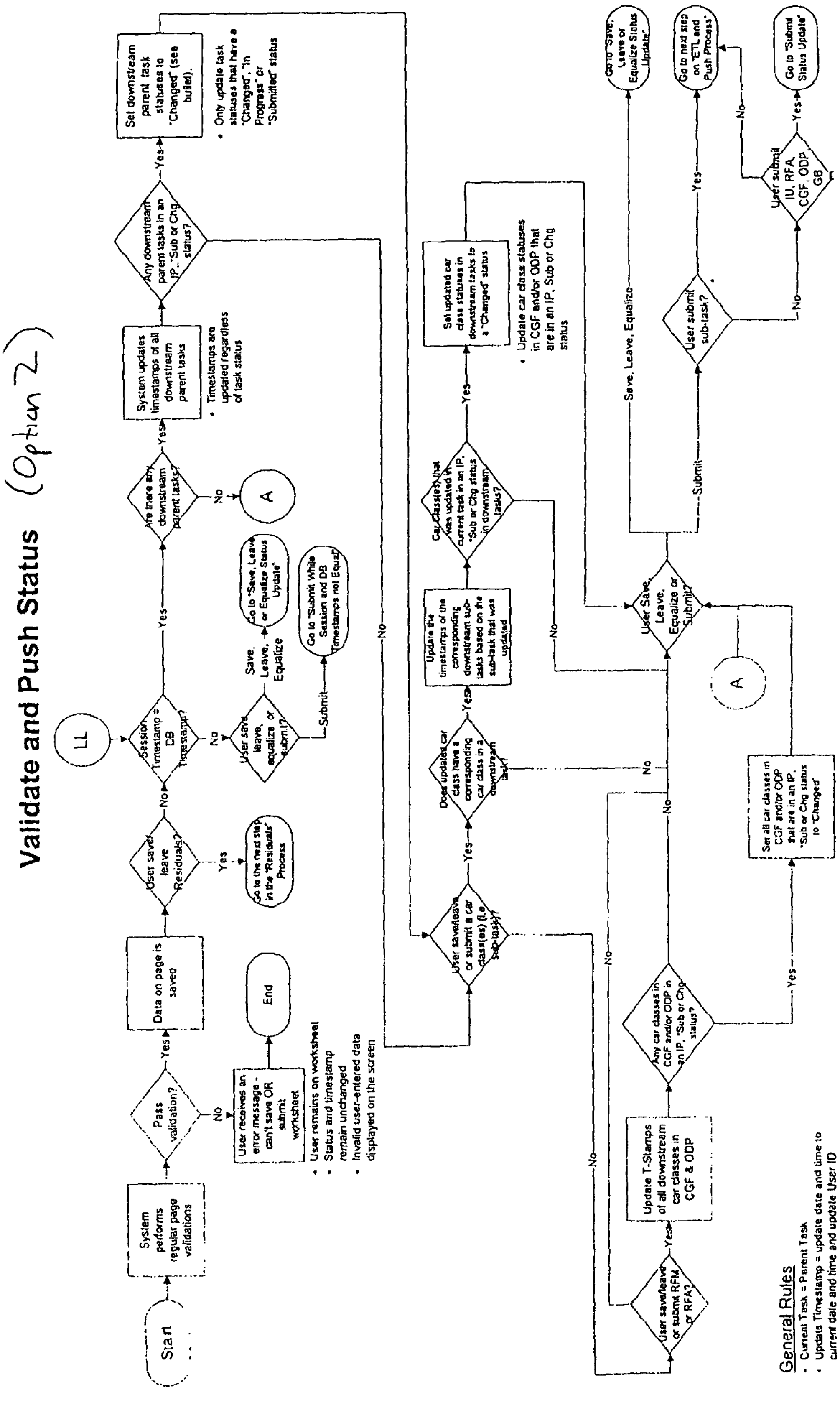


Figure 30(B)

## Submit While Session and DB Timestamps not Equal

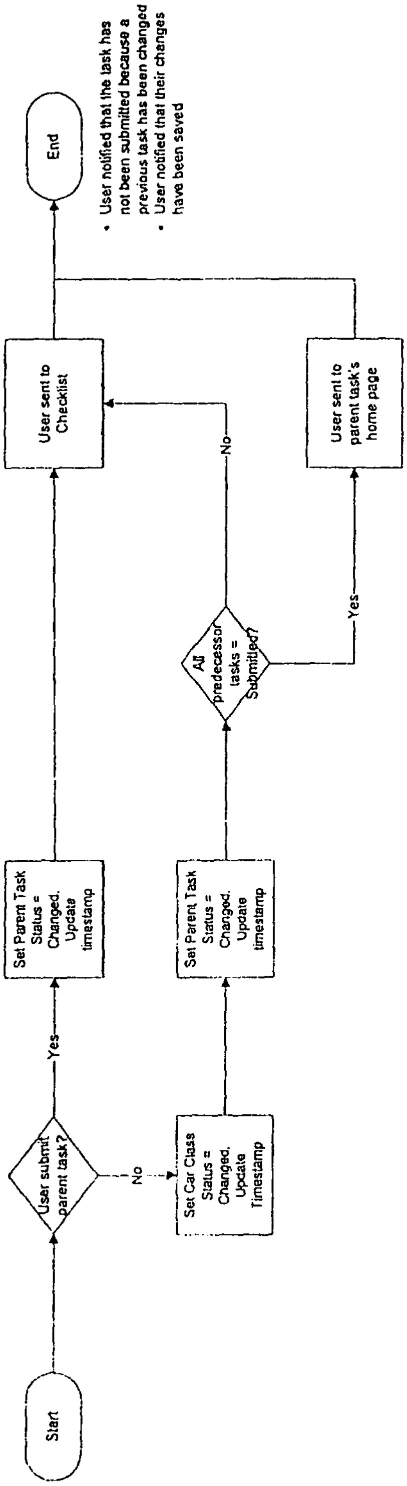


Figure 30(9)

LTFP Task Lifecycle Diagram

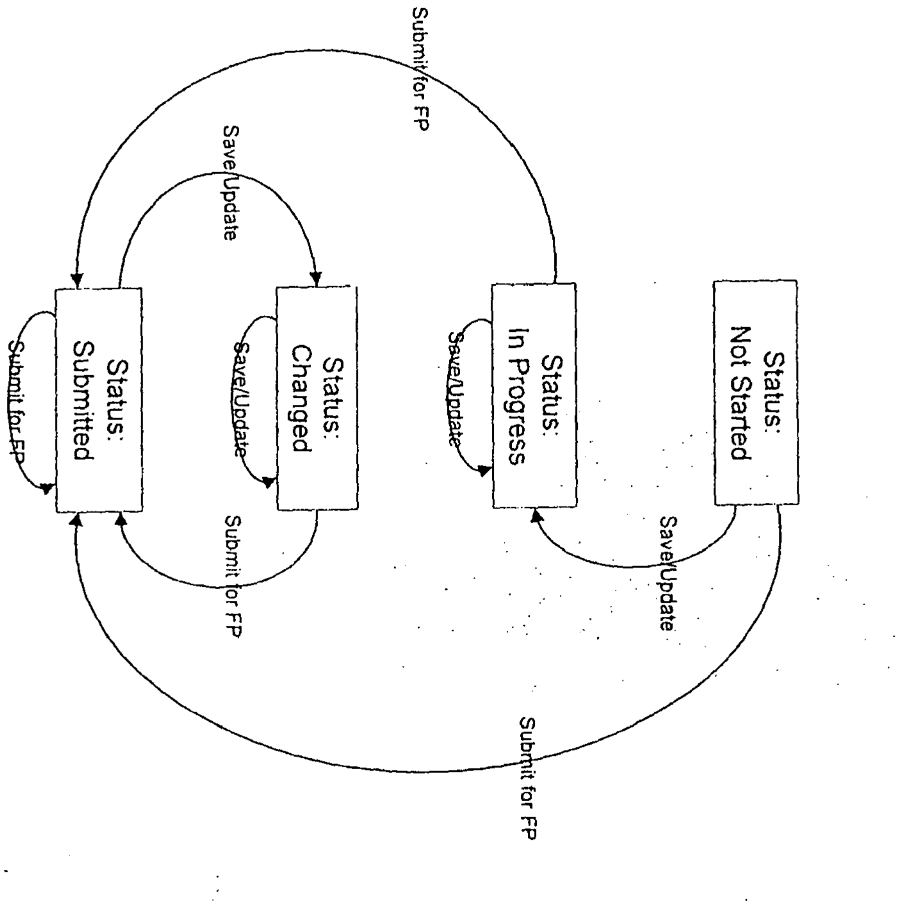


Figure 30 (r)